# EUROPEAN PATENT APPLICATION

(11) **EP 3 294 042 A1**
(43) Date of publication of application: **14.03.2018**
(21) Application number: 17195516.4
(22) Date of filing: 21.11.2012
(51) Int. Cl.: H05B 37/02, H04B 10/43, H05B 33/08, H04B 10/116, F21V 9/08, H04B 10/07, H04N 5/225, F21Y 115/10

(54) **WAVELENGTH SENSING LIGHTING SYSTEM AND ASSOCIATED METHODS**

(30) Priority: 21.11.2011 US 201113300930
(62) Divisional of application: 12805833.6
(71) Applicant: Environmental Light Technologies Corp., Satellite Beach, FL 32937 (US); Maxik, Fredric, Indialantic, Florida 32937 (US); Bartine, David, Cocoa, Florida 32922 (US); Medelius, Pedro, Merritt Island, Florida 32952 (US)
(72) Inventor: MAXIK, Fredric S, Indialantic, FL 32937 (US); BARTINE, David E, Cocoa, FL 32922 (US); MEDELIUS, Pedro, Merritt Island, FL 32952 (US); BRETSCHNEIDER, Eric, Scottsville, KY 42164 (US)
(74) Representative: Loven, Keith James

(57) **Abstract**

A wavelength sensing lighting system (10) may include a light source (40), a sensor and a controller (61). One or more light sources (40) and sensors may be included in an array (39). The light source (40) may emit an illuminating light (44) and the sensor may sense an environmental light (48). The illuminating light (44) may include data light (45). The lighting system (10) may include a plurality of nodes connected in a network (69). The nodes may communicate by emitting and receiving the data light (45), which may be analyzed by the controller (61). The light source (40) and the sensor may be provided by a light emitting semiconductor device (40) that is capable of emitting illuminating light (44) and receiving environmental light (48). A conversion material (30) may convert the wavelength of a source light (42) into a converted light (46). The conversion material (30) may increase the wavelength range of light emittable and detectable by the lighting system (10).

## Description

### Field of the Invention

The present invention relates to the field of lighting systems and, more specifically, to lighting systems that can emit and sense light within a wavelength range, and associated methods.

### Background of the Invention

Lighting systems have been used to illuminate spaces since the discovery of fire. Over the years, technology has brought us the incandescent light, which produces light by heating a metal filament, causing it to radiate heat. Although the incandescent light is capable of illuminating an area, it does so with little efficiency.

The fluorescent lamp was introduced to provide comparable light while using less energy. The fluorescent lamp excites a gas, such as mercury vapor, within a confined volume. The atoms of the excited gas typically produce ultraviolet light as it moves between energy levels. The ultraviolet light is then absorbed by a conversion material, such as a phosphor. The phosphor may shift the wavelength range of the absorbed light, emitting a light with longer wavelengths. This shift may be known to skilled artisans as a Stokes shift. This phosphor-emitted or converted light may be within the visible spectrum, which may be used to illuminate a space.

Seeking additional efficiency, continuing advancements in technology have brought the light emitting semiconductor device, and more specifically, the light emitting diode. Light emitting diodes may emit light when driven by an electrical current. Like fluorescent lights, conversion materials may be applied to a light emitting semiconductor device to alter the wavelength range of the light used to illuminate a space.

Lighting systems that include a conversion material may conveniently allow the conversion of a source light emitted from a light source into light of a different wavelength range. Often, such a conversion may be performed by using a luminescent, fluorescent, or phosphorescent material. The wavelength conversion materials may sometimes be included in the bulk of another material, applied to a lens or optic, or otherwise located in line with the light emitted from light source. In some instances the conversion material may be applied to the light source itself. A number of disclosed inventions exist that describe lighting devices that utilize a conversion material applied to an LED to convert light with a source wavelength range into light with a converted wavelength range.

Additional strategies to reduce power consumption involve controlling a lighting system to illuminate a space only when the illumination is required. Traditionally, toggle switches have been included in lighting circuits to allow a user to directly control the operational state of the light. Additionally, timers maybe be included in the light circuit to turn a light on and off according to a predetermined or dynamic timing schedule. However, switches and timers offer little flexibility unless directly engaged by a user.

Sensors may additionally be included in lighting systems to control operation upon the sensed compliance with a desired event. As an example, sensors may determine the level of light in a space, which may, in turn, cause a lighting system to be turned on upon sensing that a value falls below a threshold value. As an additional example, sensors may detect the presence of movement in a space to control illumination. However, including dedicated sensors may increase the number of parts and complexity required to build the lighting system, thereby increasing its manufacturing cost.

Additionally, each lighting device may operate independent of other lighting devices, requiring sensors included in each lighting device, further increasing production costs. Some proposed solutions have included wireless radio transmitters in the lighting systems, to allow communication between the devices included therein. However, the inclusion of wireless radios further increases the complexity and number of components included in the lighting system.

One proposed solution is described in international patent application publications WO 2011/016860, WO 2011/008251, WO 2010/098811, and WO 2010/027459, each by Knapp, and that each involve using the light emitting semiconductor device to perform the operations of a photodiode during portions of the duty cycle when the light emitting semiconductor device is not emitting light. The aforementioned Knapp applications additionally recite using the light emitting semiconductor devices to transmit and receive bi-directional communication between devices included in the lighting system. However, the Knapp applications employ data transmission methods that may result in redundant data transmission, decreasing the effective throughput of the system. Additionally, the Knapp applications lack advanced wavelength sensing functionality, limiting the effectiveness of the system disclosed therein.

There exists a need for a lighting system that can analyze the sensed environmental light to alter the characteristics of the nodes included in the lighting system. There exists a need for a lighting system that includes a wavelength conversion material to expand the wavelength range of light that may be emitted or detected by a light emitting semiconductor device. Additionally, there exists a need for a lighting system wherein the nodes intercommunicate to increase the effectiveness of the system.

US2008136356A1 discloses a lighting control system that can control the characteristics of light emanating from one or more light sources, based on signals received from detectors, such as sensing any state or condition of the ambient environment. US2010077840A1 discloses a method of light-assisted sensing of one or more gaseous species at room or ambient temperature.

### Summary of the Invention

With the foregoing in mind, embodiments of the present invention are related to a wavelength sensing lighting system that can emit illuminating light and sense environmental light during portions of the duty cycle. Additionally, according to an embodiment of the present invention, the lighting system may advantageously analyze the sensed environmental light to alter the characteristics of nodes included in the lighting system. A wavelength conversion material may be included to expand the wavelength range of light that may be emitted or detected by a light emitting semiconductor device. The lighting system may include nodes that may advantageously intercommunicate with one another to increase the effectiveness of the system. The sensed environmental light may be analyzed by the lighting system to determine one or more condition of the environment.

With the foregoing in mind, the present invention provides a lighting system comprising a sensor and a controller, and according to at least one embodiment, a light source. The light source may be included in an array to emit illuminating light. The sensor may additionally be included in the array to sense environmental light from an environment. The controller may be operatively connected to the sensor to analyze the environmental light that is sensed. The controller may also be operatively connected to the light source to control emitting the illuminating light.

The controller may analyze the environmental light to detect or generate data relating to a condition of the environment. The data may be transmittable in data light, which may be defined by at least one data wavelength. One or more data wavelength may be defined relative to the illuminating light.

The data may be transmittable by the light source included in the array. The sensor may selectively sense a dominant wavelength in the environmental light that is defined by the controller. Moreover, the sensor may selectively sense a plurality of dominant wavelengths in the environmental light. At least a part of the plurality of dominant wavelengths may be concatenated to define the data relating to the condition in the environment.

The controller may receive the data using the sensor, which it may analyze. The controller may also control transmitting the data light from the light source. The light source and/or the sensor may be selectively operable, wherein the illuminating light may be selectively emitted from the light source in a plurality of directions and the environmental light may be received by the sensor from the plurality of directions.

According to an embodiment of the present invention, the data relating to the condition in the environment may include an image. The image may be included in a series of images, which may be concatenated to create a video. Additionally, the data includes a plurality of images that may be compared to determine a proximate variance of an object among the plurality of images. The proximate variance may be analyzed by the controller to determine movement of the object. Additionally, the movement may be analyzed by the controller to determine velocity of the movement.

According to an embodiment of the present invention, the array may include a plurality of sensors. Each sensor included in the plurality of sensors may be sensitive to at least one wavelength respective to the each sensor. Each sensor may be selectively operable.

According to an embodiment of the present invention, the light source and the sensor may be included as a light emitting semiconductor device. The light emitting semiconductor device may be selectively operable between a sensing operation and an emitting operation. The sensing operation may be defined by the light emitting semiconductor device sensing the environmental light. The emitting operation may be defined by the light emitting semiconductor device emitting the illuminating light. The array may include a plurality of light emitting semiconductor devices.

According to an embodiment of the present invention, the controller may designate at least a part of the illuminating light as a marker light. The controller may control the light source to emit the illuminating light including the marker light to the environment. The illuminating light may be reflected from a point of reflection in the environment as the environmental light. The environmental light may continue to include the marker light. The sensor may sense the environmental light including the marker light, from which the controller may calculate a delay between emitting the marker light and sensing the marker light. The controller may also analyze the delay to determine a distance between the array and the point of reflection.

According to an embodiment of the present invention, the lighting system may comprise a network of nodes. Each of the nodes in the network of nodes may include a light source, the sensor, and the controller. Each node in the network of nodes is proximately aware of an additional node in the network. Delay may be analyzed by a node in the network to determine the distance between the node and the point of reflection. That distance may be intercommunicated within the network by transmitting and receiving the data light. Additionally, the condition in the environment may be determined by analyzing the distance calculated by at least a portion of the nodes in the network. Furthermore, the controller may analyze the distance calculated by at least a portion of the nodes in the network to determine a multidimensional arrangement of the condition in the environment. The nodes may intercommunicate by transmitting and receiving an electromagnetic signal.

According to an embodiment of the present invention, the dominant wavelength may be indicative of a substance present in the environment. Also, according to an embodiment of the present invention, the controller may control the array to emit an alert upon sensing an event.

According to an embodiment of the present invention, the lighting system may further comprise a switching circuit to alternate the light emitting semiconductor device between the sensing operation and the emitting operation. The light emitting semiconductor device may emit the illuminating light and receive the environmental light substantially simultaneously. Also, the light emitting semiconductor device may include a light emitting diode to emit the illuminating light and a photodiode to sense the environmental light. The light emitting diode may be operable as the photodiode.

According to an embodiment of the present invention, the controller may analyze the environmental light by measuring a drive voltage of the light emitting semiconductor device, determining a difference between a measured voltage across the light emitting semiconductor device and the drive voltage, and performing time-domain matching of the measured voltage and the environmental light using cross-correlation.

According to an embodiment of the present invention, the array may include a plurality of light sources. At least a portion of the light sources included in the array may be monochromatic light emitting diodes (LED), white light emitting diodes (LED), and/or infrared light (IR) emitting diodes (LED). Additional types of light emitting semiconductor devices may be included. According to an additional embodiment of the present invention, at least a part of the illuminating light may selectively include a biological affective wavelength to affect an object in the environment.

According to an embodiment of the present invention, at least a portion of the nodes in the network may perform an analysis using distributed computing. Additionally, at least a portion of the nodes in the network may synchronize by including a synchronization signal in an electromagnetic signal.

According to an embodiment of the present invention, the data light may be defined by a plurality of data wavelengths. The data may be transmittable at the plurality of data wavelengths. A quantity of data wavelengths included in the data light may correlate with a bandwidth at which the data is transmittable. The data light may also include at least one addressing bit to address the nodes intended to receive the data. Furthermore, the data included in the data light may include at least one error detection bit.

According to an embodiment of the present invention, feedback regarding an analysis performed by the controller may be stored in memory. The feedback from the analysis may be intercommunicated within the network. The feedback may be analyzed using machine learning. The feedback may also be analyzed using a neural network. The controller may receive the feedback regarding the prior analysis from the memory and analyze the feedback regarding the prior analysis to perform a subsequent analysis. This subsequent analysis may also be performed using machine learning.

According to an embodiment of the present invention, the lighting system may further comprise a wavelength conversion material between the array and the environment. The conversion material may absorb at least part of a source light and emit a converted light having a converted wavelength range. The source light may be received and absorbed by the wavelength conversion material. The converted light may be emitted by the wavelength conversion material. The wavelength conversion material may include a fluorescent material, a luminescent material, and/or a phosphorescent material.

The converted wavelength range of the converted light may include a variable dominant wavelength respective to the condition in the environment. The dominant wavelength may be indicative of a substance in the environment. The controller may correlate the dominant wavelength with the substance. The substance be an object, element, compound, particulate, or biological agent.

The illuminating light may be received by the wavelength conversion material as the source light, which may be emitted by the wavelength conversion material as converted light within the converted wavelength range. Alternatively, the environmental light may be received by the wavelength conversion material as the source light, which may be emitted by the wavelength conversion material as converted light to be received by the sensor as converted light within the converted wavelength range. The converted wavelength range may include shorter wavelengths than the source wavelength range resulting from performing an anti-Stokes shift. Alternatively, the converted wavelength range may include longer wavelengths than the source wavelength range resulting from performing a Stokes shift.

According to an embodiment of the present invention, the controller may be operatively connected to a voltage sensor to sense an open circuit voltage across the sensor.

According to an embodiment of the present invention, the data light may transmit the data using an operation including pulse width modulation (PWM), pulse amplitude modulation (PAM), intensity modulation, color sequencing, and/or duty cycle variation. A sample rate at which the data is transmitted in the data light may be dynamically adjustable by the controller. An increased sample rate may correlate with an increased resolution sensed by the array.

Data may be included in the data light digitally. The data included in the data light may also be encrypted. The light source may be operable in a pulsed mode. The controller may characterize a luminosity of the environmental light. The controller may also process the environmental light to remove noise.

According to an embodiment of the present invention, the array may include a piezoelectric substrate. According to additional embodiment of the present invention, the lighting system may further comprise a power supply to drive the array.

A method aspect of the present invention may include analyzing the environmental light to detect or generate data relating to a condition of the environment. The data may be transmittable in data light by the light source included in the array. The data light may also be defined by at least one data wavelength, wherein one or more data wavelength is defined relative to the illuminating light. The method aspect may additionally include selectively sensing a plurality of dominant wavelengths in the environmental light, which may be defined by the controller.

The plurality of dominant wavelengths may be concatenated to define the data relating to the condition in the environment. The controller may be used receive the data using the sensor from a plurality of directions, analyze the data, and transmit the data light from the light source in a plurality of directions. The light source and the sensor may be selectively operated.

### Brief Description of the Drawings

FIGS. 1-30 are included in U.S. Patent Application Serial No. 13/269,222 (US2013088155A1).
FIG. 1 is a schematic diagram of a lighting system according to an embodiment of the present invention.
FIG. 2 is a schematic diagram of a lighting system according to an embodiment of the present invention showing a plurality of light emitting semiconductor devices arranged in an array.
FIG. 3 is schematic diagram of an array of light emitting semiconductor devices in a lighting system according to an embodiment of the present invention.
FIGS. 3A-3E are schematic diagrams depicting an array of light emitting semiconductor devices on a substrate and arranged to emit illuminating light in various directions (FIGS. 3A-3D) and receive environmental light from various directions (FIG. 3E).
FIGS. 3F-3J are schematic diagrams depicting an array of light emitting semiconductor devices on a substrate in a lighting system according to an embodiment of the present invention.
FIG. 3X is a schematic diagram depicting an array of light emitting semiconductor devices in a lighting system according to an embodiment of the present invention.
FIGS. 4 and 5 are schematic diagrams of embodiments of switching circuits of the lighting system according to an embodiment of the present invention.
FIG. 6 is a schematic diagram of the lighting system according to an embodiment of the present invention showing a power supply.
FIG. 7 is a schematic diagram illustrating an embodiment of a network of nodes in a lighting system according to an embodiment of the present invention.
FIG. 8 is a perspective schematic diagram of a lighting device that may be included in the lighting system according to an embodiment of the present invention.
FIGS. 9-12 are schematic diagrams illustrating embodiments of data communication in the lighting system according to an embodiment of the present invention,
FIGS. 13-16 are flow charts illustrating method aspects of embodiments of the present invention.
FIGS. 17-17B are state diagrams illustrating modulation cycles of a light emitting semiconductor device in the lighting system according to an embodiment of the present invention,
FIG. 18 is a timing diagram providing a graphical chart of switching the light emitting semiconductor device between the emitting operation and the sensing operation in the lighting system according to an embodiment of the present invention.
FIG. 19 is a chart illustrating a figure of events that may occur in an environment and sensed using the lighting system according to an embodiment of the present invention.
FIG. 20 is a chart illustrating relative intensity of environmental light sensed by the lighting system according to an embodiment of the present invention corresponding with time.
FIGS. 21-28 are schematic diagrams of an array of light emitting semiconductor devices of the lighting system according to an embodiment of the present invention wherein some of the light emitting semiconductor devices are in an emitting operation and some of the light emitting semiconductor devices are in a sensing operation.
FIGS. 29-30 are schematic diagrams showing a correlation of data sensed in a data light using the lighting system according to an embodiment of the present invention to an image.
FIG. 31 is a diagram indicating the relative luminosity of light emitted by an infrared LED, according to an embodiment of the present invention.
FIG. 32 is a diagram indicating the relative luminosity of light detectable by an infrared LED, according to an embodiment of the present invention.
FIG. 33 is a diagram indicating the relative luminosity of light emitted by a blue LED, according to an embodiment of the present invention.
FIG. 34 is a diagram indicating the relative luminosity of light detectable by a blue LED, according to an embodiment of the present invention.
FIG. 35 is a diagram indicating the relative luminosity of light emitted by a blue LED, which includes light converted by a wavelength conversion material, according to an embodiment of the present invention.
FIG. 36 is a diagram indicating the relative luminosity of light detectable by a blue LED, which includes light converted by a wavelength conversion material, according to an embodiment of the present invention.
FIG. 37 is a diagram indicating the relative luminosity of light to be detected in an example, according to an embodiment of the present invention.
FIG. 38 is a diagram indicating the relative luminosity of light by a detected in an example, which has been converted by a wavelength conversion material, according to an embodiment of the present invention.
FIG. 39 is a block diagram of detecting an object in an environment, according to an embodiment of the present invention.
FIG. 40 is a flowchart illustrating the operation of FIG. 39, according to an embodiment of the present invention.
FIG. 41 is a time line relating to the events of the flowchart of FIG. 39, according to an embodiment of the present invention.
FIG. 42 is a block diagram of an array of light emitting semiconductor devices to communicate data light using multiple channels, according to an embodiment of the present invention.
FIG. 43 is a diagram indicating the relative luminosity of the channels generated by the array of FIG. 42.
FIG. 44 is a block diagram of detecting a substance in the environment, according to an embodiment of the present invention.
FIGS. 45A-E are diagrams indicating the relative luminosity of the channels generated by the array of FIG. 44.
FIG. 46 is a block diagram of detecting a substance in the environment using a wavelength conversion material, according to an embodiment of the present invention.
FIGS. 47A-E are diagrams indicating the relative luminosity of the channels generated by the array of FIG. 46.
FIGS. 48-51 are schematic diagrams showing a correlation of data sensed in a data light using the lighting system according to an embodiment of the present invention to an image.
FIG. 52 is a diagram of an image created from sensed environmental light, according to an embodiment of the present invention.
FIG. 53 is a diagram of an image created from sensed environmental light, according to an embodiment of the present invention.
FIG. 54 is a diagram of an image created from sensed environmental light, according to an embodiment of the present invention.
FIG. 55 is a top plan view of an array of nodes located along a roadway, according to an embodiment of the present invention.
FIG. 56 is a front perspective view of an object sensed on the roadway illustrated in FIG. 55, according to an embodiment of the present invention.

### Detailed Description of the Preferred Embodiment

The present invention will now be described more fully hereinafter with reference to the accompanying drawings, in which preferred embodiments of the invention are shown. This invention may, however, be embodied in many different forms. Those of ordinary skill in the art realize that the following descriptions of the embodiments of the present invention are illustrative and are not intended to be limiting in any way. Other embodiments of the present invention will readily suggest themselves to such skilled persons having the benefit of this disclosure. Like numbers refer to like elements throughout.

In this detailed description of embodiments of the present invention, a person skilled in the art should note that directional terms, such as "above," "below," "upper," "lower," and other like terms are used for the convenience of the reader in reference to the drawings. Also, a person skilled in the art should notice this description may contain other terminology to convey position, orientation, and direction without departing from the principles of the embodiments of the present invention.

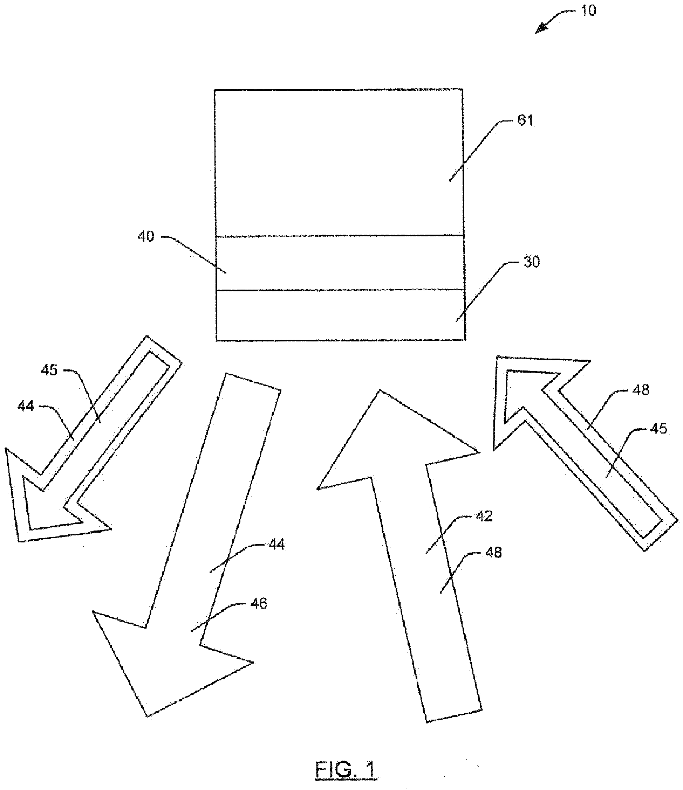

This application is related to U.S. Patent Application Serial No. 13/269,222 (US2013088155A1) filed on October 7, 2011, titled *"WAVELENGTH SENSING LIGHTING SYSTEM AND ASSOCIATED METHODS,"* the inventors of which include the inventors of the present application. The following description of Figures 1 to 30 is reproduced from that application.

Referring now to FIGS. 1-30, a wavelength sensing lighting system 10, according to an embodiment of the present invention, is now described in greater detail. Throughout this disclosure, the wavelength sensing lighting system 10 may also be referred to as a lighting system, system, device, embodiment, or the invention. Alternate references to the wavelength sensing lighting system 10 in this disclosure are not meant to be limiting in any way. A person of skill in the art, after having the benefit of this disclosure, will appreciate that the present invention may include embodiments that perform total, partial, and minimal conversion of a source light 42 into a converted light 46. Additionally, skilled artisans will appreciate that, in embodiments with partial wavelength conversions, the remaining, unconverted source light 42 may be combined with the converted light 46 to be directed in the desired output direction, for example, to illuminate a space or to sense a condition in the environment.

Additionally, in the following disclosure, a light source is disclosed as a component of the lighting system 10, according to an embodiment of the present invention. The light source may be a light emitting semiconductor device 40, which may be referenced throughout the following disclosures. Additionally, a sensor may be discussed to sense environmental light 48. The sensor may be a light source, such as light emitting semiconductor device 40. In embodiments of the present invention, the operation of the sensor may be performed by a light source, such as a light emitting semiconductor device 40. As a result, the light emitting semiconductor device 40 should be assumed to collectively include the light source and the sensor in at least one embodiment of the present invention.

Furthermore, in the following disclosure, a controller 61 may be discussed to analyze the environmental light 48 sensed by the sensor and control the emission of illuminating light 44 by the light source. The sensor and the light source may be a light emitting semiconductor device 40. The controller may collectively include an analysis processor to analyze sensed environmental light 48 and a lighting controller to control emitting illuminating light 44.

The controller 61 may be a computerized device capable of sending, receiving, and analyzing data and electronic signals. The controller 61 may control one or more light source, which may be included in an array 39. However, the functionality of the controller 61 should not be limited to light source controlling operations. The controller 61 may additionally accept and analyze data or electronic signals received from one or more sensor. The controller 61 may perform the operations of both the analysis processor and the lighting controller, among numerous other operations that would be apparent to those skilled in the art. Skilled artisans will additionally appreciate that the controller 61 may be described broadly herein as a computerized device to perform computational operations, including processing data.

Skilled artisans will appreciate additional embodiments of a light source, for example, and without limitation, electroluminescent, laser, incandescent, and fluorescent light sources. Although the light source may be discussed in regard to a specific embodiment of a light emitting semiconductor device 40, a person of skill in the art will appreciate that additional light sources may be included with the operation of the various embodiments of the present invention, are intended to be included within the scope of the same. As a result, skilled artisans should not view the use of a light emitting semiconductor device 40 through this disclosure as limiting the scope of the light source.

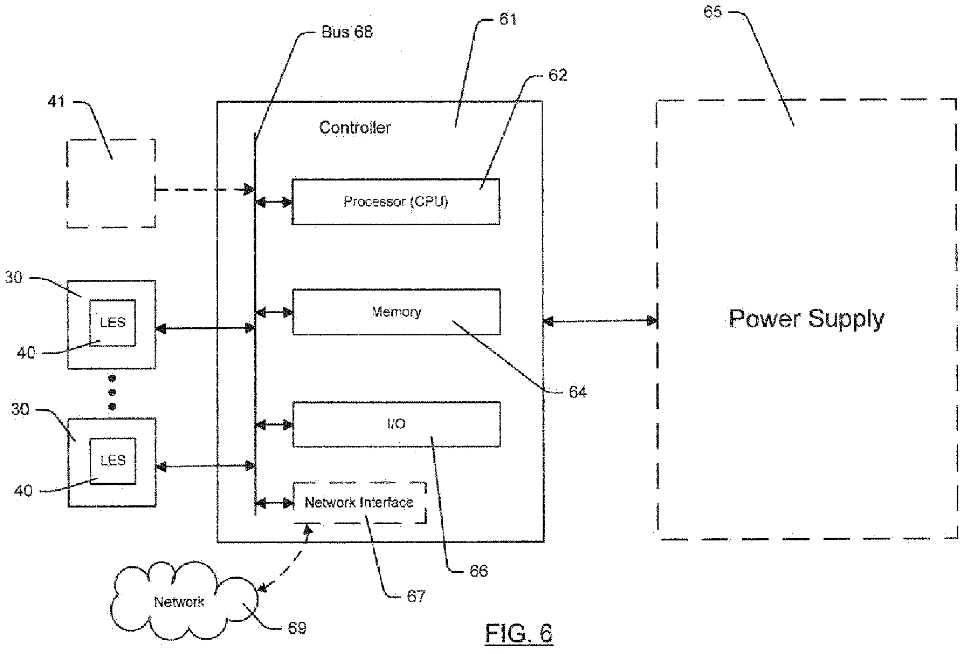

As perhaps best illustrated in FIG. 1, according to an embodiment of the present invention, the lighting system 10 may include one or more light emitting semiconductor devices 40 capable of emitting an illuminating light 44. The light emitting semiconductor device 40 may be operatively connected to a controller, which may control the operation of the light emitting semiconductor devices. The lighting system 10 may optionally include a sensor, which may be a photodiode 41 or charge-coupled device (FIG. 6). The light emitting semiconductor device 40 may additionally sense and receive an environmental light 48. Skilled artisans will appreciate environmental light 48 to include ambient light sensed from an environment and light reflected from the environment, which may have initiated as illuminating light 44. Environmental light 48 may also include illuminating light 44 emitted by an adjacent light source, such as a light emitting semiconductor device 40. In embodiments wherein the sensor is a light emitting semiconductor device 40, the environmental light 48 may additionally include any light that is not being emitted by the light emitting semiconductor device 40 that is presently sensing environmental light 48. Data light 45 may be included in the illuminating light 44 and/or the environmental light 48.

In an embodiment of the present invention, the illuminating light 44 may be at least partially absorbed by a wavelength conversion material 30 as a source light to be subsequently emitted as a converted light 46. The wavelength conversion material 30 may additionally be referred to as a conversion material 30, without limitation. Similarly, the environmental light 48 may be at least partially absorbed by a conversion material 30, a source light 42 to be subsequently emitted as a converted light 46. A person of skill in the art will appreciate that a plurality of light emitting semiconductor devices may be configured in an array 39, which may be operatively connected to the controller 61.

The light emitting semiconductor device 40 may, for example, include light emitting diodes (LEDs) capable of emitting illuminating light 44 in a wavelength range determined by the characteristics of the LED. Other embodiments of the present invention may include illumining light 44 that is generated by a laser based light emitting semiconductor device 40. Those ski/led in the art will appreciate that the illuminating light 44 may be provided by any number of lighting devices, which may include, but should not be limited to, additional light emitting devices,

An LED may emit light when an electrical current is passed through the diode in the forward bias. The LED may be driven when biased in the forward direction. Skilled artisans will understand the operation by which an LED may produce light, such as through the recombination of electron-hole pairs. The color of the emitted light may be determined by the materials used in the construction of the light emitting semiconductor device 40. A laser diode is another type of a light emitting semiconductor device that may emit an illuminating light 44. A laser diode may be comprised of a semiconductor doped to include a p-n junction, and may emit light as an electrical current is applied across the junction.

In an embodiment of the present invention, the source wavelength range may include an illuminating light 44 emitted in blue or ultraviolet wavelength ranges. However, a person of skill in the art, after having the benefit of this disclosure, will appreciate that LEDs capable of emitting light in any number of wavelength ranges may be included in the definition of the light emitting semiconductor device 40, such as, for example, infrared light. A skilled artisan will also appreciate, after having the benefit of this disclosure, additional light generating devices that may be used as the light emitting semiconductor device 40 which are capable of creating an illumination.

As previously discussed, embodiments of the present invention may include a light emitting semiconductor device 40 that generates illuminating light with a wavelength range in the blue spectrum. The blue spectrum may include light with a wavelength range between about 400 and 500 nanometers. An illuminating light 44 in the blue spectrum may be generated by a light emitting semiconductor device 40 that is comprised of materials that emit a light in the blue spectrum. Examples of such light emitting semiconductor device materials may include, but are not intended to be limited to, zinc selenide (ZnSe) or indium gallium nitride (InGaN). These semiconductor materials may be grown or formed on substrates, which may be comprised of materials such as sapphire, silicon carbide (SiC), or silicon (Si). Additionally, an embodiment of the light emitting semiconductor device 40 may be removed from the substrate 38. In this embodiment, the light emitting semiconductor device 40 may optionally be bonded to another surface or material. A person of skill in the art will appreciate that, although the preceding semiconductor materials have been disclosed herein, any semiconductor device capable of emitting a light in the blue spectrum is intended to be included within the scope of the described embodiments of the present invention.

Additionally, as previously discussed, embodiments of the present invention may include a light emitting semiconductor device 40 that generates illuminating light 44 with a wavelength range in the ultraviolet spectrum. The ultraviolet spectrum may include light with a wavelength range between about 200 and 400 nanometers. An illuminating light 44 in the ultraviolet spectrum may be generated by a light emitting semiconductor device 40 that is comprised of materials that emit a light in the ultraviolet spectrum. Examples of such light emitting semiconductor device materials may include, but are not intended to be limited to, diamond (C), boron nitride (BN), aluminum nitride (AIN), aluminum gallium nitride (AlGaN), or aluminum gallium indium nitride (AlGalN). These semiconductor materials may be grown or formed on substrates, which may be comprised of materials such as sapphire, silicon carbide (SiC), or Silicon (Si). Additionally, an embodiment of the light emitting semiconductor device 40 may be removed from the substrate 38. In this embodiment, the light emitting semiconductor device 40 may optionally be bonded to another surface or material. A person of skill in the art will appreciate that, although the preceding semiconductor materials have been disclosed herein, any semiconductor device capable of emitting a light in the ultraviolet spectrum is intended to be included within the scope of the described embodiments of the present invention.

Furthermore, as previously discussed, embodiments of the present invention may include a light emitting semiconductor device 40 that generates illuminating light 44 with a wavelength range in the infrared spectrum. The infrared spectrum may include light with a wavelength range between about 700 and 1400 nanometer, which would be appreciated by skilled artisans to be included in the IR-A specification, as determined by the International Commission on Illumination (CIE). Skilled artisans will additionally appreciate that infrared light emitting semiconductor devices 40, as included herein, may additionally emit and light within a wavelength range between about 1400 nanometers and 1 millimeter, which includes the wavelength ranges of the IR-B and IR-C specifications, as defined by the CIE.

An illuminating light 44 in the infrared spectrum may be generated by a light emitting semiconductor device 40 that is comprised of materials that emit light in the infrared spectrum. Examples of such light emitting semiconductor device materials may include, but are not intended to be limited to, gallium arsenide (GaAs), gallium antimonide (GaSb), iridium phosphide (InP), or silicon germanium (SiGe). These semiconductor materials may be grown or formed on substrates, which may be comprised of materials that would be appreciated by skilled artisans. Additionally, an embodiment of the light emitting semiconductor device 40 may be removed from the substrate 38. In this embodiment, the light emitting semiconductor device 40 may optionally be bonded to another surface or material. A person of skill in the art will appreciate that, although the preceding semiconductor materials have been disclosed herein, any semiconductor device capable of emitting a light in the infrared spectrum is intended to be included within the scope of the described embodiments of the present invention.

According to an embodiment of the present invention, the lighting system 10 may include various native light emitting semiconductor devices which, when combined, may create virtually any color within the visible spectrum. A native light emitting semiconductor device 40 may be defined as a semiconductor device that is not located adjacent to a wavelength conversion material 30. For clarity, and without the intent to be limiting, the lighting system may include light emitting semiconductor devices that emit an illuminating light 44 in red, blue, and green colors. Those skilled in the art of chromaticity, and more specifically metamerism, will appreciate that red, green, and blue lights may be received by the human eye. By combining these primary colors, the human eye may perceive virtually all colors in the visible light spectrum.

Skilled artisans will appreciate that primary colors may or may not be metameric colors. Metamerism may include light sources that have substantially the same chromaticity coordinates as the primary colors, but differ with respect to the wavelength ranges of the included light. In an embodiment of the present invention, a metameric pair of light sources may include two light sources with different spectral power distributions, or more generally wavelength distributions, which appear substantially indistinguishable to the human eye. As a result, the specific wavelengths of light emitted and received by lighting system 10 may be modified, while a substantially constant chromaticity is maintained, resulting in substantially the same color light being perceived by human observers.

In an embodiment of the lighting system 10 of the present invention, wherein the light emitting semiconductor devices are configured with regard to metamerism, lighting emitting semiconductors relating to each metameric color may be controlled separately and/or independently from one another.

As the intensity of a color may increase, the quantity of light that may include the three aforementioned metameric colors may also increase. To provide higher efficacy light emission, a white light emitting semiconductor device may be included in the lighting system 10 to emit light that otherwise would require a plurality of color-specific light emitting semiconductor devices. The inclusion of a white light emitting semiconductor device 40 within a metameric system, such as a system including red, blue, and green light emitting semiconductor devices, has been discussed in greater detail in U.S. patent application Ser. No. 13/107,928 to Maxik, et al., (US2012286700A1).

The lighting system 10 may additionally control the light emitted by the light emitting semiconductor device 40 by including a MEMS device. The MEMS device may be further described in U.S. patent application Ser. No. 13/073,805 to Maxik, et al., (US2012250137A1). In an embodiment of the present invention, the MEMS device may be included and located adjacent to the light emitting semiconductor device 40 and/or the conversion material 30. Such a MEMS device may selectively transmit illuminating light 44 in a desired output direction. The MEMS device may additionally direct environmental light to a sensor, such as a photodiode 41 or a light emitting semiconductor device 40 currently sensing environmental light 48. The MEMS device may be communicatively connected to a controller 61, which may be used to selectively and dynamically enable or disable the micromirrors included in the MEMS device.

The light emitting semiconductor device 40, according to an embodiment of the present invention, may include an organic light emitting diode (OLEO). An OLEO may be comprised of an organic material that may emit light when an electric current is applied. The organic material may be positioned between two electrodes. Typically, at least one of the electrodes may be transparent.

As will be understood by skilled artisans, illuminating light 44 may be emitted by a light emitting semiconductor device 40 in a plurality of directions. Additionally, by enabling selected light emitting semiconductor devices, the direction in which illuminating light 44 is emitted may be controlled. The selective enablement of illuminating light emission in a desired output direction may occur by controlling various light emitting semiconductor devices included in a package. Alternatively, the selective enablement of illuminating light emission in a desired output direction may occur by controlling various light emitting semiconductor devices included in an array 39. The light emitting semiconductor devices may be controlled by an operatively connected controller.

Color-mixing, luminosity, and duty cycle of the light emitting semiconductor device 40 may be controlled using pulse width modulation (PWM). PWM is a technique known within the art for controlling power to electrical devices, which operates by quickly switching power between an "on" state and "off" state during each period. The period is the time between each pulse, similar to a dock rate. The ratio of the pulse period occupying the "on" state versus the "off" state defines the duty cycle. As the PWM varies the duration that the switch is kept at the "on" state, the PWM is able to vary the average power to the load device. PWM switching can be beneficial from an efficiency perspective, since it has low power loss when switched in the "off" state.

For lighting devices, the frequency of pulses in the PWM circuit must be sufficiently fast enough that the human eye cannot perceive the strobe effect. To have an increasingly high pulse frequency, the period must become increasingly short. The intensity of each individual color may be controlled via variations in the duty cycle of each pulse period. With light sources that are slow to react, such as incandescent light bulbs, a relatively low pulse frequency may be required. Conversely, PWM circuits that may be used to control a perceived intensity of light from a light emitting semiconductor device 40 must be operable at considerably higher frequencies, or otherwise risk producing visual flicker.

To achieve color mixing, a controller 61 including a PWM circuit may control the duty cycle on all wavelengths intended to be mixed. Typically, as discussed above, virtually any color in the visible spectrum can be created through the use of a red, green, and blue color source. With a color mixing system based on PWM circuits, the system may adjust the duty cycle for each primary color by combining the adjusted primary colors to display the desired color. Additionally, according to an embodiment of the present invention, the PWM circuits in the controller 61 may control the light emitting semiconductor devices, included in the lighting system 10, dynamically. Furthermore, the controller 61 may control the light emitting semiconductor devices with PWM independently and/or collectively, as necessary.

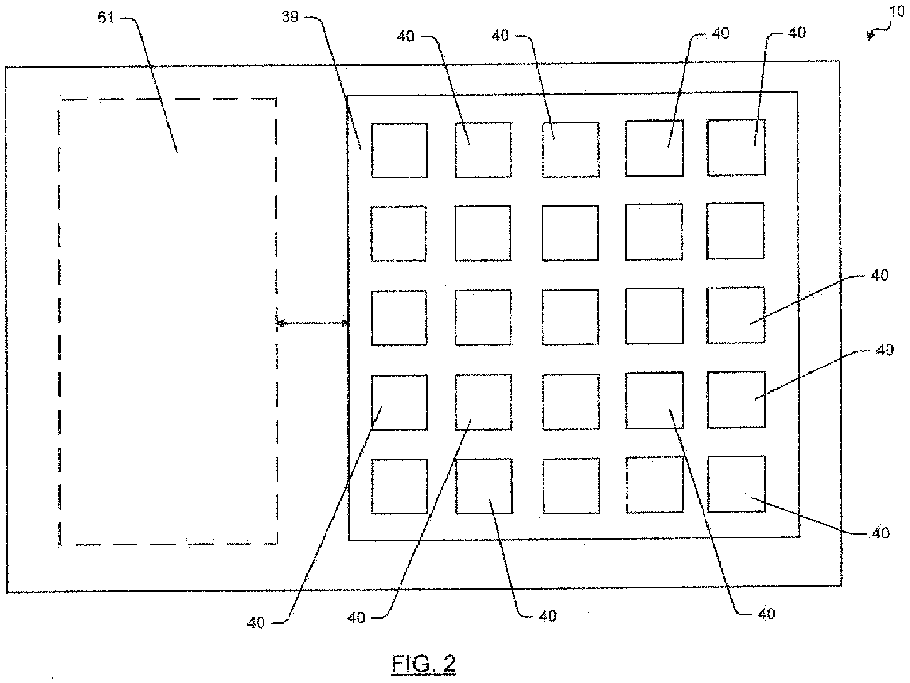

Referring now to FIG. 2, the array of light emitting semiconductor devices will now be discussed greater detail. An array 39 may be uni-dimensional or multidimensional, e.g., one, two, or three dimensional. The array 39 may comprise a linear, rectangular, annular or other configuration comprising a plurality of light sources. In one embodiment, the light sources comprise light emitting semiconductor devices 40.

The light emitting semiconductor devices may be part of an array 39, or a collective system of light emitting semiconductor devices densely located in a small area. Several light emitting semiconductor devices may be operatively connected to a controller 61 to form the array 39. Additionally, a plurality of light emitting semiconductor devices may be packaged together, for example, on a single semiconductor. Packages of light emitting semiconductor devices may also be densely included adjacent to each other to form an array 39. A person of skill in the art will appreciate that some arrays of light emitting semiconductor devices, such as with larger arrays, may be packaged on multiple semiconductors, which may be interconnected and may intercommunicate as a collective lighting system.

The array of light emitting semiconductor devices may be operatively connected to a controller 61. The controller 61 may process the information received by one or more light emitting semiconductor devices included in the array 39 to determine control signals that may operate the additional light emitting semiconductor devices in the array 39. The control signals may be used to control the operation of a light emitting semiconductor device 40 between the emitting illuminating light 44 and sensing environmental light 48. Those skilled in the art will appreciate that the environmental light 48 may or may not be converted by the conversion material 30. Through the selective operation of the individual light emitting semiconductor devices included in the array, the lighting system 10, according to an embodiment of the present invention, may advantageously control the characteristics of the illuminating light 44 emitted by the array 39 into the environment.

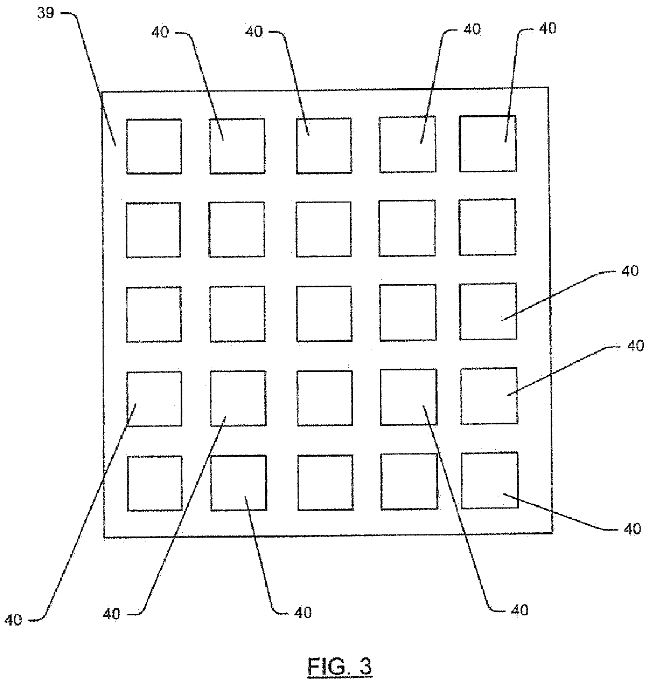

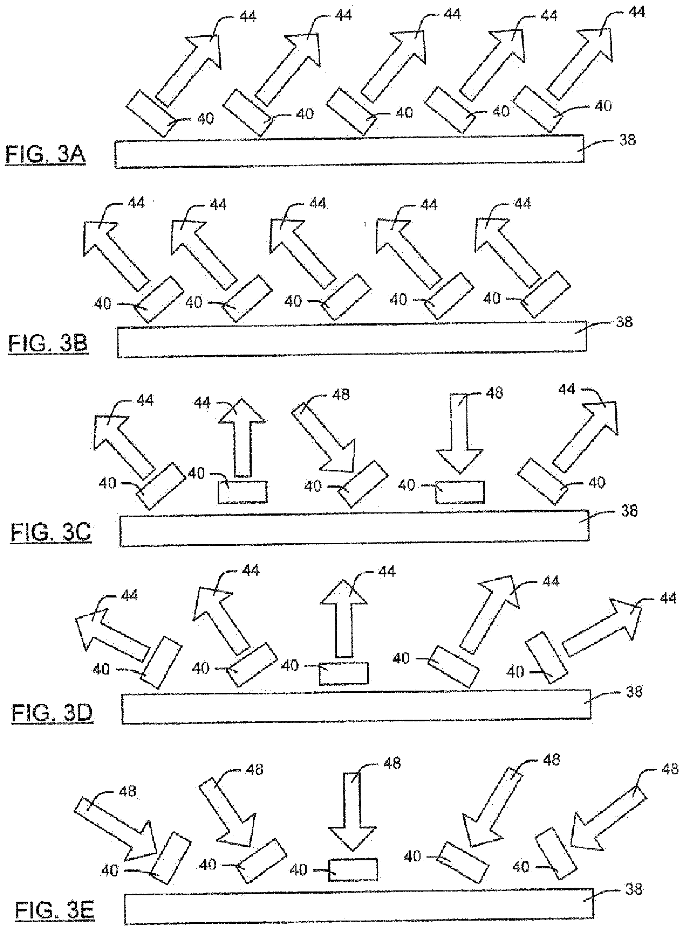

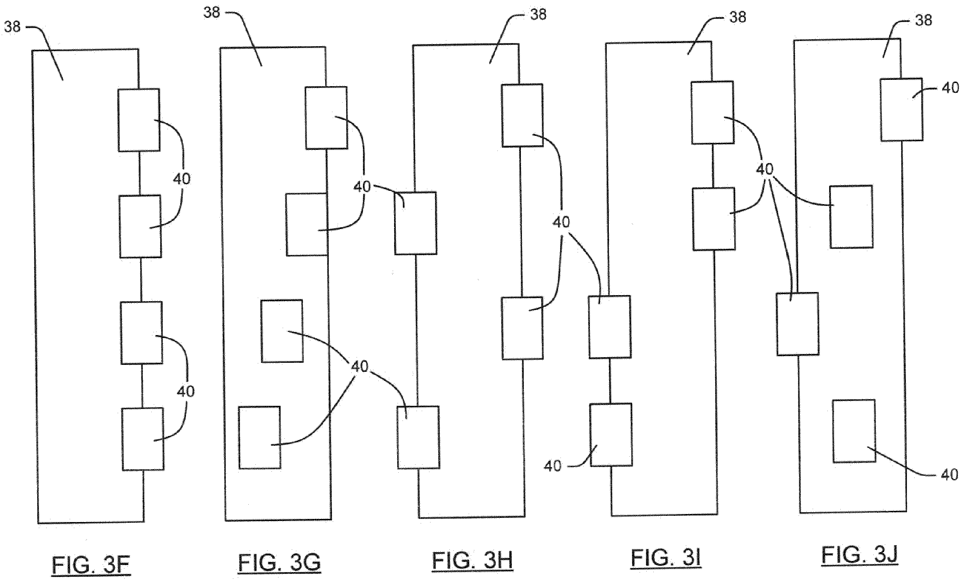

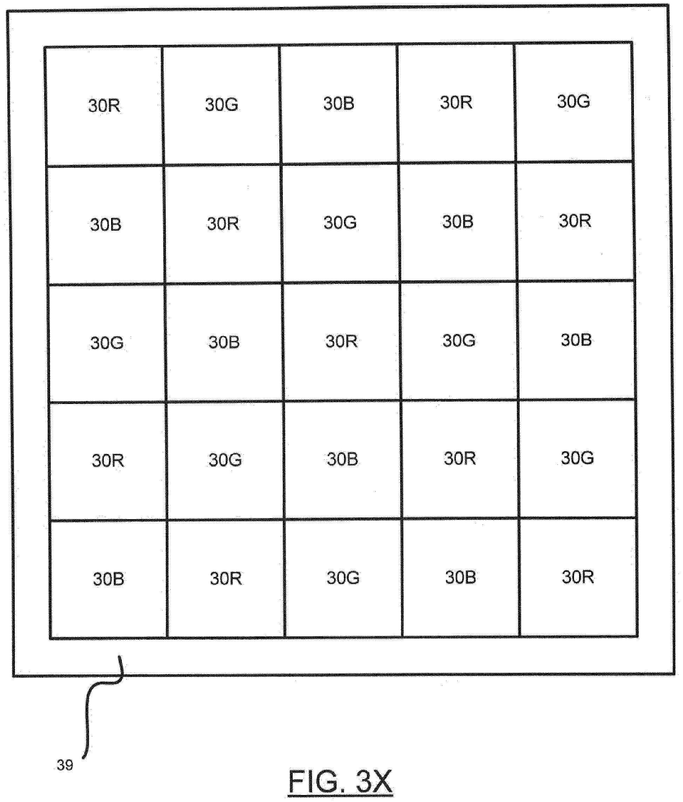

Referring now additionally to FIG. 3, additional features of the array of light emitting semiconductor devices, as it may be included in the lighting system 10 will now be discussed. An array 39 may include at least one light emitting semiconductor device 40. The array 39 may be organized in a grid configuration, such as illustrated by FIG. 3. Various grid configurations may be used, which may include the non-limiting example of a square grid presented in FIG. 3. However, a person of skill in the art will appreciate that the array may be organized in any configuration to allow for the emission of illuminating light 44 to, and sensing of environmental light 48 from an environment. For clarity, the array of FIG. 3 is represented as a grid of five by five light emitting semiconductor devices. However, an array 39 may include any number of light emitting semiconductor devices, and not necessarily the number of light emitting semiconductor devices depicted in FIG. 3. A person of skill in the art will appreciate that, although the disclosure provided herein contemplates an array 39 with a plurality of light emitting semiconductor devices, embodiments of the present invention may include arrays with as little as one light emitting semiconductor device 40.

The inclusion of light emitting semiconductor devices configured in a phased array will now be discussed. As previously discussed, a plurality of light emitting semiconductor devices may be included in an array 39. In one embodiment, the array of light emitting semiconductor devices may be operated as a phased array. In one example, a phased array may be configured as a mosaic of independent transducer elements (e.g., photon emitters and photon receivers in this example) in which the timing, intensity, direction, and/or color can be independently controlled to produce effects, such as, for example, beam steering and targeting.

These effects may be employed for ranging, sensing, pattern detection, and communications among others. In the context of one embodiment, a phased array of light emitting semiconductor devices is an array 39 of substantially incoherent optical sources, which may be independently controlled with respect to one or more of the timing, duration, intensity, polarization of photon emission, and color. In additional embodiments, the phased array may also be individually controlled with respect to the physical orientation and motion of the optical emitter. Beam forming and targeting can be accomplished with specific pulsing, time delays, phase shifting and interrelationship (e.g., among pulses) and, in some cases, orientation changes and motion of the emitters. In one embodiment, optical heterodyning may be employed, as will be appreciated by those skilled in the art.

In one embodiment, sequential and temporally correlated PWM of individual light emitting semiconductor devices 40 of the array 39 in conjunction with temporally correlated sensing function and operation may be used to sense conditions in the environment. For example, in one embodiment, a single light emitting semiconductor device 40 may be powered, or operable in an emitting operation, and light emitting semiconductor devices included in the array may be used for detection, or operable in the sensing operation (e.g., during one or more duty cycles). In another embodiment, scanning along particular geometries of the array 39 can be used to resolve environmental signals, e.g., scanning along the vertical, horizontal, or diagonals of a rectangular array 39. A person of skill in the art will appreciate that the use of a rectangular array has been provided above in the interest of clarity, is not intended to be limiting.

Alternatively or additionally, multi-color scanning, including the use of metameric whites, may be used for greater resolution. Signal processing of the sensed data may be correlated with the illuminating light to characterize the environment. Mathematical analysis and signal processing techniques, including Fourier transforms, may be used to analyze the data.

Referring now to FIGS. 3A-3E, the inclusion of a deformable substrate will now be discussed. More specifically, the deformable substrate used to create movable light emitting semiconductor devices, and resulting relative oscillations, will now be discussed. FIGS. 3A-3E illustrate various configurations of light emitting semiconductor devices included on a deformable substrate, which may be directed in a plurality of directions to emit illuminating light 44 or sense environmental light 48. As illustrated in FIGS. 3A-3B, the light emitting semiconductor devices may be repositioned substantially uniformly. Also, as illustrated in FIGS. 3C-3E, the light emitting semiconductor devices may be selectively repositioned independently. The light emitting semiconductor device 40 repositioned by the deformable substrate, which may be a piezoelectric substrate, may emit illuminating light 44 (FIGS. 3A-3D) and/or sense environmental light 48 (FIGS. 3C-3E) from a plurality of dynamically variable directions. Additionally, one or more stationary light emitting semiconductor devices may be included with the light emitting semiconductor devices that are repositionable by the deformable substrate in an array 39.

In one embodiment, the array 39 may include a deformable board of light emitting semiconductor device dies. Alternatively, an array of light emitting semiconductor devices may include an array of independently variable and repositionable light emitting semiconductor device dies, of which some or all of the light emitting semiconductor devices may be configured such that orientation of one or more individual light emitting semiconductor devices that may be varied. Variance of the configuration of the individual light emitting semiconductor devices may be accomplished for instance, by placing the light emitting semiconductor devices on a piezoelectric substrate.

A piezoelectric substrate may deform when electrically addressed, thereby changing the orientation of one or more light emitting semiconductor devices located adjacent to the piezoelectric substrate. A plurality of piezoelectric substrates may be included with respect to the array 39, allowing the light emitting semiconductor devices included in the array 39 to be collectively or independently movable. For example, a light emitting semiconductor device 40 located adjacent to a piezoelectric substrate may extend in front or behind the plane formed by the array 39, or may oscillate about a plane relative to the array 39.

Additionally, a light emitting semiconductor device 40 may be rotated or inclined with respect to its initial orientation such that the plane of an individual die is deflected such that the plane of light emitting semiconductor device 40 dies may no longer be parallel with the plane of the array 39. In another embodiment, this rotation or deflection may be oscillatory, periodic, consistent with another pattern, or may occur dynamically with no predetermined pattern.

As examples, a single substrate 38 of piezoelectric or other controllable deformable system may be used for the array 39. Additionally, one or more dies may be attached to, and be associated with, individually addressable deformable or movable elements that allow the light emitting semiconductor devices to move independently of one another. Because the position and orientation of one or more light emitting semiconductor devices can be independently controlled, light emitting semiconductor devices can be deflected, rotated, or inclined in or out of the plane of the array 39, parallel to the plane in the case of simple displacement or inclined with respect to the plane in deflection.

In some embodiments, the position and orientation of light emitting semiconductor devices may be changed in a periodic fashion such that individual light emitting semiconductor devices move, rotate, and/or deflect about a zeroth position in a cyclic oscillatory manner. Individual light emitting semiconductor devices may be positionally and orientationally driven in a phased relationship with other light emitting semiconductor devices (either part of the array or another array).

The light emitting semiconductor devices may be driven with pulse width modulation (PWM), pulse amplitude modulation (PAM), or additional data incorporation protocols that would be apparent to a skilled artisan after having the benefit of this disclosure. The driving modulation or protocol may generate varying intensities and durations of light output in coordination and conjunction with their actual position or orientation and/or with their periodic displacements of position and orientation.

In another embodiment, specific optics may be applied to one or more light emitting semiconductor devices 40, which may be included in portions of an array 39, to improve the resolution sensed by the light emitting semiconductor device 40. The resolution may be improved by allowing an individual light emitting semiconductor device 40, or portions of the light emitting semiconductor devices 40 included in an array 39, to detect different regions of an illuminated area. For example, light emitting semiconductor devices 40 may illuminate to, and/or sense light from, multiple directions substantially simultaneously. A person of skill in the art will appreciate that the light emitting semiconductor device 40 may additionally detect wavelengths in an area that has riot been illuminated by a light emitting semiconductor device 40.

Referring additionally to FIGS. 3F-3J, the use of the aforementioned modulation or data incorporation protocols may afford the lighting system 10 the ability to position and orient individual light emitting semiconductor devices, or arrays thereof, and to control same in a real time dynamic manner. More specifically, the light emitting semiconductor devices may be controlled using, for example, periodic oscillations, to drive the changes in orientations and position in a phased relationship amongst light emitting semiconductor devices. These configurations may include orientations wherein the light emitting semiconductor devices are in-phase (FIG. 3F), or various out-of-phase configurations (FIGS. 3G-3J).

In an additional embodiment, the positional control of the light emitting semiconductor devices may be coupled with the ability to alter the color, intensity, and light pulse duration of each light emitting semiconductor device 40 in a similar phased relationship. Beam targeting, communication protocols, detection, and ranging, among many other capabilities can be achieved, as would be appreciated by a person of skill in the art.

In additional embodiments, the polarization of the emitted light may also be dynamically controlled allowing an additional characteristic of the emitted light from each light emitting semiconductor device 40 to be modulated. Varying polarizations using optics, nematic crystals, and the like are well known in the art. Spatial light modulators are well known and may be additionally used to modulate amplitude and phase of the light emitted from light emitting semiconductor devices and arrays.

The conversion material 30, as it may be included in an embodiment of the present invention, will now be discussed in greater detail. The conversion material 30 may be located adjacent to the light emitting semiconductor device 40. The conversion material 30 may alter a source wavelength range of the source light 42 into a converted wavelength range of a converted light 46. As mentioned above, a source light 42 may include any light absorbed by the conversion material 30. Additionally, converted light 46 may include any light emitted by the conversion material 30 after shifting the wavelength range from the source wavelength range to the converted wavelength range.

In this disclosure, the conversion material 30 may be described as a structural element that may be located adjacent to a light emitting semiconductor device 40. Skilled artisans should appreciate an additional embodiment of the conversion material 30 to include the direct application of the conversion material 30 to the light emitting semiconductor device 40, effectively resulting in a conversion coated light emitting semiconductor device.

The conversion material 30 may preferably include a fluorescent, luminescent, or phosphorescent material capable of converting light with a source wavelength range into a light with one or more converted wavelength ranges. The material may be included in, or applied to, an additional component, such as the light emitting semiconductor device 40. However, it will be appreciated by skilled artisans that any wavelength conversion material capable of converting a light from one wavelength range to another wavelength range may be included in the definition of a conversion material 30.

A conversion material 30 may be included within the bulk material of another component, such as an enclosure or fixture that may be located in line between the light emitting semiconductor device 40 and the environment, according to an embodiment of the present invention. In this embodiment, the conversion material 30 may be suspended or incorporated in the bulk material that comprises the other component. The bulk material may include, but should not be limited to, glass or polymeric materials. Skilled artisans will understand polymeric materials to include, among other things, plastics, sol-gels, and spin-on glasses. In a non-limiting example, wherein the conversion material 30 is included in a polymeric bulk material, a solid optic may be formed or molded from a polymeric material in the liquid state. The conversion material 30 may be infused into the liquid polymeric material prior to the solidification into a solid optic. Alternatively, the conversion material 30 may be included in a bulk material prior to, or during, a polymerization process. A person of skill in the art will appreciate that, in the present non-limiting example, the conversion material 30 may be infused into liquid plastic homogeneously, methodologically, sporadically, or randomly.

An additional embodiment of the conversion material 30 may include a conversion coating comprising a fluorescent or luminescent material, which may further include a phosphor material, and may after the wavelength range of light that may be absorbed by, and emitted from, the coating. A source wavelength range may be converted into one or more converted wavelength ranges. A source light 42 may include a monochromatic, bichromatic, or polychromatic light emitted by one or more light sources. For the sake of clarity, references to a source light 42, and its corresponding source wavelength range, should be understood to include the light received from the one or more light sources, sensed from the environment, that is received by the lighting system 10. Correspondingly, a source wavelength range should be understood to be inclusive of the wavelength ranges included in monochromatic, bichromatic, and polychromatic source lights,

Additionally, a source light 42 with a source wavelength range may be converted by the conversion material 30, which may be located adjacent to another component, such as the light emitting semiconductor device 40, into a converted light 46 with one or more converted wavelength ranges. The use of multiple phosphor and/or quantum dot elements may produce a light that includes multiple discrete or overlapping wavelength ranges. These wavelength ranges may be combined to produce the converted light 46. For further clarity in the foregoing description, references to a converted light 46, and its corresponding converted wavelength ranges, should be understood to include all wavelength ranges that may be produced as the source light 42 may be received and converted by the conversion material 30.

Luminescence is the emission light without the requirement of being heated. This is contrary to incandescence, which requires the heating of a material, such as a filament through which a current may be passed, to result in illumination. Luminescence may be provided through multiple processes, including electroluminescence and photoluminescence. Electroluminescence may occur as a current is passed through an electronic substance, such as a light emitting diode or a laser diode. Photoluminescence may occur as light from a first wavelength range may be absorbed by a photoluminescent material to be emitted as light in a second wavelength range. Photoluminescent materials may include fluorescent materials and phosphorescent materials.

A fluorescent material may absorb light within a first wavelength range, the energy of which may be emitted as light within a second wavelength range. The absorption and emission operation will be described in greater detail below. A non-limiting example of a fluorescent material may include the coating on a fluorescent light bulb. Fluorescent materials may include, but should not be limited to, phosphors and quantum dots.

Phosphorescent material involves the absorption and emission of light, similar to that of a fluorescent material, however with differing energy state transitions. These differing energy state transitions may result in a delay between the absorption of light in the first wavelength range and the emission of light in the second wavelength range. A non-limiting example of a device with a phosphorescent material may include glow-in-the-dark buttons on a remote controller. Phosphorescent materials may include, but should not be limited to, phosphors.

A phosphor substance may be illuminated when it is energized. Energizing of the phosphor may occur upon exposure to light, such as the source light 42, for example. The wavelength of light emitted by a phosphor may be dependent on the materials of the phosphor. Typically, phosphors may convert a source light 42 into a converted light 46 within a wide converted wavelength range, as will be understood by skilled artisans.

A quantum dot substance may also be illuminated when it is energized. Energizing of the quantum dot may occur upon exposure to light, such as the source light 42. Similar to a phosphor, the wavelength of light emitted by a quantum dot may be dependent on the materials of the quantum dot. Typically, quantum dots may convert a source light 42 into a converted light 46 within a narrow converted wavelength range, as will be understood by skilled artisans.

The conversion of a source wavelength range into a converted wavelength range may include a shift of wavelength ranges, which may be known to those skilled in the art as a Stokes shift. During a Stokes shift, a portion of the source wavelength range may be absorbed by a conversion material 30. The absorbed portion of source light 42 may include light within a selective wavelength range, such as, for example, a biologically affective wavelength range. This absorption may result in a decreased intensity of light within the source wavelength range.

The portion of the source wavelength range absorbed by the conversion material 30 may include energy, causing the atoms or molecules of the conversion material 30 to enter an excited state. The excited atoms or molecules may release some of the energy caused by the excited state as light. The light emitted by the conversion material 30 may be defined by a lower energy state than the source light 42 that may have caused the excited state. The lower energy state may result in wavelength ranges of the converted light 46 to be defined by light with longer wavelengths.

A person of skill in the art will appreciate additional wavelength conversions that may emit a light with shorter wavelength ranges to be included within the scope of the present invention, as may be defined via the anti-Stokes shift. When performing an anti Stokes shift, a conversion material 30 typically combines two or more photons of a low energy source light 42, which may result in the emission of a single photon of high energy converted light 46.

As will be understood by a person of skill in the art, the energy of the light absorbed by the conversion material 30 may shift to an alternate energy of light emitted from the conversion material 30. Correspondingly, the wavelength range of the light absorbed by the conversion material 30 may be scattered to an alternate wavelength range of light emitted from the conversion material 30. If a light absorbed by the conversion material 30 undergoes significant scattering, the corresponding emitted light may be a low energy light within a wide wavelength range. Substantial scattering characteristics may be definitive of a wide production conversion coating. Conversely, if the light absorbed by the conversion material undergoes minimal scattering, the corresponding emitted light may be a low energy light within a narrow wavelength range. Minimal scattering characteristics may be definitive of a narrow production conversion material. A person of skill in the art will appreciate alternative energy conversions wherein an anti-Stokes shift may occur.

Due to the directional nature of the energy shift performed by a conversion material 30, the energy of the source light 42 may be converted in one direction to the converted light 46. In application, a light emitting semiconductor device 40 may emit illuminating light 44 to be converted by the conversion material 30 into a higher energy light via an anti-Stokes shift. However, as the conversion material 30 may receive environmental light 48, an additional anti-Stokes conversion may occur prior to being sensed by the light emitting semiconductor device 40. This difference may be detected and compensated by the controller 61.

In an embodiment of the lighting system 10 according to the present invention, a plurality of conversion materials may be located adjacent to the one or more light emitting semiconductor device 40 to generate a desired output color or chromaticity. For example, a plurality of phosphors and/or quantum dots may be used that are capable of generating green, blue, and/or red converted light 46. When these conversion materials are located adjacent to one or more light emitting semiconductor device 40, which may be included in an array 39, the materials produce a converted light 46 in the converted wavelength range of the corresponding conversion material 30.

A person of skill in the art will appreciate chromaticity to objectively relate to the color quality of a light, independent from the quantity of its luminance. Additionally, skilled artisans will appreciate that chromaticity may be determined by a plurality of factors, including hue and saturation. The chromaticity of a color may be further characterized by the purity of the color as taken together with its dominant and complimentary wavelength components.

In an additional embodiment of the lighting system 10 according to the present invention, one or more conversion material 30 may be located adjacent light emitting semiconductor devices to generate a desired output color or chromaticity. In an additional embodiment of the present invention, the desired chromaticity may define a non-saturated color.

For example, and without limitation, a plurality of phosphors and/or quantum dots may be used that are capable of converting a high energy source light 42, which may include a high concentration of light in the ultraviolet to blue wavelength ranges, into a lower energy converted light 46, which may include a high concentration of light in the yellow to red wavelength ranges. When the converted light 46 is combined with the unconverted source light 42, white light may be formed. This white light may then be directed in the desired output direction.

For clarity, the following non-limiting example is provided wherein a single light emitting semiconductor device 40 may be located adjacent to a yellow conversion material 30. A person of skill in the art will appreciate that any number of light emitting semiconductor devices may be included within the wavelength conversion device 10, according to embodiments of the present invention, and the present example is provided without limiting the wavelength conversion device 10 to a single light emitting semiconductor device 40. The yellow conversion material may include a yellow emitting silicate phosphor material. More specifically, as an example, the yellow emitting silicate phosphor may include an ortho-silicate phosphor material, which may be doped with rare earth materials. The light emitting semiconductor device 40 may be a blue LED. The yellow emitting silicate conversion material may be evenly distributed on the surface of, or in the bulk material located adjacent to, the light emitting semiconductor device 40. A uniform distribution of the conversion material 30 may result in the uniform conversion of a blue source light 42 into yellow converted light 46, which may produce white light when combined with the unconverted source light 42.

The creation of white converted light may be accomplished by combining the converted light 46 with the source light 42. The converted light 46 may be within a converted wavelength range, including a high intensity of light defined within the visible spectrum by long wavelengths, such as red light. The source light 42 may be within a source wavelength range, including a high intensity of light defined within the visible spectrum by short wavelengths, such as blue light. By combining the light defined by short and long wavelength ranges within the visible spectrum, such as blue and red light, respectively, a substantially white light may be produced. A person of skill in the art will appreciate the non-uniform location of a conversion material 30 adjacent to the light emitting semiconductor device 40 to be included within embodiments of the present invention.

The preceding example, depicting a yellow emitting silicate conversion material is not intended to be limiting in any way. Instead, the description for the preceding example has been provided for illustrative purposes. A skilled artisan will appreciate that any wavelength range and, therefore, any corresponding color, may be produced by a conversion material 30 and remain within the scope of embodiments of the present invention. Thus, the lighting system 10 discussed herein, is not intended to be limited by the preceding example.

A non-limiting example of an anti-Stokes shift is now provided wherein a single infrared light emitting semiconductor device 40 may be located adjacent to an anti-Stokes conversion material 30, such as yttrium III oxide europium phosphor (Y₂O₃:Eu), for example. A person of skill in the art will appreciate that any number of light emitting semiconductor devices may be included within the wavelength conversion device 10, according to embodiments of the present invention, and the present example is provided without limiting the wavelength conversion device 10 to a single light emitting semiconductor device 40.

The light emitting semiconductor device 40 may be an infrared LED, which may emit photons of low energy light. The anti-Stokes conversion material may be evenly distributed on the surface of, or in the bulk material located adjacent to, the light emitting semiconductor device 40. A uniform distribution of the conversion material 30 may result in the uniform conversion of an infrared source light 42 into visible converted light 46. As discussed above, the anti-Stokes conversion material may combine two or more photons absorbed from the infrared source light to create and emit the visible converted light 46. A person of skill in the art will appreciate the non-uniform location of a conversion material 30 adjacent to the light emitting semiconductor device 40 to be included within embodiments of the present invention.

The preceding examples are not intended to be limiting in any way. Instead, the descriptions for the preceding examples have been provided for illustrative purposes. A skilled artisan will appreciate that any wavelength range and, therefore, any corresponding color, may be produced by a conversion material 30 applied located adjacent to a color conversion optic and remain within the scope of embodiments of the present invention. Thus, the lighting system 10 discussed herein, is not intended to be limited by the preceding example. A person of skill in the art will additionally appreciate that the wavelength conversion operation discussed above may be performed in applications wherein the source light 42 is an environmental light 46, and wherein the converted light 46 is sensed by sensor, such as a photodiode or light emitting semiconductor device 40.

In an embodiment of the present invention, wherein the array of light emitting semiconductor devices may include a plurality of light emitting semiconductor devices, one or more light emitting semiconductor devices may emit or sense light of varying wavelength ranges. More specifically, various light emitting semiconductor devices included in the array may have differing light sensitivity properties, allowing the emission or sensing of various wavelengths of light. The varying sensitivities may be accomplished by including light emitting semiconductor devices with different semiconductor structures. A non-limiting example of an array 39 including a plurality of light emitting semiconductor devices may include ultraviolet, blue, green, red, infrared, and/or white LEDs, along with any combination of the aforementioned LEDs with an adjacently located conversion material 30 to further modify or expand the range of sensitivity to one or more wavelengths of light.

According to an embodiment of the present invention, the light emitting semiconductor devices may acquire and process data from an actively driven semiconductor, such as an LED, to determine certain characteristics of environmental light 48 received by the light emitting semiconductor device 40. The environmental light 48 may include natural (solar) light, light emitted by any type of light sources (LED, incandescent, fluorescent, etc.), and/or light reflection from some environmental object within the field of view of the LED,

Although light emitting semiconductor devices, for example, LEDs, are designed to operate as light emitters, they are capable of detecting incident light and producing an output voltage dependent on the intensity and the wavelength of such incident light. The efficiency of an light emitting semiconductor device as a light detector may not be as good as that achieved by a dedicated sensor, such as a photodiode or a phototransistor, however, light emitting semiconductor devices can provide enough sensitivity to allow them to be used as photodetectors for a plurality of applications consistent with the scope of the present invention.

Referring now additionally to FIG. 3X, a non-limiting example will now be discussed that includes conversion materials to convert the source light 42 into converted light 46 of various colors. In the interest of clarity, only three conversion materials will be discussed in this example. However, a person of skill in the art will appreciate that any number of conversion materials may be included adjacent to the light emitting semiconductor devices to modify the wavelengths of light emitted or sensed by the lighting system 10.

In this example, the conversion materials 30G, 30R, and 30B are adjacently located to each of the light emitting semiconductor devices. These conversion materials may or may not be evenly distributed, as will be appreciated by a skilled artisan. In an array 39 with even distribution, the conversion material 30 may provide uniform emission or sensing of converted light 46, since the green conversion material 30G, blue conversion material 30B, and red conversion material 30R may occupy approximately the same proportionate ratio array of light emitting semiconductor devices. A person of skill in the art will appreciate that a non-uniform distribution of green conversion materials 30G, blue conversion materials 30B, and red conversion materials 30R are contemplated by embodiments of the present invention, as such a configuration may be demanded by the desired application of the lighting system 10.

A person of skill in the art, after having the benefit of this disclosure, will appreciate that conversion materials that produce light in a wavelength range other than green, blue, and red may be located adjacent to one or more light emitting semiconductor devices, and therefore would be included within embodiments of the present invention. A skilled artisan will additionally realize that any number of conversion materials capable of producing converted light 46 of various converted wavelength ranges and corresponding colors may be applied to the light emitting semiconductor devices and still be included within the scope of this disclosure,

The preceding example, depicting three discrete conversion materials, is not intended to be limiting in any way. Instead, the disclosure of the preceding example has been provided for illustrative purposes, solely as a non limiting example. A skilled artisan will appreciate that any wavelength range and, therefore, any corresponding color, may be produced by a conversion material 30 applied to a conversion material 30 located adjacent to the light emitting semiconductor device 40 to be included within the scope of embodiments of the present invention.

In an additional example of varying conversion material being located adjacent to light emitting semiconductor devices included in the array 39, an anti-Stokes conversion material may be included adjacent to one or more infrared light emitting semiconductor devices to emit light in a visible wavelength range. Additionally, an anti-Stokes conversion material may be included adjacent to, for example, a blue light emitting semiconductor device to sense an environmental light including wavelengths that are longer the wavelength emitted by the blue light emitting semiconductor device. Skilled artisans will appreciate that an anti-Stokes phosphor may be used with additional and differing light sources, including light emitting semiconductor devices 40, such as, for example, red or green LEDs.

A person of skill in the art, after having the benefit of this disclosure, will appreciate that conversion materials, which may be applied to the directly or located adjacent to light emitting semiconductor devices, which may be included in an array 39, may produce light in a wavelength range other than ultraviolet, blue, green, red, and infrared are intended to be included within embodiments of the present invention. A skill artisan will additionally realize that any number of conversion materials, which may be capable of producing converted light 46 of various converted wavelength ranges and corresponding colors, may be located adjacent to the light emitting semiconductor devices of the lighting system 10 according to embodiments of the present invention.

In an additional embodiment of the lighting system 10 of the present invention, source light 42 may be converted by the conversion material 30 into a converted light 46 with an organic wavelength range, or wavelength range that triggers psychological cues within the human brain. This wavelength range may include a selective portion of the source light 42. These organic wavelength ranges may include one or more wavelength ranges that trigger positive psychological responses. As a result, the brain may affect the production of neurological chemicals, such as, for example, by inducing or suppressing the production of melatonin. The psychological responses may be similar to those realized in response to natural light or sunlight.

A person of skill in the art will appreciate that the lighting system 10, according to an embodiment of the present invention, may receive a source light 42 that is monochromatic, bichromatic, or polychromatic. A monochromatic light is a light that may include one wavelength range. A bichromatic light is a light that includes two wavelength ranges that may be derived from one or two light sources. A polychromatic light is a light that may include a plurality of wavelength ranges, which may be derived from one or more light sources. Preferably, the lighting system 10, according to an embodiment of the present invention, may include a monochromatic light, but a person of skill in the art will appreciate bichromatic and polychromatic light sources 40 to be included within the scope of embodiments of the present invention.

The power available at the output of a light emitting semiconductor device 40 may be significantly lower than the power used to drive the same. Therefore, in order to acquire data while maintaining an acceptable signal-to-noise ratio, the sensing of environmental light to collect data, which may subsequently be processed by a controller 61, may be simplified by being performed while the light emitting semiconductor device is un-energized, or in other words, not emitting illuminating light 44.

Additionally, the high, impedance presented by the light emitting semiconductor device 40 acting as a source requires the data collection circuitry to present high impedance as well. This means that the light emitting semiconductor device 40 may effectively have to be removed from the driving circuitry while the data collection is taking place to prevent other circuitry from loading the output of the light emitting semiconductor device 40, thus reducing the effective impedance. The switching of the light emitting semiconductor device 40 between a driving circuit 53 and a sensing circuit 51 will be discussed in greater detail below.

The data collection window can be as short as several hundred nanoseconds, and as long as tens of microseconds depending on the characteristics of the LEDs used in the circuitry of the lighting system 10. A short period where the light emitting semiconductor device 40 is not energized may not be noticeable to the human eye, and is a common occurrence when driving light emitting semiconductor devices in lighting applications, as will be understood by ski/led artisans.

Data collection intervals may vary depending on the application and the resolution required by the particular application. Typical embodiments will have sampling windows at intervals ranging from once every few tens of microseconds up to once every few milliseconds. The number of samples with a sampling window can be as small as one (for cases where only intensity information is required), or of a plurality of samples when rise time information is needed. In the case where multiple samples are required, the sampling rate should be fast enough to provide an acceptable measurement of the rise time. Sampling rates within a sampling window will typically range in the 0.1 to 10 MS/s depending on the width of the sampling window and the expected rise time of the LED's output voltage.

The lighting system 10, according to an embodiment of the present invention, may include one or more sensors, such as, for example and without limitation, photodiodes. Photodiodes may be defined as electronic components that may create a current or voltage when exposed to light. This conversion of light into electrical power 49 may be known as the photoelectric effect, which will be described below.

As a photon, the elementary particle of light, may engage the photodiode 41, an electron may be excited by the engagement. The excited electron may thus flow in the forward direction of the diode, creating a hole at its original location. A hole will be understood by a person of skill in the art to be defined as the lack of an electron at a position where the electron could exist within an atomic lattice. Correspondingly, a new electron may be accepted to replace the excited, removed electron flowing in the forward direction of the diode, filling the hole. The new electrons may be continually accepted by the atomic lattice to fill the holes left by excited electrons, resulting in a flow of electrons.

As the flow of electrons may continue, electrons may collect at the cathode of the photodiode 41. Correspondingly, the holes may collect at the anode of the photodiode 41. Due to the movement of electrons, a photocurrent may be produced flowing from the anode to the cathode. Also, as the flow of photocurrent may be restricted, a voltage may build due to the photovoltaic effect. As these processes continue, the voltage may be measured to determine the quantity of light sensed by the photodiode 41. Additionally, when connected to a controller 61, which will be discussed in greater detail below, the values of light sensed by the photodiode 41 over time may be processed by the controller 61 to analyze the environment. The results of this analysis may be used to control the light emitting semiconductor devices included in the lighting system 10.

The lighting system 10 may additionally use the photodiodes to generate electrical power. The photodiodes may be adapted to generating electrical power from the radiation included in the environmental light 48. A photodiode 41 may be a light emitting semiconductor device 40. Skilled artisans will appreciate that power generated by the photodiodes would be proportional to the area of the photodiodes 41, the array 39 in which the photodiodes 41 may be included, and the intensity of the incident environmental light 48.

The photodiodes may optionally include an antireflective coating, such as silicon nitride, to increase the amount of light received by the photodiode 41. A person of skill in the art will appreciate that the use of photodiode 41 within this disclosure is not intended to limit the sensing of light in any way. Accordingly, the discussion of photodiodes is provided as an illustrative embodiment of the lighting device 10 of the present invention.

In the interest of clarity, the following discussion of using light emitting semiconductor devices as photodiodes will be focused on using a light emitting diode (LED) as the light emitting semiconductor device 40. A person of skill in the art will appreciate that the discussion of LEDs is not intended to impose any limitations on the scope of the light emitting semiconductor device 40. LEDs are typically diodes that are doped with materials that result in the emission of light. As will be appreciated by skilled artisans, the doping that occurs to create a LED is substantially similar to the doping required to create a photodiode 41. As a result, LEDs may be used to sense light when they replace a dedicated photodiode 41 in a light sensing circuit. However, some differences may exists, as will be appreciated by skilled artisans, such as the ration of voltage to current produced as the amount of sensed environmental light 48 may vary.

Typically, LEDs are capable of sensing light with shorter wavelengths than the light emitted by the LED. For example, a green LED would typically be sensitive to green, blue, and ultraviolet light. As an additional example, an infrared LED may be sensitive to a wavelength range including all visible light. To increase effective range of an LED configured to sense environmental light 48, an embodiment may include an infrared LED in the sensing circuit of the lighting system 10 of the present invention. However, some differences may exist, as will be appreciated by skilled artisans, such as the ratio of voltage to current produced as the amount of sensed environmental light may vary.

An illustrative embodiment wherein one or more light emitting semiconductor devices operate between an emitting operation and a sensing operation will now be discussed. In this embodiment, the light emitting semiconductor device 40 may be connected to a driving circuit 53 and a sensing circuit 51. A driving circuit 53 may include any circuit that may be appreciated by a skilled artisan to drive a light emitting semiconductor device 40. For a light emitting semiconductor device 40 to operate in the emitting operation, the light emitting semiconductor device 40 may be included in the driving circuit 53. A sensing circuit 51 may include any circuit appreciated by a skilled artisan that may use a photodiode 41 to sense the presence of light in an environment. For a light emitting semiconductor device 40 to operate in the sensing operation, the light emitting semiconductor device 40 may be included in the sensing circuit 51,

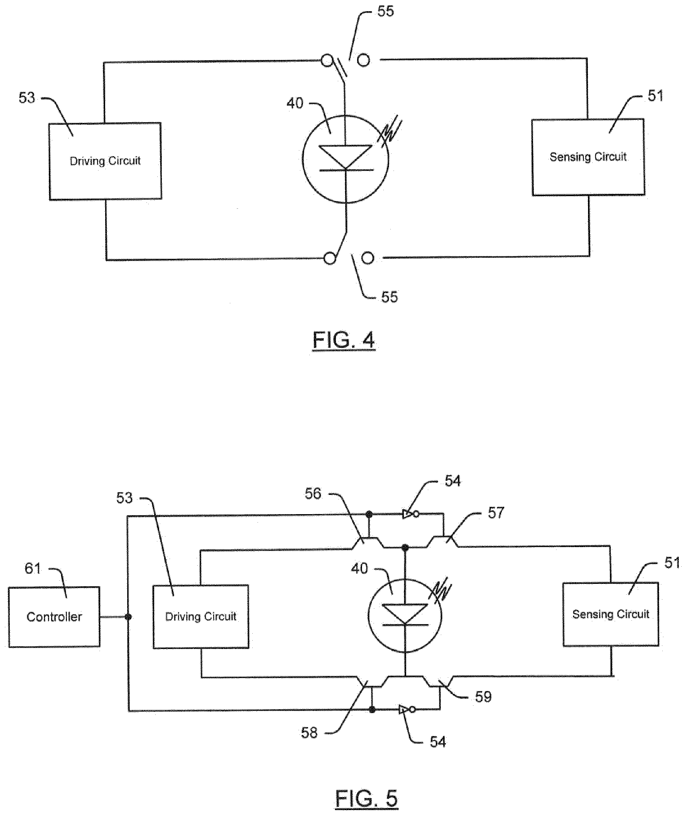

The light emitting semiconductor device 40 may be configured such that operation may be switched between an emitting operation and a sensing operation. The operation of the light emitting semiconductor device 40 may be switched by a switching circuit. Referring now to FIG. 4, an illustrative embodiment of a switching circuit will now be discussed. In this embodiment, the light emitting semiconductor device 40 may be connected to a plurality of switches 55. The switches 55 may be controlled, for example, by a controller 61 (FIG. 6) to switch the light emitting semiconductor device 40 between the driving circuit 53 and the sensing circuit 51, which may correspond with the active and inactive portions of the duty cycle. The switches 55 used in the example illustrated in FIG. 4 may be any switch that would be known within the art.

In an additional embodiment, as illustrated in FIG. 5, switching transistors 56-59 may be used to control the engagement of the light emitting semiconductor device 40 between the driving circuit 53 and the sensing circuit 51. The switching transistors 56-59 may be operatively connected to, and driven by, the controller 61 (FIG. 6). A person of skill in the art will appreciate a plurality of configurations in which switching transistors 56-59 may be included in the switching circuit to control the operation of the light emitting semiconductor device 40.

The embodiment of the switching circuit illustrated in FIG. 5 includes two anode switching transistors 56, 57 connected to the anode of the light emitting semiconductor device 40. The controller 61 may be connected to the first anode switching transistor 56 to control whether the anode of the light emitting semiconductor device 40 is connected to the driving circuit 53. The controller 61 may additionally be connected to the second anode switching transistor 57 to control whether the anode of the light emitting semiconductor device 40 is connected to the sensing circuit 51.

An inverter 54 may be connected to the first anode switching transistor 56 and the second anode switching transistor 57. The inverter 54 may invert the control signal supplied to the first anode switching transistor 56, causing the second anode switching transistor 57 to operate opposite to the first anode switching transistor 56. For example, when the first anode switching transistor 56 is closed, allowing current to flow across the transistor 56, the second anode switching transistor 57 may be opened to prohibit the flow of current.

The controller 61 may be additionally connected to the first cathode switching transistor 58 to control whether the cathode of the light emitting semiconductor device 40 is connected to the sensing circuit 51. The controller 61 may additionally be connected to the second cathode switching transistor 59 to control whether the cathode of the light emitting semiconductor device 40 is connected to the sensing circuit 51.

An inverter 54 may be connected to the first cathode switching transistor 58 and the second cathode switching transistor 59. The inverter 54 may invert the control signal supplied to the first cathode switching transistor 58, causing the second cathode switching transistor 59 to operate opposite the first cathode switching transistor 58. For example, when the first cathode switching transistor 58 is closed, allowing current to flow across the transistor 58, the second cathode switching transistor 59 may be opened to prohibit the flow of current.

By including a switching circuit in between the light emitting semiconductor device 40, the driving circuit 53, and the sensing circuit 51, the lighting system 10 may advantageously reduce or eliminate loading voltages that may otherwise interfere with the sensing operation performed by the light emitting semiconductor device 40. A person of skill in the art will appreciate additional embodiments that may include one or more dedicated photodiode 41 or light emitting semiconductor device 40 that persistently detects environmental light 48. Since the dedicated photodiode 41 or light emitting semiconductor device 40 may not emit light, it may not be required to be connected to a driving circuit 53. Additionally, a dedicated light sensing component may not need to be switched out of the circuit when not performing a sensing operation.

In the discussion of the following embodiments, a photodiode 41 will be understood by skilled artisans to include dedicated photodiodes and light emitting semiconductor devices operating to sense environmental light 48. A person of skill in the art will appreciate that the aforementioned definition of a photodiode 41, as it may apply to the present embodiment, is not intended to be limiting. In an embodiment of the present invention, a plurality of photodiodes may be configured in an array 39. The configuration of photodiodes may be similar to the configuration of light emitting semiconductor devices discussed above. Skilled artisans will appreciate that, wherein the photodiodes are light emitting semiconductor devices that also emit illuminating light 44, the array of photodiodes may be the same component as the array of light emitting semiconductor devices.

The photodiodes may detect environmental light 48 from an environment in which it is located. Since a plurality of photodiodes may be included in an array of photodiodes, environmental light 48 may be sensed from a plurality of points. Additionally, wherein multiple types of light emitting semiconductor devices are included in the array 39, the array 39 may emit, and therefore sense, differing wavelength ranges of light. Each wavelength range corresponding with a light emitting semiconductor device 40 may include a dominant wavelength range. Each photodiode 41 included in the array 39 may transmit the sensed level of environmental light 48 to a controller 61 to be analyzed,

As discussed above, one or more infrared light emitting semiconductor devices maybe included in the sensing circuit 51 to detect substantially the full wavelength range of visible light. Additionally, one or more light emitting semiconductor devices, for example and without limitation, a blue light emitting semiconductor device, which does not emit infrared light, and therefore may not typically detect substantially the full wavelength range of visible light, may be included in the sensing circuit 51. A plurality of light emitting semiconductor devices with sensitivity to differing wavelength ranges may be included in an array 39.

The blue light emitting semiconductor device may include an adjacently located conversion material 30 to convert the emitted blue illuminating light, which may be defined as the source light 42 within a blue source wavelength range in this example, into a converted light 46 defined within a converted wavelength range. The converted light 46 may appear as a different color. The conversion material 30 may additionally perform a color conversion operation to convert the environmental light 48 prior to being received by the photodiode 41, which may be an LED. To expand the wavelength range of light that may be sensed by the LED, the conversion material 30 may receive the environmental light 48 as the source light 42 included within the source wavelength range. The conversion material 30 may perform an anti-Stokes shift to the source light 42, emitting a converted light 46 within a converted wavelength range defined by wavelengths that are longer than the source wavelength range. By performing the aforementioned color conversion using the conversion material 30, the wavelength range of light that may be sense by an LED, which may be configured in a sensing circuit 51, may be effectively increased.

Referring now to FIG. 6, an embodiment of the lighting system 10 of the present invention may include a controller 61 to selectively control operation of the light emitting semiconductor devices. The controller 61 may include a processor or CPU 62, memory 64, and an I/O interface 66, which may be communicatively connected via a bus 68. The CPU 62 may be configured to receive a data signal from additional components of the lighting system 10, for example without limitation, via the I/O interface 66. The controller may optionally be connected to a power supply 65.

The CPU 62 may compute and perform calculations to data received by the additional components, such as the light emitting semiconductor devices, photodiodes, or other input devices. As a non-limiting example, the CPU 62 may receive a signal regarding the level of environmental light 48 sensed by a photodiode 41. The CPU 62 may then analyze the signal to determine what has been sensed by the photodiode 41. The CPU 62 may additionally control the duty cycle of the light emitting semiconductor device 40 to effectively control the operation of the lighting system 10. An illustrative example may include the controller 61 receiving a signal from the photodiode 41, or sensing light emitting semiconductor device, that the environment is dark. The controller 61 may then increase the active portion of the duty cycle, resulting in increased illumination being generated by the lighting system 10, according to an embodiment of the present invention.

The controller 61 may also include memory 64. The memory 64 may include volatile and non-volatile memory modules. Volatile memory modules may include random access memory, which may temporarily store data and code being accessed by the CPU 62. The non-volatile memory 64 may include flash based memory, which may store the computerized program that may be operated on the CPU 62. The memory 64 may also include a log of sensory data received by the lighting system 10, or a communicatively connected lighting system 10, according to an embodiment of the present invention.

Additionally, the memory 64 may include the computerized code used by the CPU 62 to control the operation of the lighting system 10. The memory 64 may also store feedback information related to the operation of additional components included in the lighting system 10. In an embodiment of the present invention, the memory 64 may include an operating system, which may additionally include applications that may be run within the operating system, which will be appreciated by a person of skill in the art.

The controller 61 may also include an I/O interface 66. The I/O interface 66 may control the receipt and transmission of data between the controller 61 and additional components. Provided as a non-limiting example, the I/O interface 66 may receive a lighting routine program from a user.

The controller 61 may additionally be connected to one or more light emitting semiconductor devices. The controller 61 may control the operation of the light emitting semiconductor device 40 between a plurality of operations, including, but not limited to, an emitting operation and a sensing operation. The controller 61 may optionally be connected to a dedicated photodiode 41, which may persistently remain in the sensing operation.

As previously discussed, the controller 61 may receive an input signal from the connected light emitting semiconductor device 40 and/or photodiode 41 including information regarding the sensed environmental light 48. The controller 61 may analyze the signal to control the operation of the lighting system 10. At times, the controller 61 may receive a signal that with less than optimal clarity. The controller 61 may perform one or more signal processing operations to clarify or modify the received input signal. Such signal processing operations may include, but should not be limited to, noise reduction, deconvolution, detecting the direction from which the light is received, or other signal processing operations that would be apparent to a skilled artisan. The signal processing operations may be performed by dedicated signal processing hardware and/or digital filters performed as software operation by the controller 61.

The sensitivity of a light emitting semiconductor device 40 to an incident light excitation, which may be caused by receiving the environmental light 48, exhibits a dependence on the wavelength of the incident light. Furthermore, the rise time of the output of a light emitting semiconductor device 40 may also vary with the wavelength of the incident light. Data collection can be implemented to include fast sampling of the output of the light emitting semiconductor device 40 such that rise times may be measured substantially accurately. The relationship between rise time and the stable signal can provide information about light intensity and predominant wavelengths of the source. For instance, one implementation could use a 10-90% rise time or a 20-80% rise time to estimate the wavelength of the sensed environmental light 48, while the remaining 80% or the 90% value may be used to estimate the intensity of the incident light.

Digital signal processing algorithms may be readily implemented in an existing processor 62, which may be included in the controller 61, within a lighting system 10, according to an embodiment of the present invention. These algorithms may be used to process the signals acquired by the data collection circuitry of the sensing circuit 51.

An embodiment may include computerized methods to remove noise such as, for example, but not meant to be limiting, background noise, from the sensed environmental light 48. Such background noise may include, but should not be limited to, 120 Hz flickering from external light sources. Illustrative computerized methods to remove the noise may include, but should not be limited to, digital narrow band filter tuned at 60 Hz, a digital comb filter at 60 Hz and harmonics, a digital matched filter with fixed characteristics, and/or a digital adaptive match filter for time-varying light conditions.

Additionally, computerized methods may be performed by the controller 61 to remove low-frequency varying light, such as sunlight and/or varying cloudiness. Such computerized methods may include, but should not be limited to, implementing a digital high pass filter and/or a digital bandpass filter. Furthermore, the controller 61 may process the sensed environmental light 48 to identify fast-varying light changes, such as changes caused by people walking by or lights turning on/off, as a non-limiting example,

The controller 61 may additionally be configured to calculate the rise time of the source of interest, with or without background noise removal. As a non-limiting example, the aforementioned rise time calculation may be performed on 10-90% or 20-80% rise times. Another signal processing operation performed by the controller 61 may include calculating the peak intensity of the signal of interest. Alternatively, the peak intensity may be calculated after one or more noise component has been removed.

Furthermore, the controller 61 may perform a signal processing operation to estimate the peak wavelength of the signal of interest. The aforementioned peak wavelength signal calculation may be based on the characteristics of the LEDs, the intensity of the incoming light, and/or the rise time. Additionally, cross-correlation techniques may be used to characterize wave shape of the environmental light 48 sensed by the lighting system 10. A person of skill in the art will appreciate additional conditions that may be used to calculate the peak wavelength of the sensed environmental light 48 to be included within the scope of the present invention.

In an embodiment of the present invention, the lighting system 10 of the present invention may include a network interface 67. A person of skill in the art will appreciate that the network interface 67 may be included within the controller 61 discussed above. Alternately, a skilled artisan will appreciate that the network interface 67 may be operatively connected to the controller 61, wherein it may operate as an interface device between the controller 61 and a connected network 69, such as for example, a home or corporate network.

The network interface 67 may provide a channel for the electronic communication of data between the lighting system 10 and a network connected device. Provided without the intent to be limiting, examples of network connected devices may include personal computers, tablets, smartphones, personal data assistants, or other electronic devices capable of connecting to a network 69.

The network interface 67 may connect to a network 69 via a proprietary or standard connection protocol. With respect to embodiments of the present invention that include a proprietary network connection, the network interface 67 may perform handshake operations and exchange data with network connected devices, as may be defined within the proprietary protocol. Alternately, the network interface 67 may connect to a network 69 via a standardized protocol. Examples of standardized protocols, provided without the intent to be limiting, may include IrDA, 802.3 Ethernet, 802.11 Wi-Fi, 802.15.1 Bluetooth, 802.15.4 low rate personal area network (PAN) environments, packet switching wide area networks (WAN), cellular relay WANs, ring networks, daisy chain networks, or additional standardized data transmission protocols,

As discussed above, according to an embodiment of the present invention, the lighting system 10 may be configured to communicate with additional devices. The lighting system 10 may include a radio logic board and an antenna to communicate with additional devices using radio frequencies. Alternately, the lighting system 10 may include one or more infrared lighting emitting semiconductors which may transmit and/or receive data using an infrared standard such as IrDA. In an additional embodiment, the lighting system 10 may communicate with additional devices by transmitting data to be included within visible light.

A lighting system 10 may communicate with one or more additional lighting systems over the network 69. In an embodiment, the lighting systems and additional devices may be connected over the network 69 by using a centralized hub or router. In an additional embodiment, each device on the network 69 may be included in a network of nodes, for example, and without limitation a neural network. Each node may operate as a master and a slave. Additionally, each node may act as a repeater to expand the range of the network 69.

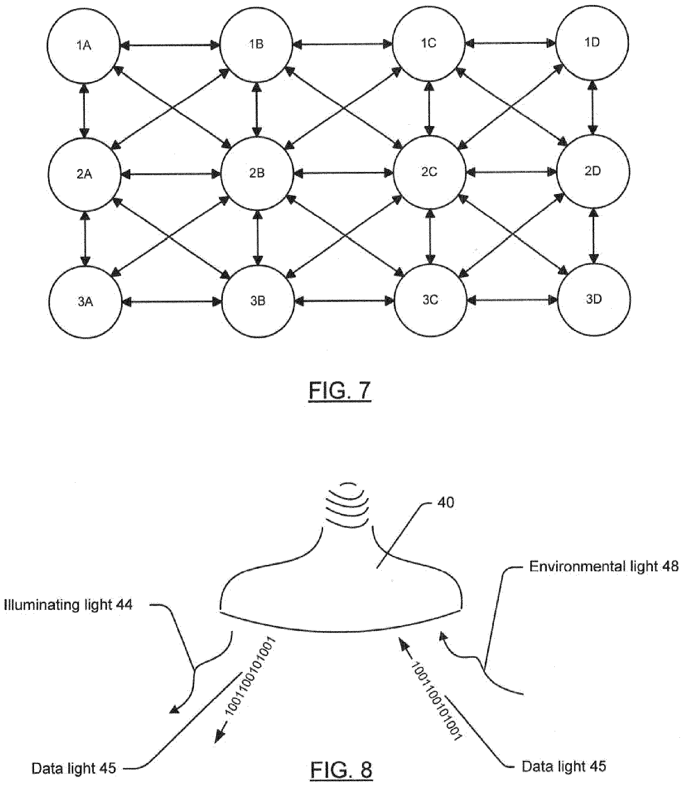

Referring now to FIG. 7, an illustrative embodiment to a node-based neural network will now be discussed. In this embodiment a plurality of nodes may be positioned within communication range of additional nodes. As additional nodes are added to the neural network, the range of the network 69 may be expanded. In the neural network illustrated by FIG. 7, each node may communicate with its neighboring nodes by sending and receive data directly with one another. For example, Node 2A may transmit a direct data communication as a master to be received by Node 2B as a slave. This data communication may not require involving additional nodes. However, additional nodes may still receive the data communication, analyze any information included therein, and disregard any message to which the additional node is not an intended recipient.

In an additional embodiment, nodes may be configured to repeat messages that are addressed to another node. For example, Node 2A may intend to transmit a data communication as a master to Node 1C as a slave. Node 2A may broadcast the data transmission, even though Node 1C is out of range to receive the transmission. However, the data may be received by Node 2B as a slave, which may be in range of Node 2A. After analyzing the data transmission, Node 2A may determine that it is an unintended recipient. Node 2B may then retransmit the data communication as the master, which may now be received by Node 1C as the slave, since Node 1C may now be in range of the transmitting master node,

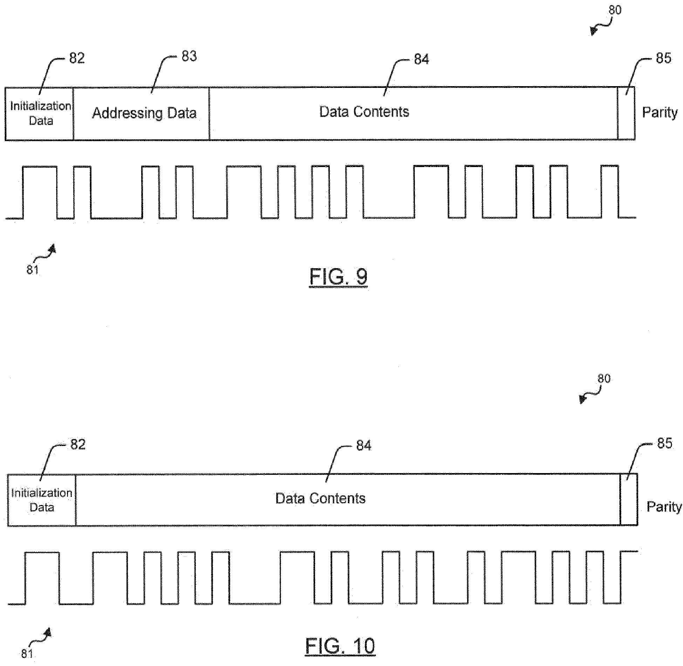

Additionally, the controller 61 at each node may include memory 64. The memory 64 of the node may maintain at least a partial log of data communication 80 that have been transmitted, received, and or rebroadcast by the node. In this embodiment, upon receipt of a data communication 80 (FIGS. 9-12), the controller 81 of a node may then access the memory 64 to compare the data included therein with the received data. The controller 61 of the node may then make a logic based decision as a result of the analysis. An example of such a logic based decision may include declining to rebroadcast a data communication 80 that has already been rebroadcast by the node. An additional example of a logic based decision may include broadcasting a confirmation signal to a transmitting master node, such as node 3B, indicating that the data transmission has been received from Node 3C. In this example, the Node 3C transmitting the data communication as a master node may receive the confirmation signal from Node 3B as a slave node. Node 3C may then analyze the confirmation signal to make a logic based decision to terminate further transmission of the original data communication 80.

Referring back to FIG. 1, and additionally to FIG. 8, an embodiment of the present invention wherein the lighting device may communicate with additional devices by sending and receiving light will now be discussed. More specifically, the present embodiment will be discussed with regard to transmitting data using visible light. However a person of skill in the art will appreciate that data could be transmitted over virtually any electromagnetic wavelength, as it may be included in the scope of the present invention.

Data light may be transmitted from a lighting device as modulated pulses of data light 45. The data light may include data encoded in the light through a modulation technique that would be apparent to skilled artisans, such as pulse width modulation (PWM). The controller 61 may integrate the data light 45 into illuminating light 44 to be transmitted from the lighting device to another device. Similarly, the controller 61 may detect data light 45 integrated into environmental light 48, which may be processed by the controller 61 to extract the data included therein. A person of skill in the art will appreciate additional protocols and operations to integrate the data light 45 with the illuminating light 44 emitted by a light emitting semiconductor device 40.

Additionally, in an embodiment of the present invention, the data included in the data light 45 may be secured using data encryption. Skilled artisans will appreciate a plethora of encryption methods that may be used to restrict access to the data.

Preferably, the data light 45 is modulated at a rate that is substantially faster than can be perceived by humans or other living organisms. The speed at which the data light 45 may be modulated is dependent on switching speed of the electronic components included in the lighting system 10, according to an embodiment of the present invention. In an embodiment wherein data is transmitted digitally using data light 45, each clock cycle may theoretically carry one bit of data. As the time to switch PWM modulation between a logical high and a logical low decreases, the data rate increases. This relationship may be calculated by applying the following formula: (FREQUENCY)=1/(SWITCHING TIME). For example, if the lighting system 10 requires five nanoseconds to switch between a logical high and a logical low, assuming one bit of data may be transmitted on every cycle, the maximum data throughput may be two megabits per second (200 Mbps).

The following examples illustrate a number of embodiments to include data light 45 within the illuminating light 44. A person of skill in the art will appreciate that the following examples are included in the interest of clarity, and are not intended to be limiting in any way. Skilled artisans will additionally appreciate that, although the examples are given assuming that data is transmitted by modulating the data light 45 using PWM, any additional protocol of transmitting data, many of which have been discussed within this disclosure, are to be included within the scope of the present invention.

Referring now to FIGS. 9-12, a number of embodiments illustrating the inclusion of a data communication 80 in data light 45 will now be discussed. The data communication may include various segments of data, which may include instructions for a receiving device to perform a specific action or information to be received and analyzed by a receiving device. As discussed above, the receiving device may be, for example, a slave node in a neural network. The data communication 80 may include initialization data 82, addressing data 83, data contents 84, error detection bit or parity data 85, or additional forms of data that would be appreciated by skilled artisans,

Initialization data 82 may alert additional devices included in the network 69 that data in data contents 84 are about to be transmitted. Addressing data 83 may specify one or more devices in the network 69 that are intended to receive the data communication 80. Data contents 84 may include the substantive data that is being transmitted in the data communication 80. The illustrated error detection bit, such as a parity 85, may include one or more bits, or other segments of data, to verify that the data communication 80 has been received correctly, as will be understood by skilled artisans. Additional forms of data may be included in the data communication 80, as will be appreciated by a person of skill in the art.

The following examples are by no means intended to omit the scope of the present invention to the organization of data communications described therein. Skilled artisans will appreciate a plethora of additional data communication 80 structures capable of transmitting data to a receiving device consistent with the present invention, to be included herein. Additionally, as will be appreciated by a person of skill in the art, digitally transferred data may be included as bits, nibbles, bytes, and other lengths of ones and zeros that may convey the data communication 80. In the interest of clarity, the number of bits included in each type of data has been shortened in the examples below. Additionally, example bits may be used to illustrate a model data transmission 80. These example bits are only provided for illustrative purposes, and would very likely be replaced with actual substantive bits upon the transmission of a data communication 80 from one device to another. Skilled artisans will not view this shortening of bits, or use of example bits, as limitations.

Referring first to the example data communication illustrated in FIG. 9, the data communication 80 may begin by transmitting initialization data 82. As shown by the PWM waveform 81, the initialization data 82 may be "0110." The example data communication 80 may next include addressing data 83, to signify the intended recipient of the transmitted data communication 80. As shown by the PWM waveform 81, the addressing data 83 may be "10001010." Next, the data contents 84 may be transmitted to provide the substantive of the data communication 80. As shown by the PWM waveform 81, the data contents 84 may be "0110101010001101 00101001." Finally, the example communication may include an error detection bit, such as, for example, a parity bit or checksum, to verify that the data has been properly transmitted. As shown by the PWM waveform 81, the parity bit may be set to "0."

Referring next to the example data communication 80 illustrated in FIG. 10, the data communication 80 may begin by transmitting initialization data. As shown by the PWM waveform 81, the initialization data 82 may be "0110." The example data communication 80 illustrated in FIG. 10 may broadcast the data to all receiving devices within range, and thus not include addressing data 83 to signify an intended recipient of the transmitted data communication 80. The data contents 84 may be transmitted to provide the substantive of the data communication. As shown by the PWM waveform 81, the data contents 84 may be "011010101000110100101001 01101010." Finally, the example communication may include an error detection bit, such as, for example, a parity bit or checksum, to verify that the data has been properly transmitted. As shown by the PWM waveform 81, the parity bit may be set to "1."

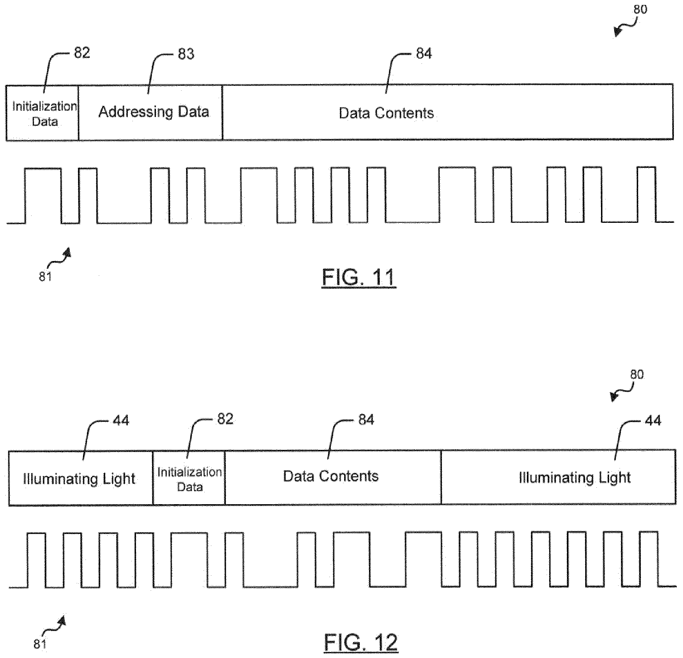

Referring additionally to the example data communication 80 illustrated in FIG. 11, the data communication 80 may begin by transmitting initialization data 82. As shown by the PWM waveform 81, the initialization data 82 may be "0110," The example data communication 80 may next include addressing data 83, to signify the intended recipient of the transmitted data communication 80. As shown by the PWM waveform 81, the addressing data 83 may be "10001010." Next, the data contents 84 may be transmitted to provide the substantive of the data communication 80. As shown by the PWM waveform 81, the data contents 84 may be "0110101010001101 00101001." However, the example communication may require or include an error detection bit,

Referring first to the example data communication 80 illustrated in FIG. 12, the data communication 80 may begin by emitting illuminating light 44 that does not include data light 45. In the present example, the illuminating light 44 may be represented by the PWM waveform 81 of alternating logical high and low values. To begin transmitting a data communication 80, the lighting system 10 may transmit initialization data 82. As shown by the PWM waveform 81, the initialization data 82 may be "0110." The example data communication 80 illustrated in FIG. 12 may broadcast the data to all receiving devices within range, and thus not include addressing data 83 to signify an intended recipient of the transmitted data communication 80. Next, the data contents 84 may be transmitted to provide the substantive of the data communication. As shown by the PWM waveform 81 the data contents 84 may be "100010110011." The present example is not shown to include an error detection bit. Finally, the example communication may resume emitting the illuminating light 44.

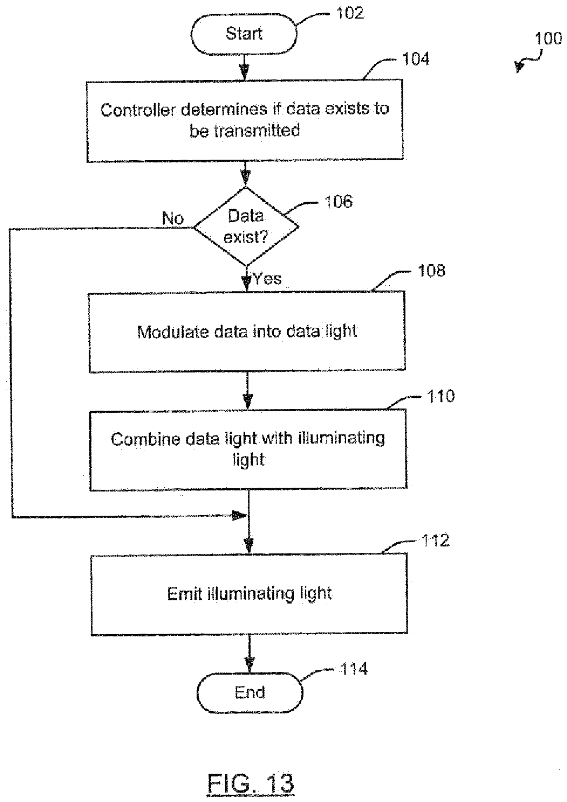

Referring now to flowchart 100 of FIG. 13, an illustrative method for transmitting data using data light 45 will now be discussed. Starting at Block 102, the controller 16 may determine if data exists to be transmitted (Block 104). The controller 16 may access the memory 64, check a flag, or perform another operation to determine whether data should be transmitted. If it is determined that no data exists to be transferred at Block 106, the lighting system 10 may continue emitting illuminating light 44 (Block 112). If the controller 61 determines that data exists to be transferred at Block 106, the controller 61 may modulate the data into the data light 45 (Block 108. Next, the controller 16 may combine the data light 45 with the illumination light 44 (Block 110). The lighting system 10 may then emit the illuminating light 44 (Block 112). The operation may then terminate at Block 114.

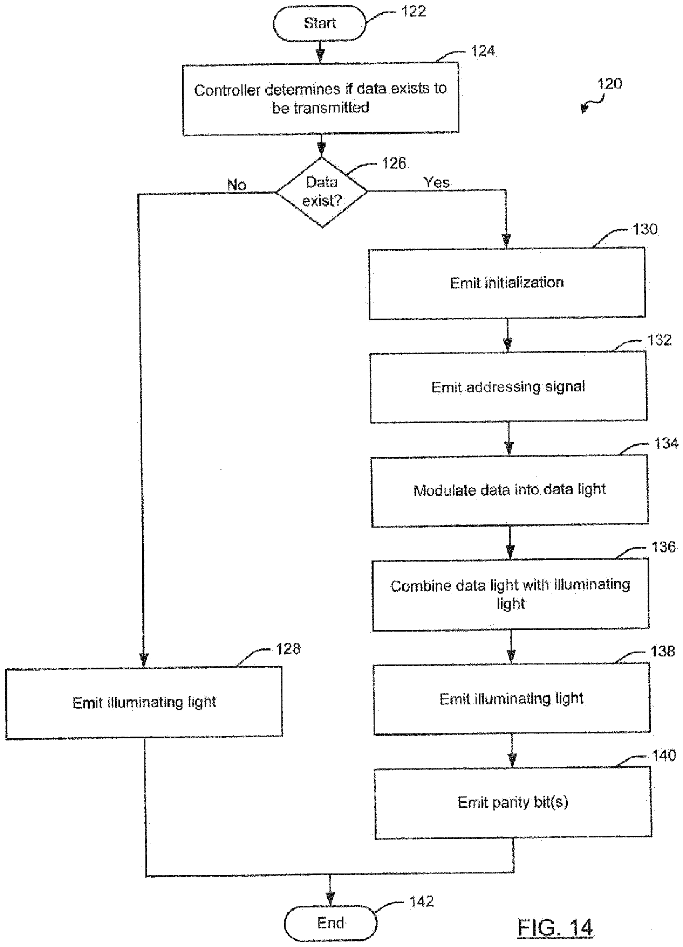

Referring now to flowchart 120 of FIG. 14, an additional illustrative method for transmitting data using data light 45 will now be discussed. Starting at Block 122, the controller 61 may determine if data exists to be transmitted (Block 124. The controller 61 may access the memory 64, check a flag, or perform another operation to determine whether data should be transmitted. If it is determined that no data exists to transfer at Block 126, the lighting system 10 may continue emitting illuminating light 44 (Block 128), after which the operation may terminate at Block 142.

If the controller 61 determines that data exists to be transferred at Block 126, the controller 61 may control the lighting system 10 to emit initialization data 82 (Block 130). The lighting system 10 may next emit addressing data 83 to indicate an intended recipient (Block 132). The controller 61 may next modulate the data communication 80 into data light 45 (Block 134). The data light 45 may then be combined with the illuminating light 44 (Block 136). The lighting system 10 may emit the illuminating light 44 at Block 138, which may include the data light 45. Once the data communication 80 has been transmitted, the lighting system 10 may emit one or more parity bit (Block 140). The operation may then terminate at Block 142.

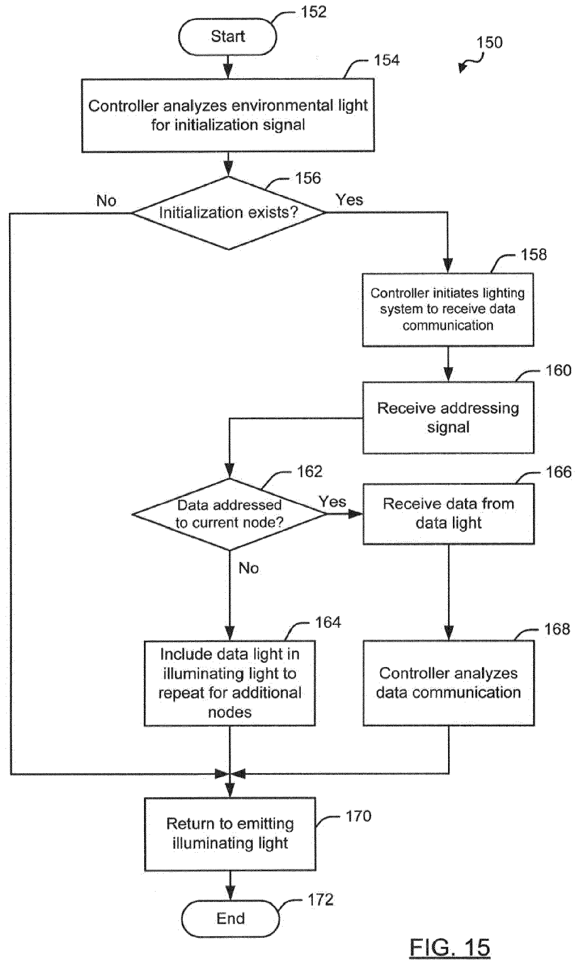

Referring now to flowchart 150 of FIG. 15, an illustrative operation for receiving a data communication 80 using data light 45 will now be discussed. Starting at Block 152, the controller 61 may analyze the environmental light 48 for initialization data 82 (Block 154). If it is determined at Block 156 that no initialization signal exists in the environmental light 48, the lighting system 10 may continue emitting illuminating light 44 (Block 170), after which the operation may terminate at Block 172.

If the controller 61 determines that initialization data 82 exists at Block 156, the controller 61 may initiate the lighting system 10 to receive a data communication 80 (Block 158). The initialization may include preparing registers, altering patterns of emitting illuminating light 44, or shifting the duty of emitting illuminating light 44 to additional light emitting semiconductor devices included in the light system 10. The lighting system 10 may next receive an addressing signal at Block 160. As discussed above, the addressing signal may indicate a device by which the data communication 80 is intended to be received.

The controller 61 may next determine whether the data communication 80 is addressed to the current node or device (Block 162). If the data communication 80 includes addressing data 83 that indicates a different device or node, the receiving node may include the data light 45 in subsequently emitted illuminating light 44 to repeat the data communication 60 for additional nodes (Block 164). By repeating the data communication 80, the receiving node, to which the data communication 80 may not have been intended, may rebroadcast the data communication 80 cover an extended area that may not have been accessible by the node from which the data communication 80 may have originated.

If it is determined that the addressing data 83 indicates the current node at Block 162, the lighting system 10 at that node may receive the data communication 80 from the data light 45 (Block 166). The controller 61 may then analyze the data communication 80 (Block 168). The controller 61 may additionally store at least part of the data communication 80 in the memory 64. After the data communication 80 has been processed, the lighting system 10 may return to emitting illuminating light 44 (Block 170). The operation may then terminate at Block 172.

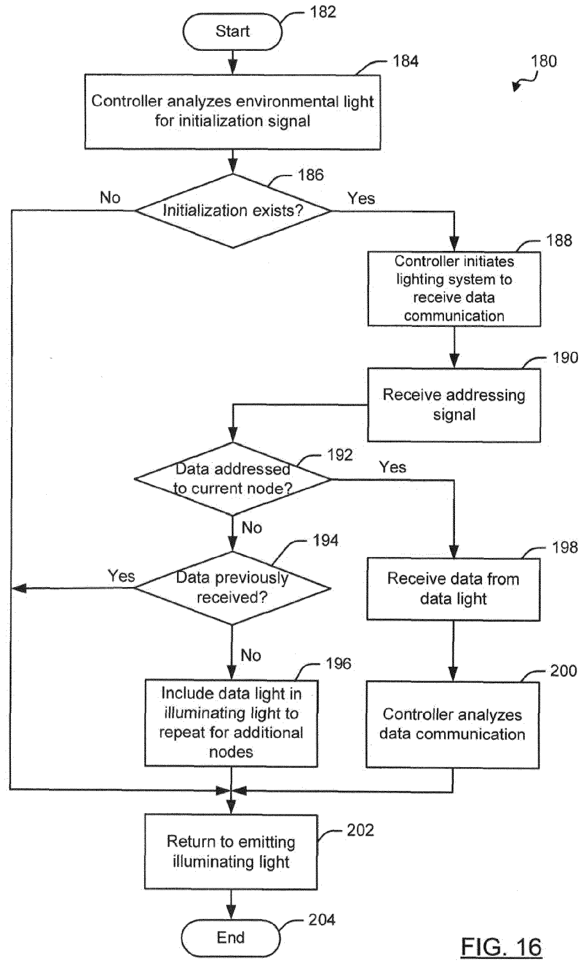

Referring now to flowchart 180 of FIG. 16, an illustrative operation for receiving and repeating a data communication 80 using data light 45 will now be discussed. Starting at Block 182, the controller 61 may analyze the environmental light 48 for initialization data 82 (Block 184). If it is determined at Block 186 that no initialization signal exists in the environmental light 48, the lighting system 10 may continue emitting illuminating light 44 (Block 202), after which the operation may terminate at Block 204.

If the controller 61 determines that initialization data 82 exists at Block 186, the controller 61 may initiate the lighting system 10 to receive a data communication 80 (Block 188). The initialization may include preparing registers, altering patterns of emitting illuminating light 44, or shifting the duty of emitting illuminating light 44 to additional light emitting semiconductor devices included in the lighting system 10. The lighting system 10 may next receive an addressing signal at Block 190. As discussed above, the addressing signal may indicate a device by which the data communication 80 is intended to be received.

The controller 61 may next determine whether the data communication 80 is addressed to the current node or device (Block 192). If the data communication 80 includes addressing data 83 that indicates a different device or node, the receiving node may next determine whether the data communication 80 has been previously received by the current node (Block 194). If the data communication 80 has been previously received, the lighting system 10 may abstain from retransmitting the data communication 80 by returning to emitting illuminating light 44 (Block 202). Alternatively, if the controller 61 determines that the data communication 80 has not been previously received at Block 194, the receiving node may include the data light 45 in subsequently emitted illuminating light 44 to repeat the data communication 80 for additional nodes (Block 196). By repeating the data communication 80, the receiving node, to which the data communication 80 may not have been intended, may rebroadcast the data communication 80 cover an extended area that may not have been accessible by the node from which the data communication 80 may have originated.

If it is determined that the addressing data 83 indicates the current node at Block 192, the lighting system 10 at that node may receive the data communication 80 from the data light 45 (Block 198). The controller 16 may then analyze the data communication 80 (Block 200). The controller 61 may additionally store at least part of the data communication 80 in the memory 64. After the data communication 80 has been processed, the lighting system 10 may return to emitting illuminating light 44 (Block 202). The operation may then terminate at Block 204.

The pattern recognition operations, as performed by an embodiment of the lighting system 61 of the present invention, will now be discussed. A person of skill in the art will appreciate that the following illustrative embodiments are provided as non-limiting examples of pattern recognition operations. Skilled artisans will additionally appreciate many additional pattern recognition operations that would be apparent after having the benefit of this disclosure.

The environmental conditions may be sensed by the lighting system 10, according to an embodiment of the present invention, by sensing the environmental light 48 by the light emitting semiconductor device 40 of the lighting system 10. The environmental condition may then be transmitted to the controller 61 as data to be analyzed. The controller 61 may analyze data received from a single light emitting semiconductor device 40 or from a plurality of light emitting semiconductor devices. The data may then be concatenated to allow further analysis of the information included in the collective data. As an example, the plurality of light emitting semiconductor devices may be included in an array. As an additional example, the plurality of light emitting semiconductor devices may be communicatively connected across a plurality of nodes, which may be included in a neural network.

For the following description, a neural network is defined to include one or more nodes, including one or more controllers and light emitting semiconductor devices, communicatively connected to distribute data sensing and processing operations across the network of nodes. A neural network may sense the occurrence of an event or condition in the network. A neural network may also be trained to recognize various objects. Moreover, the neural network may distinguish one or more objects from another object possessing similar, but not identical, characteristics.

The training method performed on the neural network to recognize objects and conditions may be done using various techniques. For example, one of the embodiments can include the use of back propagation of gradient-descent computed error corrections for weights and biases. Examples of operations to configure the controller 61 to perform error correction using machine learning may include feed forwarding of the input training pattern, computing the associated error between computed outputs and training vector outputs, back propagating the associated errors, and adjusting weights and biases. Skilled artisans will appreciate that the list of steps to train a neural network, or other component of the lighting system 61 that utilizes machine learning or similar process, is not intended to be exhaustive. Additional steps may be performed by the neural network consistent with the present invention, and are intended to be included within the disclosure of the same.

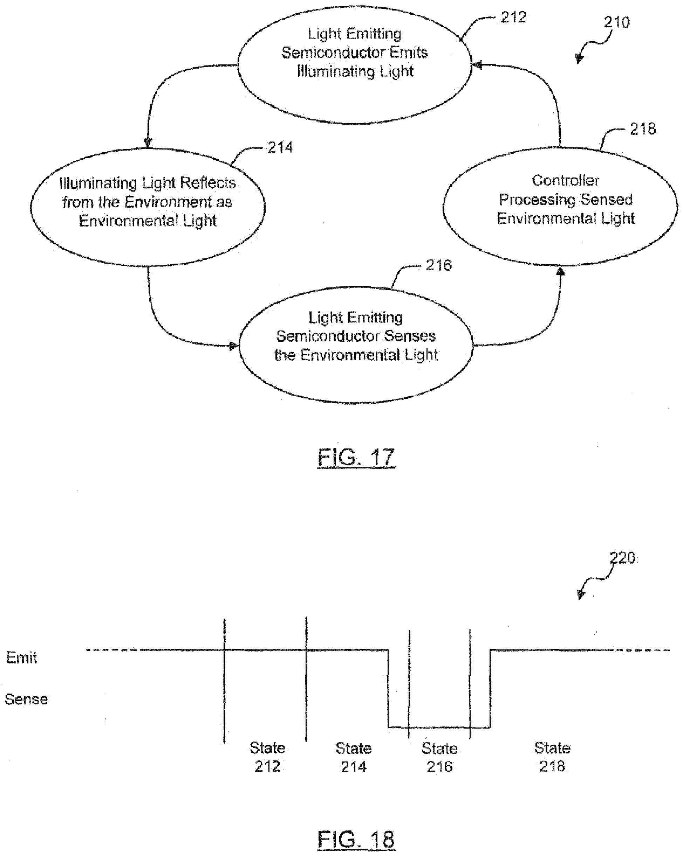

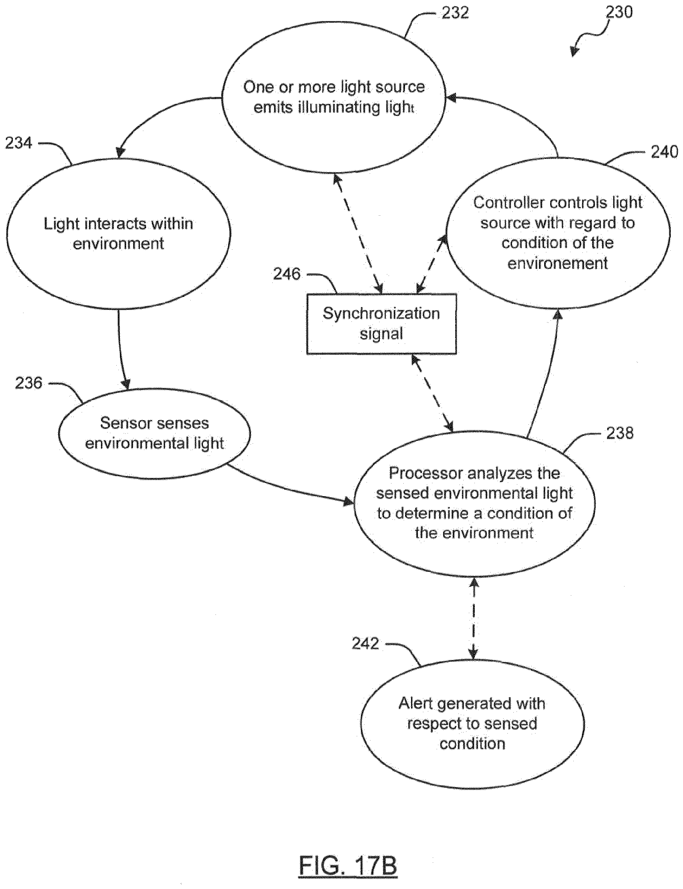

Referring now to the state diagram 210 of FIG. 17, an illustrative modulation cycle of a light emitting semiconductor device 40 will now be discussed. Additionally, referring to the timing diagram of 220 of FIG. 18, a graphical chart 220 of switching the light emitting semiconductor device 40 between the emitting operation and the sensing operation will now be discussed. In the interest of simplicity, the light emitting semiconductor device 40 may be discussed as emitting illuminating light 44 and sensing environmental light 48. However, it should be understood by a person of skill in the art that the lighting system 10 may additionally include a dedicated photodiode 41, which may additionally and/or exclusively sense environmental light 48.

The operation illustrated in the state diagram 210 may begin by the light emitting semiconductor device 40 emitting an illuminating light 44 into an environment (State 212), which is represented by the chart 220 as engaging in the emitting operation. The illuminating light 44 may then reflect from the environment as environmental light 48 (State 214), which is additionally represented by the chart 220 as engaging in the emitting operation. Skilled artisans will appreciate that additional light may be generated or reflected from the environment, which should be included within the definition of environmental light 48. Examples of additional light may include sunlight, artificial light, and light generated by additional devices intended to communicate with the lighting system 10, according to an embodiment of the present invention.

Looking to State 216, the lighting emitting semiconductor 40 may sense the environmental light 48 received from the environment. Referring additionally to the chart 220, prior to entering the operation described by State 216, the light emitting semiconductor device 40 may switch into a sensing operation. Similarly, after sensing the environmental light 48, as performed in State 216, the light emitting semiconductor device 40 may switch back into the emitting operation. The controller 61 of the lighting system 10 may then begin processing the environmental light 48 at State 218. Once the processing has been initiated, the light emitting semiconductor device 40 of the lighting device 10 may return to the operation of State 212, wherein it may again emit illuminating light 44.

Referring now to the state diagram 230 of FIG. 17B, an additional illustrative embodiment of the aforementioned example will now be discussed. The example illustrated by state diagram 230 may sense environmental light 48, which may be analyzed by a controller 61 to control subsequent emission of illuminating light 44. Alternately, the example illustrated in state diagram 230 may sense environmental light 48, which may be analyzed by a controller 61 to generate an alert, with or without controlling the subsequent emission of illuminating light 44. A person of skill in the art will appreciate that the following illustrative operation is provided as an example only, and is not intended to limit the present invention.

Starting at State 232, one or more light source may emit illuminating light 44. The light source may be a light emitting semiconductor device 40. The illuminating light 44 may then interact with the environment, which interaction may include being reflected by the environment (State 234). The sensor may then sense the environmental light 48 (State 236). The sensor may be a light emitting semiconductor device 40.

The processor 62, which may be included in the controller 61, may analyze the sensed environmental light 48 to determine a condition of the environment (State 238). If a condition is determined, an alert may optionally be generated with respect to the sensed condition (State 242). The condition that may trigger an alert may be statically or dynamically defined. After the operation of State 238, the controller 61 may control the light source with regard to the condition of the environment (State 240). After performing the operation of State 240, the operation of state diagram 230 may return to State 232, which may restart the cycle of states. Optionally, a synchronization signal 246 may be used to synchronize operation of the States 232, 238, and 240.

A person of skill in the art will appreciate one or more of the preceding states may be performed substantially simultaneously with another state. For example, after sensing the environmental light 48 at State 216, the lighting system 10 may substantially simultaneously enter State 216 and 212, wherein the controller 61 may analyze the sensed environmental light 48 as the light emitting semiconductor device 40 switches to emitting an illumination light 44. As such, skilled artisans will not view the preceding example as imposing any limitation on the operative states of the lighting system 10, according to an embodiment of the present invention,

The controller 61 may include one or more threshold values, to which it may compare the sensed environmental light 48. As the controller 61 analyzes the environmental light 48, it may determine whether the level of environmental light 48 is above or below one or more threshold value. The controller 61 may then increase or decrease the amount of illuminating light 44 emitted by the light emitting semiconductor device 40 as a result of the aforementioned analysis. The level of light may be controlled, for example, by controlling the duty cycle of one or more light emitting semiconductor device 40.

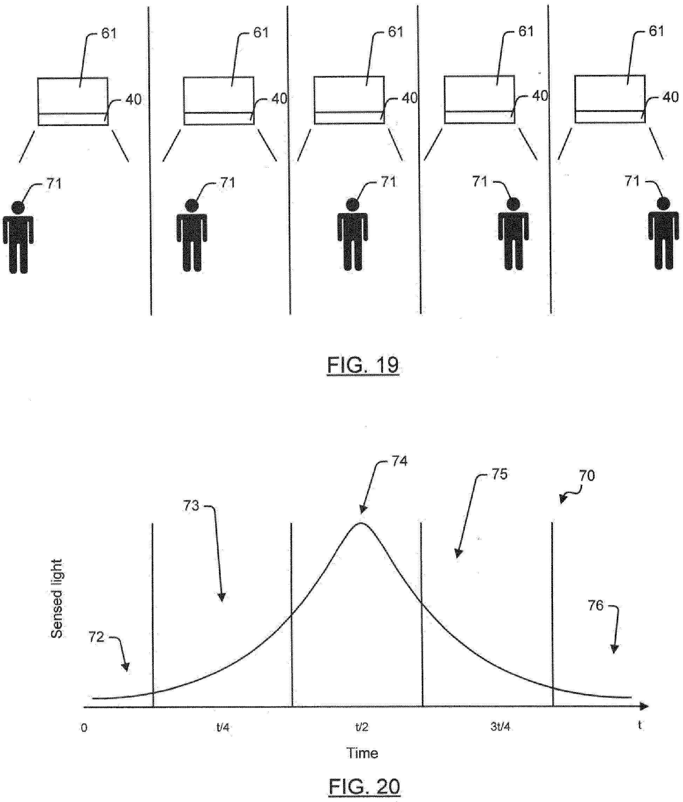

Referring now to FIGS. 19-20, a non-limiting example for sensing varying light intensities will now be discussed. By sensing the varying intensity of light, the lighting device 10 may approximate motion in the environment. FIG. 19 illustrates a series of events that may occur in an environment. The events illustrated in FIG. 19 may correlate with the relative intensity of environmental light 48 sensed by the lighting system 10. FIG. 20 provides a chart 70 that illustrates the relative intensity of environmental light 48 sensed by the lighting system 10 corresponding with time. The events of FIG. 19 are indicated on the light intensity curve of the chart 70 included in FIG. 20.

Starting at Event 72, an object 71 may be in the peripheral range of the lighting system 10, which may be represented by the relatively low intensity of light on the chart 70. As the object moves closer to the lighting system 10, such as may occur t Event 73, the intensity of environmental light 48 sensed by the lighting system 10 may begin to increase. The increase of sensed light may be caused by an increased amount of light being reflected from the object 71 in the environment.

As the object may move directly in line with the lighting system 10, as illustrated by Event 74, it may reflect a substantial amount of environmental light 48. The substantial amount of environmental light 48 may then be sensed by the light emitting semiconductor device 40 of the lighting system 10, as illustrated by the chart 70. The object may then move away from the lighting system 10, as illustrated by Event 75, resulting in a decreased amount of environmental light 48 being sensed by the lighting system 10. The object may then move to the peripheral range of the lighting system 10, as shown by Event 76 and which may be represented by the relatively low intensity of light on the chart 70.

Referring back to FIGS. 2-3, the lighting system 10, according to an embodiment of the present invention, may include a plurality of light emitting semiconductor devices configured in an array 39. The array of light emitting semiconductor devices may be operatively connected to a controller 61, which may control each light emitting semiconductor device 40 in the array 39 to emit illuminating light 44 and/or sense environmental light 48. The following examples are included to discuss simplified embodiments of the lighting system 10 of the present invention, in the interest of clarity. Skilled artisans will appreciate that the discussions provided below may be extended to a larger scale, which may provide additional functionality.

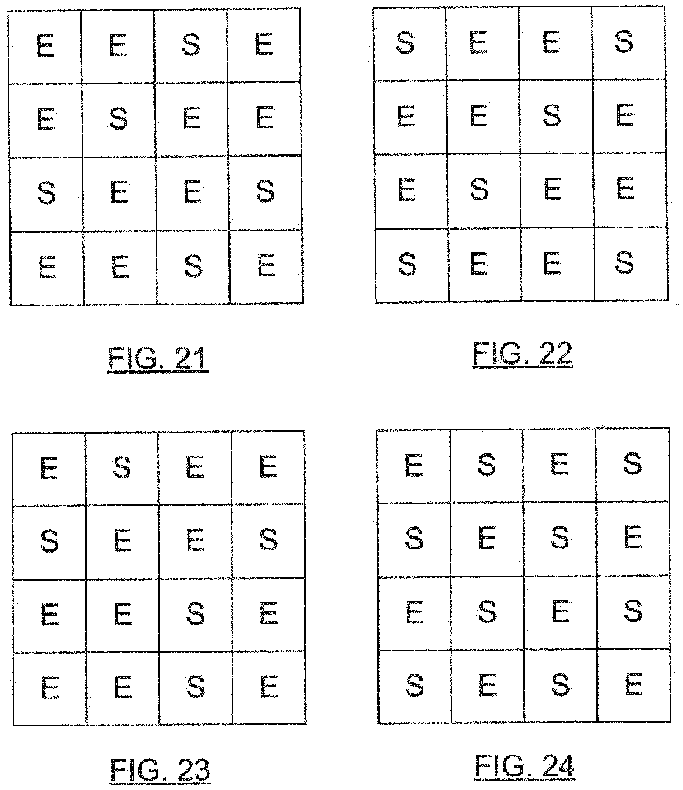

Referring now to FIG. 21-24, an illustrative switching operation will now be discussed. Starting with FIG. 21, an array 39 is presented with a plurality of light emitting semiconductor devices emitting illuminating light 44, as indicated by the symbol "E," and sensing environmental light 48, as indicated by the symbol "S." In this embodiment, the controller 61 may maintain the configuration of "E" and "S" light emitting semiconductor devices for a given period, such as, for example, a number of nanoseconds. After the duration of the period ends, the controller 61 may switch the operation of one or more light emitting semiconductor devices, as illustrated in FIGS. 22-23.

When viewed in series of one another, FIGS. 21-23 illustrate a pattern of light emission and sensing. This example pattern is provided for illustrative purposes only, and is not intended to impose any limitations on the lighting system 10 of the present invention. As each period ends, the light emitting semiconductor device 40 to the right may switch its operational state. This operation may repeat until the array cycles through substantially all light emitting semiconductor devices operating to both emit illuminating light 44 and sense environmental light 48.

As illustrated in FIG. 24, an additional embodiment may include staggering the light emitting semiconductor devices in a checkerboard style arrangement, wherein every other light emitting semiconductor device 40 may cycle through the emitting and sensing light. Skilled artisans will appreciate a nearly endless number of additional configurations of light emitting semiconductor devices that are configured to sense and emit light, including selecting the operation mode of the light emitting semiconductor devices, to be included within the scope of the present invention.

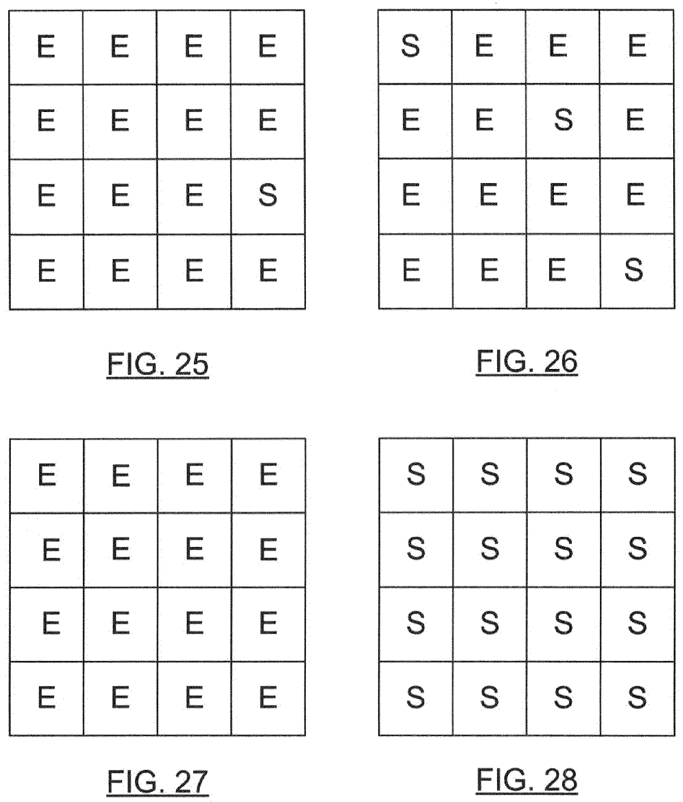

Referring now additionally to FIG. 25, an additional non-limiting example of light emitting semiconductor devices operating in the array 39 will now be discussed. In this example, the amount of illumination required by the lighting system 10 may be substantially greater than the sampling rate required for sensing the environmental light. In this example, all but one light emitting semiconductor device 40 is emitting illuminating light 44. Conversely, a single light emitting semiconductor device 40 may be sensing environmental light 48. The light emitting semiconductor device 40 of the array sensing light may be varied by the controller 61, such that substantially all light emitting semiconductor devices sense environmental light 48 at some period during the operation of the array 39.

Referring now additionally to FIG. 26, an additional non-limiting example of light emitting semiconductor devices operating in the array 39 will now be discussed. In this example, the controller 61 may randomly control the light emitting semiconductor devices between emitting illuminating light 44 and sensing environmental light 48. As the duration of each duty cycle may decrease, or as the number of light emitting semiconductor devices included in the array may increase, the ratio of between emitting and sensing light emitting semiconductor devices may become approximately evenly distributed.

Referring now to FIG. 27 an additional non-limiting example of light emitting semiconductor devices operating in the array 39 will now be discussed. In this example, the controller 61 may selectively enable all the light emitting semiconductor devices to emit illuminating light 44 at a given instant. This total emission operation may allow the lighting system 10 to emit illuminating light 44 with high luminosity. Additionally, this total emission operation may allow the lighting system 10 to transmit data light 45 at high bandwidth. The duration of this total emission operation may be as short as one switching cycle. After the total emission operation ends, the controller 61 may again enable at least one light emitting semiconductor device 40 to sense environmental light 48.

Referring now to FIG. 28 an additional non-limiting example of light emitting semiconductor devices operating in the array will now be discussed. In this example, the controller 61 may selectively enable all the light emitting semiconductor devices to sense environmental light 48 at a given instant. This total sensing operation may allow the lighting system 10 to sense environmental conditions with high precision. Additionally, this total sensing operation may allow the lighting system 10 to receive data light 45 at high bandwidth. The duration of this total sensing operation may be as short as one switching cycle. After the total emission operation ends, the controller 61 may again enable at least one light emitting semiconductor device 40 to emit illuminating light 44.

Light emitting semiconductor devices may be located proximately near one another in an array 39. As a result, light emitting semiconductor devices operating to sense environmental light 48 may consequentially sense at least a part of the illuminating light 44 emitted by its neighboring light emitting semiconductor devices. However, since the light emitting semiconductor devices may detect the change of light in an environment, the additional environmental light may add cumulatively to the illuminating light 44 emitted by the neighboring light emitting semiconductor devices. Through signal processing and filtering, the controller 61 may detect and isolate the illuminating light 44 from the combined light sensed by the light emitting semiconductor device 40 included in the array 39. The environmental light isolation may be performed, for example, buy sensing the changes of light in an environment, and disregarding the static level of light emitted by the neighboring light emitting semiconductor devices. A person of skill in the art will appreciate the application of the aforementioned environmental light isolation which may additionally occur between the various nodes in a neural network of lighting systems. In the neural network, the filtering of environmental light 48 from the illuminating light 44 emitted by additional nodes in the network 69 may be coordinated by transmitting and receiving data communications, as has been discussed above.

By alternating the operation of the light emitting semiconductor devices between emitting and sensing light, a wider area of environmental light 48 may be sensed. Additionally, alternating the light emitting semiconductor devices to emit light may allow for a significantly even distribution pattern of emitted illuminating light. As a wider area of the environment may be sensed, the amount of information that may be gathered from an environment may increase.

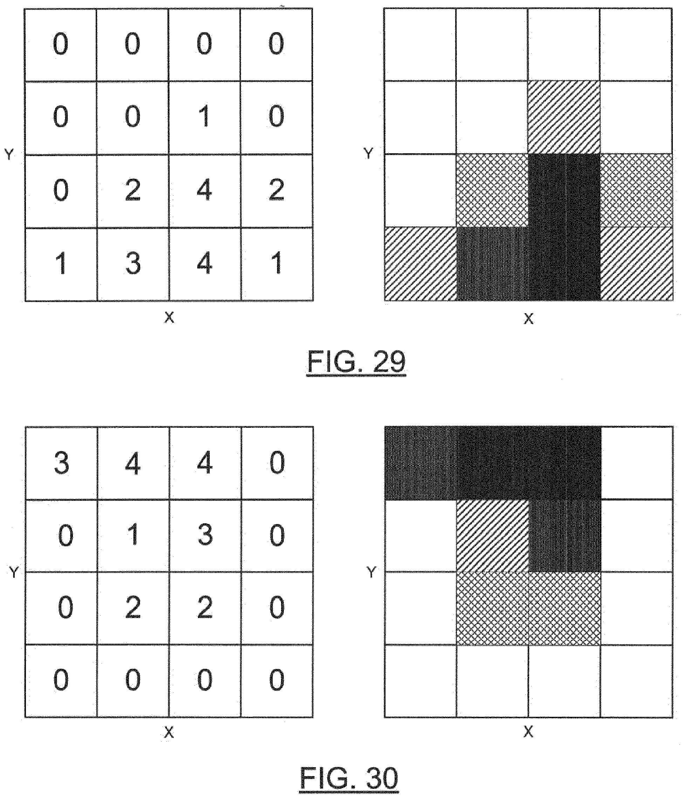

Referring now to FIGS. 29-30, an embodiment of the lighting system 10 of the present invention that may provide motion detection will now be discussed. In the following examples, the controller 61 may be able to distinguish between a plurality of light levels present in an environment. In the interest of clarity, the following examples describe five discrete light levels. However, a person of skill in the art will appreciate that any number of levels may be sensed by the light emitting semiconductor device 40 and analyzed by the controller 61, in accordance with the scope of various embodiments of the present invention.

Additionally, in the following examples, location of the light emitting semiconductor device 40 in the array 39 is indicated in a square grid array using (X, Y) coordinates. The various intensity of light sensed by the light emitting semiconductor device 40 is represented by a scale of zero (0), wherein the light sense may be negligible, to four (4), wherein the light emitting semiconductor device 40 may be saturated with environmental light 46. A person of skill in the art will appreciate that any configuration of arrays, including one-dimensional, two-dimensional, and three-dimensional arrays, may be configured with or without a uniform pattern, and is to be included within the scope of the present invention. In the interest of clarity, a non-limiting assumption will be made that the object is tallest approximately at its center. An additional non-limiting assumption will be made that the lighting system 10 is included in a ceiling mounted lighting fixture.

Referring first to FIG. 29, an object may be located approximately near the bottom center of the area to be sensed by the lighting system 10. Since the tallest point of the object may be located near the object's center, the amount of light reflected from the environment proximate to the object may be greater than other points wherein the object is not present. In the example illustrated by FIG. 29, the light emitting semiconductor device 40 may sense a saturating amount of environmental light 48 from locations (3, 1) and (3, 2), with varying levels of luminosity surrounding the saturated areas. The controller 61 may process the levels sensed by the light emitting semiconductor devices included in the array 39 to determine that an object is present in the field in which the lighting system 10 may sense. The controller 61 may then, for example, control the light emitting semiconductor device 40 to increase the emission of illuminating light 44 as a result of an object being present in the environment.

The lighting system 10 may continue to sample the environment by sensing the luminosity of environmental light 48 present in the environment. Referring now to FIG. 30, a subsequent sensing operation may sense an object located approximately near the top center of the area to be sensed by the lighting system 10. In this subsequent sensing operation, the light emitting semiconductor device 40 may sense a saturating amount of environmental light 48 from locations (2, 4) and (3, 4), with varying levels of luminosity surrounding the saturated areas. The controller 61 may process the levels sensed by the light emitting semiconductor devices included in the array 39 to determine that an object is present in the field in which the lighting system 10 may sense. The controller 61 may additionally determine that the object has substantially relocated since the last sampling period. The relocation of the object between sampling periods may indicate that motion has occurred. The controller 61 may then, for example, control the light emitting semiconductor device 40 to increase the emission of illuminating light 44 as a result of the detected motion in the environment.

A person of skill in the art will appreciate that as an array may include additional light emitting semiconductor devices, or as the array may include repositionable light emitting semiconductor devices, such as those located on a piezoelectric substrate, the number of sampling points from which the light emitting semiconductor device 40 may sense luminosity of light may be increased.

Additionally, as discussed above, nodes included in a network 69, such as a neural network, may collectively communicate with additional nodes. The nodes in a network 69 may share data between one another, or between the nodes and an additional device connected to, or interfacing with, the network 69. As the nodes intercommunicate, the data regarding the sensed light sensed by the light emitting semiconductor devices included in the nodes may be included therein. The data may then be concatenated into a coherent collection of data, allowing the controllers in the network 69 to analyze the data to determine the characteristics of the environment sensed by a substantial portion of the nodes included in the network 69.

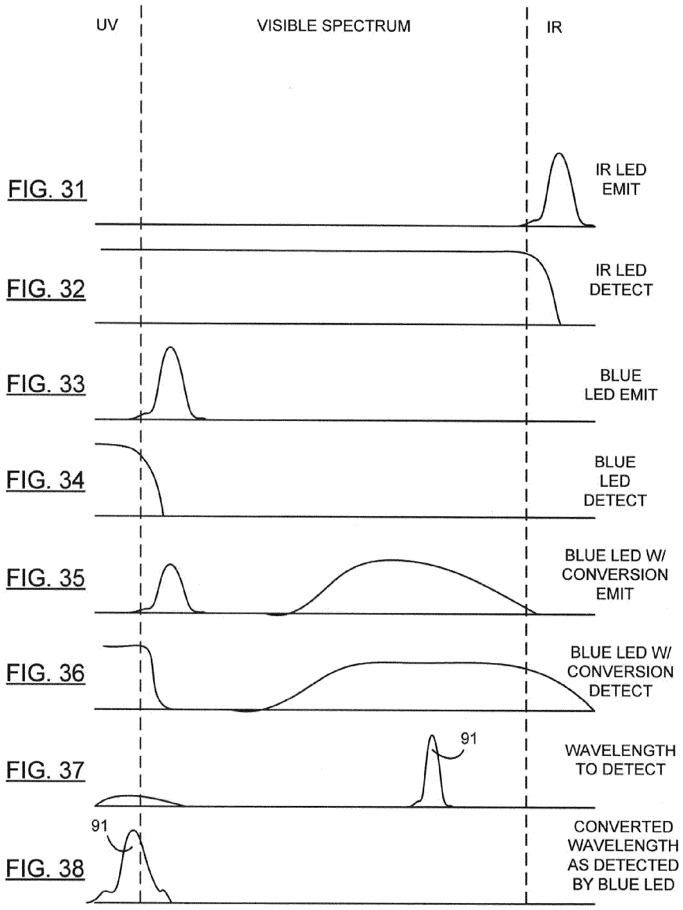

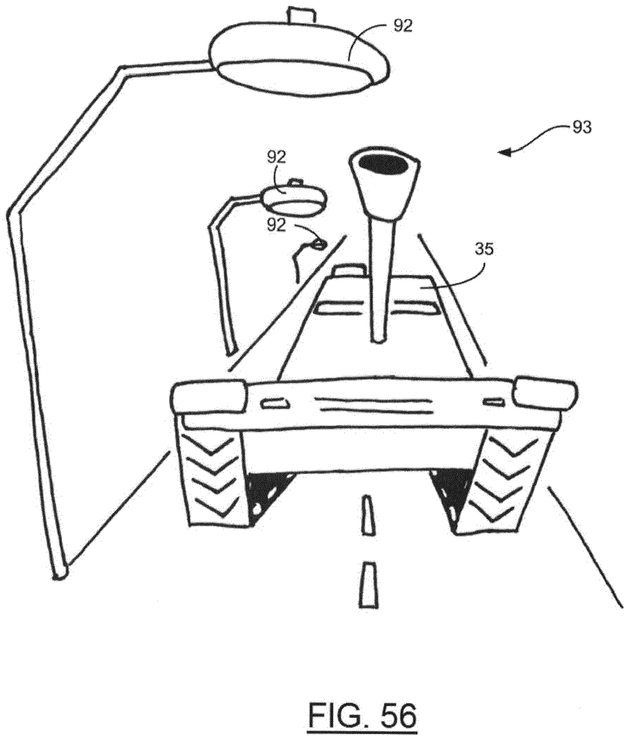

Referring now additionally to FIGS. 31-56, a wavelength sensing lighting system 10, according to an embodiment of the present invention, is now described in greater detail. Throughout this disclosure, the wavelength sensing lighting system 10 may also be referred to as a lighting system 10, system, device, embodiment, or the invention. Alternate references to the wavelength sensing lighting system 10 in this disclosure are not meant to be limiting in any way. A person of skill in the art, after having the benefit of this disclosure, will appreciate that the present invention may include embodiments that perform total, partial, and minimal conversion of a source light 42 into a converted light 46. Additionally, skilled artisans will appreciate that, in embodiments with partial wavelength conversions, the remaining, unconverted source light 42 may be combined with the converted light 46 to be directed in the desired output direction, for example, to illuminate a space or to sense a condition in the environment.

Additionally, in the following disclosure, a light source is disclosed as a component of the lighting system 10, according to an embodiment of the present invention. The light source may be a light emitting semiconductor device 40, which may be referenced throughout the following disclosure. Additionally, a sensor may be discussed to sense environmental light 48. The sensor may be a light source, such as light emitting semiconductor device 40. The light emitting semiconductor device 40 may include, among other devices, a light emitting diode (LED). In embodiments of the present invention, the operation of the sensor may be performed by a light source, such as a light emitting semiconductor device 40. As a result, the light emitting semiconductor device 40 should be assumed to collectively include the light source and the sensor in at least one embodiment of the present invention.

Furthermore, in the following disclosure, a controller 61 may be discussed to analyze the environmental light 48 sensed by the sensor and control the emission of illuminating light 44 by the light source. The sensor and the light source may be a light emitting semiconductor device 40. The controller 61 may collectively include an analysis processor to analyze sensed environmental light 48 and a lighting controller 61 to control emitting illuminating light 44.

The controller 61 may be a computerized device capable of sending, receiving, and analyzing data and electronic signals. The controller 61 may control one or more light source, which may be included in an array 39. However, the functionality of the controller 61 should not be limited to light source controlling operations. The controller 61 may additionally accept and analyze data or electronic signals received from one or more sensor. The controller 61 may perform the operations of both an analysis processor and a lighting controller 61, among numerous other operations that would be apparent to those skilled in the art. Skilled artisans will additionally appreciate that the controller 61 may be described broadly herein as a computerized device to perform computational operations, including processing data.

Skilled artisans will appreciate additional embodiments of a light source, for example, and without limitation, electroluminescent, laser, incandescent, and fluorescent light sources. Although the light source may be discussed in regard to a specific embodiment of a light emitting semiconductor device 40, a person of skill in the art will appreciate that additional light sources may be included with the operation of the various embodiments of the present invention, are intended to be included within the scope of the same. As a result, skilled artisans should not view the use of a light emitting semiconductor device 40 through this disclosure as limiting the scope of the light source.

As previously discussed, a light emitting semiconductor device 40 may be used as a lighting device and/or sensor, which may emit illuminating light 44 and/or detect environmental light 48 from a plurality of directions. More specifically, and without limitation, an LED may be operable as a photodiode in replacement or addition to being a light emitter. LEDs are also capable of detecting incident light and producing an output voltage dependant on the intensity and the wavelength of such incident light. The lighting system 10, according to an embodiment of the present invention, may advantageously be implemented using an LED as a source of light emission and device for light detection, advantageously decreasing the complexity and manufacturing cost of the system 10.

The efficiency of a light emitting semiconductor device 40, such as an LED, operating as a light detecting sensor may not be as good as that achieved by a dedicated sensor, such as a photodiode or a phototransistor. However, light emitting semiconductor devices 40 can provide enough sensitivity to allow their use as photodetectors for a plurality of applications consistent with the scope of the present invention. Typically, if an LED is inserted into an electronic circuit that may normally accept a dedicated photodiode sensor, the LED may perform significantly the same operation as the dedicated photodiode. The LED may be switched between an emitting circuit, detecting circuit, and any other circuit, as it has been contemplated in accordance with an embodiment of the present invention. The LED, much like a typical photodiode, may be sensitive to a wavelength range that is equal or lesser than the light that would be emitted by the LED. In other words, an LED operating as a sensor may typically detect light comprised of wavelengths equal to and shorter than the wavelengths that could be emitted by the LED.

In one embodiment, sequential and temporally correlated PWM of individual LEDs of an array 39 may be operated in conjunction with temporally correlated sensing function to sense one or more condition of an environment. For example, in one embodiment, a single LED may be powered to emit illuminating light. Additional LEDs in the array 39 may be used for detection of environmental light 48 (e.g., during one or more duty cycles). In another embodiment, scanning along particular geometries of the array 39 can be used to resolve environmental signals, e.g., scanning along the vertical, horizontal, or diagonals of a rectangular or otherwise shaped array 39. Alternatively or additionally, multi-color detection of environmental light 48, including the use of metameric whites, can be used for greater resolution. Signal processing of the sensed data correlated with the illuminating light 44 is used to characterize the environment. Mathematical analysis and signal processing techniques including Fourier transforms may be used to analyze the data.

In another embodiment, optics may be applied to one or more light emitting semiconductor devices 40, or portions of light emitting semiconductor devices 40 included in the array 39 or across the network 69, to improve the resolution at which a condition of the environment is detected. The resolution may be improved by allowing one or more light emitting semiconductor device 40 to detect different regions of an illuminated space. For example, LEDs may illuminate and/or detect multiple directions substantially simultaneously.

Provided without the intent to limit the present invention, some examples of an LED, an illustrative type of light emitting semiconductor device 40, operating as a sensor will now be discussed. In a first example, an infrared LED may be included in a circuit as a photodiode. The infrared LED may emit illuminating light 44 with an approximate wavelength of 1400 nanometers. This may result in the infrared LED being usable as a photodetector to detect infrared light with wavelengths shorter than 1400 nanometers, visible light, and ultraviolet light. However, the illuminating light 44 emitted by the infrared LED may not be detected by a human without first being converted into visible light.

As another example, a blue LED may be included in a circuit as a photodiode. The blue LED may emit illuminating light 44 with an approximate wavelength of 460 nanometers. This illuminating light 44 may include high efficacy light which would be visible to humans. However, the blue LED may only be capable of detecting environmental light 48 with wavelengths shorter than 460 nanometers, which may include additional blue light and ultraviolet light, without performing some wavelength conversion operation on the environmental light 48 prior to detection.

A person of skill in the art will appreciate that one or more LEDs may be included in the array 39 to emit illuminating light 44 within an acceptable wavelength range, and detect environmental light 48 within an acceptable wavelength range. For example, an array 39 may include a plurality of blue LEDs and a plurality of infrared LEDs. The blue LEDs may emit an illuminating light 44 that may be detectable to humans. Additionally, the infrared LEDs may detect an environmental light 48 within the visible spectrum. In this example, infrared LEDs would be able to detect at least part of the light emitted by the blue LEDs.

In another example, one or more wavelength conversion material 30 may be located between the LED and the environment to convert the wavelength range of light. The wavelength conversion material 30 may perform a Stokes shift, wherein the conversion material 30 may absorb one or more photon, an elementary particle of light, from a source light 42. The absorbed photon may cause the conversion material 30 to enter an excited state. The conversion material 30 may then emit a photon, allowing the conversion material 30 to relax from the excited state as it emits converted light 46. The photon of the converted light emitted by the conversion material 30 during a Stokes shift may have less energy than the absorbed source light photon.

Another type of wavelength conversion material 30 may perform an anti-Stokes shift, wherein the conversion material 30 may emit a converted light 46 with higher energy, and thus shorter wavelengths, than the absorbed source light 42. The higher energy of the converted light 46 resulting from an anti-Stokes shift may result from the combining of two or more photons of a lower energy state to create one photon of a higher energy state. This process may be known generally to skilled artisans as photon upconversion. Additionally, the higher energy of the converted light 46 emitted by an anti-Stokes conversion material 30 may be due to dissipation of thermal phonons in a crystal lattice, as will be understood by a person of skill in the art.

A wavelength conversion material 30, as it is defined in regard to the present invention, may include one or more conversion materials. For example, without limitation, the wavelength conversion material 30 may include two types of phosphors to convert a blue source light into yellow and red converted lights. As an additional example, the conversion material 30 may include a first conversion material 30 to perform a Stokes shift and a second conversion material 30 to perform an anti-Stokes shift. For example, the first conversion material 30 may convert the blue light emitted by a blue LED into white light, which may be more visually pleasing to an observer. The second conversion material 30 may convert a source environmental light 48 into blue or ultraviolet light, which may be detected by the blue LED. By including both a Stokes and anti-Stokes conversion material 30, the LED may emit and detect light within a significant range of the visible spectrum with respect to the respective wavelength conversions. Also, with respect to the present example, a Stokes conversion of infrared light and an anti-Stokes conversion of blue light may be inconsequential to the operation, as the conversion may simply convert a portion of the source light 42 into converted light 46 outside of the visible spectrum.

Referring now to FIGS. 31-36, illustrative wavelength ranges will now be discussed in relation to the light emitted and detected by a light emitting semiconductor device 40, such as an LED. The following discussion will be directed to using an LED as the light emitting semiconductor device 40. However, a person of skill in the art will appreciate that additional light emitting semiconductor devices 40 may be included in the lighting system 10, according to an embodiment of the present invention, and without limitation. Additionally, the illustrative waveforms illustrated in FIGS. 31-34 contemplate the emission of illuminating light 44 and the detection of environmental light 48 without the use of a conversion material 30 to perform a wavelength conversion.

Referring now to the illustrative waveforms of FIGS. 31-32, the light emitted and detected by an infrared LED will now be discussed. FIG. 31 illustrates the illuminating light 44 that may be emitted by an illustrative infrared LED, which may include illuminating light 44 characterized by long wavelengths. The wavelength range of the illuminating light 44 emitted by the infrared LEDs may be outside of the visible spectrum. FIG. 32 illustrates the environmental light 48 may be detected by the infrared LED, which may include a wavelength range of environmental light 48 with wavelengths less than the illuminating light 44 emitted by the infrared LED. Since environmental light 48 in the visible spectrum would include light defined by wavelengths shorter than infrared light, the infrared LED may detect substantially the entire wavelength range of environmental light 48 in the visible spectrum.

Referring now to the illustrative waveforms of FIGS. 33-34, the light emitted and detected by a blue LED will now be discussed. FIG. 33 illustrates the illuminating light 44 that may be emitted by the blue LED, which may include illuminating light 44 characterized by relatively short wavelengths. The wavelength range of the illuminating light 44 emitted by the blue LEDs may be included in the visible spectrum, however toward the narrow wavelength range of visible light. FIG. 34 illustrates the environmental light 48 that may be detected by the blue LED, including a small wavelength range of visible light that may include environmental light 48 characterized by shorter wavelengths than the blue illuminating light 44 emitted by the blue LED. Since the blue LED may not detect wavelength longer than the blue light emitted by the blue LED, it may not be able to detect a significant wavelength range of environmental light 48 in the visible spectrum.

Referring now to FIGS. 35-36, the light emitted and detected by a blue LED that includes a conversion material 30 between the LED and the environment will now be discussed. More specifically, a blue LED with a conversion material 30 capable of performing a Stokes shift and an anti-Stokes shift, according to an embodiment of the present invention, will now be discussed. FIG. 35 illustrates the illuminating light 44 that may be emitted by the blue LED, which may include illuminating light 44 characterized by relatively short wavelengths. FIG. 35 additionally may include a wavelength range of illuminating light 44 that has been converted by the conversion material 30 to approximately the wavelength range of yellow light. Skilled artisans will appreciate that the blue source light 42 emitted by the blue LED and the yellow converted light 46 emitted by the conversion material 30 may be combined to create approximately white light.

Referring additionally to FIG. 34, the environmental light 48 that may be detected by the blue LED may include a small wavelength range of visible light, which may include environmental light 48 with wavelengths shorter than the blue illuminating light 44 emitted by the blue LED. However, the wavelength range of detectable environmental light 48 may additionally include environmental light 48 characterized by longer wavelengths than the light natively detectable by the blue LED.

The anti-Stokes conversion material 30 may convert the natively undetectable wavelengths of an environmental source light 42 into converted light 46 detectable by the blue LED. Since the blue LED may detect wavelengths shorter than its emittable blue light that, and since the conversion material 30 may convert the long wavelength light into short wavelength light, the blue LED may then be able to detect a significant wavelength range of the visible spectrum.

Referring now additionally to FIGS. 37-38, an illustrative conversion and detection of a wavelength range of environmental light 48 outside of the detectable spectrum of a blue LED will now be discussed. Skilled artisans will appreciate that the following discussion is provided as an example, in the interest of clarity, and without limitation. Skilled artisans will additionally appreciate that any number of LEDs, or other light emitting semiconductor devices 40, may be used in similar operation, and are intended to be included within the scope of the present invention. Therefore, those of skill in the art will not view embodiments of the present invention to be limited to the inclusion of blue LEDs.

Referring now to FIG. 37, a model environmental light 48 will now be discussed that includes a peak of light to be detected by the lighting system 10, according to an embodiment of the present invention. The aforementioned peak of environmental light 48 is indicated as the point 91. As illustrated in FIGS. 33 and 37, the blue LED may emit illuminating light 44 defined by a shorter wavelength range than the wavelength range of environmental light 48 indicated by point 91. Since the blue LED may not natively detect environmental light 48 with wavelengths longer than the light it emits, the blue LED may not be able to detect the peak of environmental light 48 indicated by point 91 of FIG. 37 without a prior wavelength conversion, such as an anti-Stokes conversion.

The wavelength range of environmental light 48 indicated by point 91 may be absorbed by a wavelength conversion material 30 as source light 42. The wavelength conversion material 30 may then emit a converted light 46 that includes at least part of the peak of light indicated by point 91, but characterized by a lower wavelength range than which the peak of light indicated by point 91 was absorbed by the conversion material 30. This shift of wavelengths is illustrated in FIG. 38. The converted peak of light indicated by point 91 may then be emitted by the conversion material 30 at with shorter wavelengths than the wavelength range of illuminating light 44 emittable by the blue LED, thus allowing the peak of light indicated by point 91 to be detected by the blue LED.

An array 39 of light sources and sensors may be comprised of light emitting semiconductor devices 40, which may perform the operation of the light source and the sensor. More specifically, and without limitation, the array 39 may include a plurality of LEDs configured to operate to emit illuminating light 44 and detect environmental light 48. The array 39 of LEDs may include one or more types of LEDs, configured to emit and detect different wavelength ranges of light. For example, the array 39 may include one or more of a blue LED, monochromatic LED, white LED, infrared LED, and any other light emitting semiconductor device 40. Each LED or other light source included in the array 39 may additionally have a wavelength conversion material 30 located between the respective light source and an environment. The wavelength conversion material 30 may convert the wavelengths of the light transmitted between the light emitting semiconductor device 40 and the environment. As a result, the array 39 may detect a plurality of discrete and/or overlapping wavelength ranges of environmental light 48, which may be analyzed by the controller 61 to determine a condition of the environment.

Additionally, the array 39 may include light sources and sensors, which may be light emitting semiconductor devices 40, in single- or multi-dimensional configurations. For example, an approximately linear length of light emitting semiconductor devices 40 may be included in a one-dimensional array. Additionally, a plane of light emitting semiconductor devices 40 may be included in a two-dimensional array. The plane of light emitting semiconductor devices 40 may be configured in, but not limited to, rectangular or circular arrays. Furthermore, three-dimensional array 39 may include light emitting semiconductor devices 40 located on different planes from one another in the array 39, which may emit illuminating light 44 and detect environmental light 48 from a plurality of directions. In one embodiment, a multi-dimensional array 39 may include a plurality of light emitting semiconductors devices 40 to emit illuminating light 44 in an outward direction, independent of one another. An example of this embodiment may include light emitting semiconductors being located on a surface of a spherical object and configured to emit light in a direction projecting outward from the center of the spherical object.

As another embodiment, the multi-dimensional array 39 may be configured to at least partially enclose a space. An example of this embodiment may include light emitting semiconductors being located on ceilings, walls, floors, and other points of a room. A person of skill in the art will appreciate additional configurations of multi-dimensional arrays 39 to be included in the present invention, after having the benefit of this disclosure.

The environmental light 48 detected by the LED, or other light emitting semiconductor device 40, may be communicated to a controller 61 or other signal processing device. A person of skill in the art will appreciate that the term controller 61, as it is defined herein, may describe a single controller 61 that may analyze the environmental light 48 sensed by the LED, light emitting semiconductor device 40, or other sensor, and control the emission of illuminating light 44 by the LED, light emitting semiconductor device 40, or other light source. Additionally, skilled artisans will appreciate an embodiment wherein the term controller 61 may include multiple controllers 61, such as an analysis processor to analyze sensed environmental light 48 and a lighting controller 61 to control emitting illuminating light 44. The analysis processor and the lighting controller 61 may be communicatively connected, and may optionally operate separately or as one monolithic unit.

In one embodiment, information generated by one or more photodetector, or other data comprising light detected by a sensor, may be received and processed by an analysis processor to generating information about the environment. In one embodiment, the processed data may be used to determine or infer information about the environment such as, but not limited to, object detection, location, motion, mass, direction, size, color, heat signature, or other information that may be associated with an object or the environment.

In another embodiment, environmental light 48 sensed by a photodetector or other sensor may be processed by an operatively connected controller 61 or processor 62. The data may be used to control one or more light sources to emit illuminating light 44, which may include data light 45 to be received by a sensor or photodetector. For example, if initial data is sensed by a first sensor, and analyzed by the controller 61 to indicate the presence of an object at a location in the environment, one or more light source may be modulated to confirm object detection, further resolve object features or location, or obtain additional data regarding the environment based on the data sensed by the sensor.

The lighting system 10, according to an embodiment of the present invention, may analyze one or more condition of the environment. For example, the lighting system 10 may analyze whether motion is present in the environment. As another example, the lighting system 10 may determine the luminosity of environmental light 48 included in the environment. The determination of luminosity may be performed generally across all sensed environmental light 48, or specifically with regard to one or more wavelength ranges of the environmental light 48. Additionally, the sensors of the lighting system 10 may be configured to detect the presence of environmental light 48 with a discrete wavelength, such as, for example 445 nanometers.

As previously mentioned, an array 39 may include a plurality of light emitting semiconductor devices 40, such as LEDs, configured to emit and detect light. Skilled artisans will appreciate the use of LEDs in this disclosure is not intended to limit the present invention to including solely LEDs as the light source and/or sensor. The LEDs included in the array 39 may be modulated between states wherein illuminating light 44 is and is not emitted. During the states wherein illuminating light 44 is not being emitted, the LED may be used to detect environmental light 48. The modulation of the LEDs may be controlled by the controller 61.

In one embodiment, the LEDs may be modulated between emitting and detecting light to allow detection of the light emitted by the same LED. This modulation may be performed by the controller 61. To detect its own light, an LED and its corresponding switching circuit would have to switch between emitting illuminating light 44 and detecting environmental light 48 in less time than it would take for the illuminating light 44 to be emitted, reflected from the environment, and detected by the LED.

Alternatively, one or more LED included in the array 39 may be configured to sense the light emitted by one or more other LED included in the array 39. The timing of the various LEDs included in the array 39 may be controlled by the controller 61. In one embodiment, two or more LEDs in the array 39 may be configured such that at least one LED may receive a desired wavelength range of environmental light 48, which may include light previously or simultaneously emitted by another LED in the array 39. Through matching the wavelength ranges of illuminating light 44 emitted by one LED in the array 39, and environmental light 48 detected by another LED in the array 39, the lighting system 10 may determine a condition of the environment. Additionally, a plurality of LEDs may be included in the array 39 and configured to detect the light reflected from the environment that may have originated from other LEDs in the array 39. As the number of LEDs in the array 39 may increase, the number of conditions detected in the environment may also increase.

Skilled artisans will appreciate that LEDs included in the array 39 may be configured to emit and detect light emitted by any number of additional LEDs in the array 39. In other words, the LEDs need not be paired to emit and detect the same light as one another. Additionally, multiple arrays 39 may be connected through a network 69, allowing one array 39 to detect the light emitted by another array 39. The data relating to the light detected by another array 39 may be intercommunicated between the emitting and detecting arrays across the network 69.

The environmental light 48 detected by the sensors of the array 39 may be transmitted to a controller 61 as data. The controller 61 may concatenate the data to create an image. The resolution of the image detected by the array 39 may be determined relative to the number of points in the environment from which environmental light 48 is detected. For example, a simple one-dimensional array 39 including five forward-facing, linearly-aligned LEDs may be capable of producing an image with a resolution of one pixel by five pixels.

In some embodiments, a higher resolution image may be desired. A high resolution image may be produced, for example, by increasing the number of pixels to be included in the image. Due to the small scale at which semiconductor devices may be produced, a substantial number of light emitting semiconductors may be included in the array 39 to additionally sense environmental light 48 from a plurality of directions, effectively increasing the resolution of the respective image.

Adding additional sensors, such as LEDs, to the array 39 may increase the number of points in the environment to be detected by the array 39. Alternatively, including the sensors on a piezoelectric substrate, which is intended to generally include a plurality of deformable substrate types, may increase the points of an environment that may be sampled by a sensor. By allowing each sensor to detect environmental light 48 from multiple points in an environment, the size requirement of an array 39 needed to detect conditions of an environment with high resolution may be advantageously reduced. Additionally, including a large number of LEDs located on piezoelectric substrates in an array 39 may provide detection of conditions of an environment with increased resolution over sensors located on a fixed substrate.

The array 39 may be connected to, and intercommunicate with, additional arrays 39 as nodes in a network 69. The environmental light 48 sensed by each sensor in the node and analyzed by the controller 61 of the node, may be intercommunicated between the nodes throughout the network 69. By including a plurality of nodes in the network 69, the data detected by each node can be concatenated with data detected from other nodes to increase the resolution at which a condition of the environment with may be determined over the resolution available from a single node. The increased resolution of the environmental light 48 detected at each node may be collectively concatenated to produce a visual representation of one or more condition of the environment.

Where two or more nodes and/or arrays 39 are included in the lighting system 10, the driving time of one node or array 39 may be coordinated with the driving and/or detecting time of another node in the network 69. An example of a driving time may be the PWM timing and phase protocol for driving an array 39 or node for emitting illuminating light 44 and/or detecting environmental light 48. The coordination of this operation may be controlled by a controller 61 communicatively connected to the array 39, light emitting semiconductor device 40, or otherwise included in the node. The coordination may be used to control both emission and detection of light.

An example of visually detecting a condition of the environment will now be discussed. A two-dimensional visual representation of a condition of the environment may be an image. The image may be formed by concatenating the luminosity and/or wavelength data gathered from each point in the environment. Moreover, a plurality of images may be concatenated to create a moving picture, or video, of the environment. The video may be streamed directly to an interface device by transmitting data light 45 and/or using a data transmission protocol known within the art. The video may also be stored in memory 64, wherein it may be accessed, downloaded, and/or viewed concurrent or at a later time.

The images created from the sensed environmental light 48 may also be compared with previously or subsequently created images. For example, sequential images may be compared to detect differences between each image. The difference between the images may be analyzed to detect a condition, such as motion. Additionally, the controller 61 may further analyze the motion detected between a plurality of images to detect the distance and/or velocity of the motion. A person of skill in the art will appreciate that velocity is defined to include the rate and direction in which the position of an object may change. Skilled artisans will also appreciate that the images compared to detect motion, or another condition of the environment, may not be sequential.

The lighting system 10, according to an embodiment of the present invention, may detect the distance between the system 10 and an object in the environment. In one embodiment, the lighting system 10 may tag or indicate light emitted from the light source as marker light 49, which may be detectable by a sensor. The light source and the sensor may, for example, and without limitation, be an LED. Also, the light indicated as marker light 49 may be viewed as a segment of light that includes an identifying characteristic.

Skilled artisans will appreciate that the marker light 49 may be included in illuminating light 44 emitted into the environment and environmental light 48 sensed from the environment. The illuminating light 44 that includes the marker light 49 may be reflected from a point of reflection 50 in the environment, after which it may be received as environmental light 48 by a sensor, such as an LED configured to detect environmental light 48.

In one example, the marker light 49 may include a specific wavelength range as the identifying characteristic. As a specific example, and without limitation, a pulse of marker light 49 may be emitted by an LED into the environment with a wavelength of 485 nanometers. The marker light 49 may be natively emitted or converted by a conversion material 30 to achieve the desired wavelength range that may indicate the marker light 49. An LED operating to detect environmental light 48 may subsequently sense the pulse of marker light 49.

In an additional example, the marker light 49 may include one or more bits of digitally encoded information. This information may identify the segment of marker light 49. The digitally encoded marker light 49 may include a pattern of high and low values, such as zeros and ones, which may be sensed by a sensor and communicated to a controller 61. The digitally encoded marker light 49 sensed in the environmental light 48 may then be compared with the digital encoding of the emitted marker light 49 to determine whether the digitally encoded signal is the same.

The controller 61 may be connected to both the emitting LED and the sensing LED. The controller 61 may detect the delay between the emission of the marker light 49 and the detection of the marker light 49. The controller 61 may analyze the delay to determine the relative distance of an object in the environment.

In some instances, at least one LED may detect the marker light 49 as it is being emitted by another LED included in the lighting system 10, which may be communicated to the controller 61, which may create an error by having effectively having approximately no delay. The controller 61 may perform error detection by determining that the detection of marker light 49 without an accompanying delay may not have been reflected from a point of reflection 50 in the environment. In these instances, the controller 61 may disregard the sensed marker light 49 without an accompanying delay. The controller 61 may then subsequently detect the marker light 49 with an accompanying delay. This delay may be indicative that the marker light 49 has been reflected from a point of reflection 50, which may be due to an object in the environment.

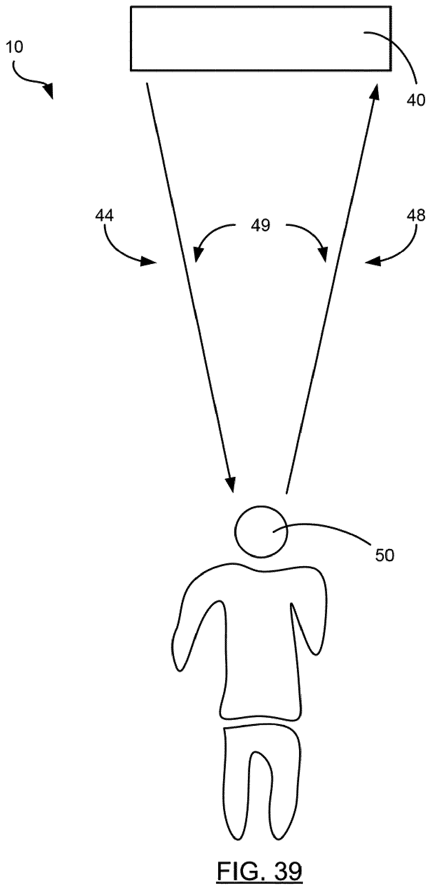

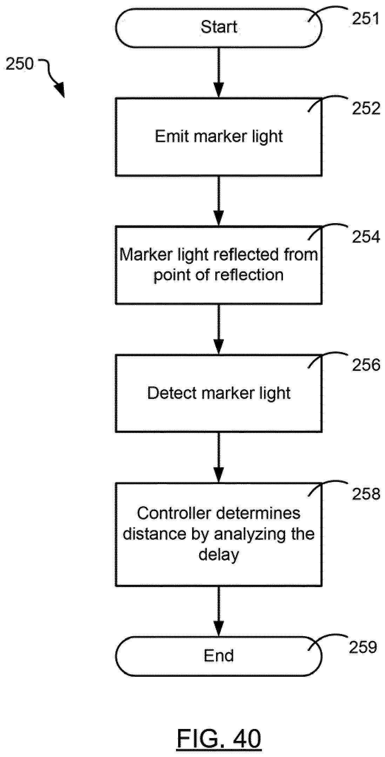

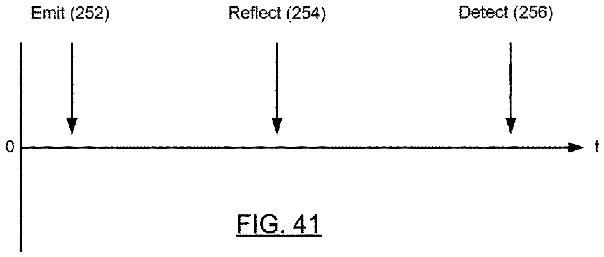

Referring now to FIGS. 39-41, an illustrative operation of detecting a delay using marker light 49 will now be discussed. The block diagram of FIG. 39 and the flow chart 250 of FIG. 40, along with the timeline of FIG. 41, illustrate the operations of flowchart 250 plotted relative to the time of each operation. Starting at Block 251, the delay detecting operation may begin. The marker light 49 may be emitted by light emitting semiconductor device 40, which may be included in an array 39 of light emitting semiconductor devices 40 (Block 252). The marker light 49 may then be reflected from a point of reflection 50 (Block 254). At least part of the reflected marker light 49 may be directed back to the light emitting semiconductor device 40, or array 39 of light emitting semiconductor devices 40, which may detect the light. Additionally, the reflected marker light 49 may be directed to another light emitting semiconductor device 40 included in a network 69 connected node, which may intercommunicate with the node that emitted the marker light 49. The reflected marker light 49 may be included in environmental light 48, which may be sensed by a light emitting semiconductor device 40 (Block 256). The controller 61 may then determine the distance of the object from the lighting system 10 by analyzing the delay (Block 258). The operation may then terminate at Block 259.

As an additional example, in a three-dimensional array 39, the environmental light 48 detected by the sensors of the array 39, or alternatively the sensors included within a node of the network 69, to determine a three-dimensional representation of the environment. The distance of an object detected by sensors included in the array 39 or network 69 may be concatenated to generate a three-dimensional model of the environment. As distances may be calculated from different angles, detail may be added to the three-dimensional model of the environment. Also, the three-dimensional model of the environment may be continually updated as the sensors continue to sample the environment. Like with images and videos, the three-dimensional model of the environment may be observed remotely by additional devices in the network 69.

After the environmental light 48 has been sensed by at least one sensor, which may be an LED included in an array 39, the lighting system 10 may analyze the environmental light 48. A number of signal processing operations have been discussed in the referenced U.S. Patent Application No. 13/269,222 (US2013088155A1). Additional signal processing operations may be included to recognize one or more pattern relative to the environment.

The data detected and analyzed from a single light emitting semiconductor device 40, a plurality of light emitting semiconductor devices 40 included in an array 39, or a plurality of light emitting semiconductor devices 40 connected through a network 69, can be further processed to extract additional information. Wavelength and intensity information may be distributed throughout a digital neural network for an in-depth analysis and identification of a source of interest. A neural network will be discussed in more detail below.

The controller 61 may analyze the data detected by the sensor, which may be an LED, to identify one or more condition of the environment. A condition of the environment may include objects, substances, or living beings in the environment. In an embodiment, identification may include recognition of one or more object, such as, but not limited to, large vehicle, small vehicle, people, a specific person, animal, substance and other conditions of an environment that could be identified.

The light emitting semiconductor device 40, or another sensor, may sense environmental light 48 including a plurality of wavelength ranges. A dominant wavelength may be included in the wavelength sensed by the lighting system 10. The dominant wavelength may be indicative of a desired condition to be detected in the environment, such as, for example, color. The dominant wavelength may additionally be used to sense the presence of a substance in an environment, as the controller 61 may detect the presence or absence of the dominant wavelength from the sensed environmental light 48.

In an embodiment of the present invention, the dominant wavelength may be defined by the controller 61. The controller 61 may be programmed to detect dominant wavelengths that can be associated with a specific condition to be sensed in the environment. The sensed condition may include the presence of a substance, for example, and without limitation, a gas, biological agent, explosive compound, neurotoxin, element, chemical composition, smog, particulate, or other substance. A person of skill in the art will appreciate additional conditions that may be sensed by detecting the presence or absence of a dominant wavelength, which is intended to be included within the scope of the present invention.

An object may be recognized or identified with various levels of clarity and resolution. For example, in an embodiment that includes a neural network, the resolution of an identified object may be relative to the amount and quality of the information provided to the neural network. A network of many nodes, each node including a controller 61, light source, and sensor, may provide enough resolution to allow for the identification of a person with a medium degree of confidence (80% or above), or a high degree of confidence (95% of above).

An artificial neural network, commonly referred within the art, simply as a neural network, may include a plurality of interconnected nodes to share the collection and processing of data. Each node in a neural network may operate similar to the neurons of a biological neural network, processing information using an interconnected network of simple units. The neural network may use a learning procedure, such as parallel distributed processing, to improve the accuracy of the analysis performed by at least one of the nodes included in the network 69. A person of skill in the art will appreciate additional learning procedures, in substitution or addition to parallel distributed processing, to be included within the scope of the present invention. Additionally, skilled artisans will appreciate additional artificial learning procedures that may analyze a determination to improve the accuracy of subsequent determinations to be included within the scope of the present invention, such as but not limited to, machine learning.

The choice of the neural network for recognizing and identifying an object may be based upon the configuration of the network 69 of nodes, each of which may include a controller 61 and at least one light emitting semiconductor device 40, for example, an LED. The selection process for selecting a type of neural network may begin with a detailed analysis of a certain number of input data streams for LEDs relating to the sensed environmental light 48. The neural network may then focus on determining correlations of LED responses with exposure to their respective light sources. LEDs spaced relatively far apart from each other will likely exhibit low correlation among different LEDs. Conversely, LEDs placed in an array 39 very close to each other may show high correlation numbers. The objective is to find the LEDs with the largest responses and correlations to enable achieving the highest performance in any subsequent neural network.

To operate effectively, a neural network may be trained to recognize different objects. More specifically, a neural network may be trained to identify one object from another of similar, but not identical, characteristics. The training may be performed using various techniques, such as, for example, use of back propagation of gradient-descent computed error corrections for weights and biases. The back propagation technique may involve feed forwarding an input training pattern, computing the associated error between computed outputs and training vector outputs, back propagating the associated errors, and adjusting weights and biases.

In an additional embodiment, machine learning may be used to improve the accuracy of the analysis performed by the controller 61. As will be understood by skilled artisans, machine learning may include a series of analyses performed by a computerized device, such as the controller 61, which may allow the computerized device to evolve its predictions based on empirical data included in memory 64 or detected by sensors. In embodiments of the present invention, the controller 61 of the lighting system 10, or collectively the controllers 61 of each node included in the lighting system 10, may included as the computerized devices to analyze the environmental light 48 data detected by one or more sensor.

The controller 61 may make predictive determinations based on rules that have been dynamically created through data programmed in the memory 64 and the recording of feedback relating to prior determinations. Through inductive inference, the lighting system 10 may classify the sensed data using pattern recognition. This classification may allow the lighting system 10 to learn, or become more likely to automatically recognize, complex patterns. Through machine learning, the lighting system 10 may additionally distinguish between patterns, allowing one or more controller 61 included in the lighting system 10 to make an intelligent prediction on the data received by the sensor.

A person of skill in the art will appreciate that the lighting system 10 of the present invention may include various additional operations and determinations to improve the execution and accuracy of the analysis performed on the environmental light 48 sensed by the sensor and transmitted to the controller 61. As a result, skilled artisans will not limit the learning techniques to the aforementioned examples of neural networks and machine learning. Instead, those of skill in the art will appreciate a plethora of additional branches of advanced computing and artificial intelligence, including analyses based on pattern recognition and error detection, to be included within the scope of the present invention.

As previously mentioned, according to an embodiment of the present invention, the lighting system 10 may include a plurality of nodes connected through a network 69. Each node may include at least one of a light source, sensor, and controller 61. Skilled artisans will appreciate that the light source and the sensor may be included as a light emitting semiconductor device 40, such as an LED. The nodes may intercommunicate with one another through the transmission and receipt of data light 45. If a node receives data light 45 that is addressed or intended for another node, the unintended recipient node may rebroadcast the data to be received by another node, such as the intended node.

The nodes in the network 69 may communicate, for example, by transmitting a digitally encoded data light 45 among the nodes in the network 69. The data light 45 may include modulated or otherwise controlled pulses, which may include transmittable data. The data light 45 may be modulated using pulse width modulation (PWM), pulse interval modulation (PIM), or an additional modulation technique that would be appreciated by those of skill in the art.

According to an embodiment of the present invention, the data transmitted in the data light 45 may be transmitted at a high data rate. To accomplish high data rates, the lighting system 10 may increase the quantity of data transmitted per channel and/or increase the number of channels.

To increase the data transmitter per channel, the data light 45 may be transmitted with an increased modulation frequency signal. The more frequently the data light 45 is be modulated between the active and inactive states, or between logical ones and zeros, the more data may be transmitted to a receiving node in the network 69. To achieve increased frequency modulation, the light source emitting the data light 45 may use rapidly decaying modulation techniques. In embodiments that include an array 39 of light emitting semiconductor devices 40, the rapidly decaying modulation may be accomplished, for example, by distributing the transmission of data light 45 across multiple light sources included in the array 39. The controller 61 of the lighting system 10 may distribute the emission of data light 45 among various light sources. The controller 61 may overlap switching between active and inactive states across multiple light sources, which may advantageously provide faster switching than would be achieved by using a single light source. Additionally, including high speed switches may allow further increased switching, which may correspond to increased data rates.

The data light 45 may include at least one channel through which data may be transmitted. For example, a single channel transmission of data light 45 may occur at or about 445 nanometers. Using a single channel, the theoretical maximum rate at which data light 45 may be transmitted may be bound by the rate at which the single channel may be modulated.

According to an embodiment of the present invention, the data light 45 may be modulated across a plurality of channels. Each channel of data light 45 may be defined respective to a characteristic of that channel, such as the wavelength of light at which the data light 45 is transmitted. Additionally, each channel may be directed to one or more node within the network 69. In multichannel transmission of data light 45, all channels may be directed to the same node. Alternatively, a number of channels of data light 45 transmitted from a first node may be directed to any number of separate nodes, each of which receiving one or more channels of data light 45. Nodes may address one another sequentially and/or in parallel. In other words, each node may address one or more additional nodes substantially simultaneously by transmitting data light 45 over a plurality of channels.

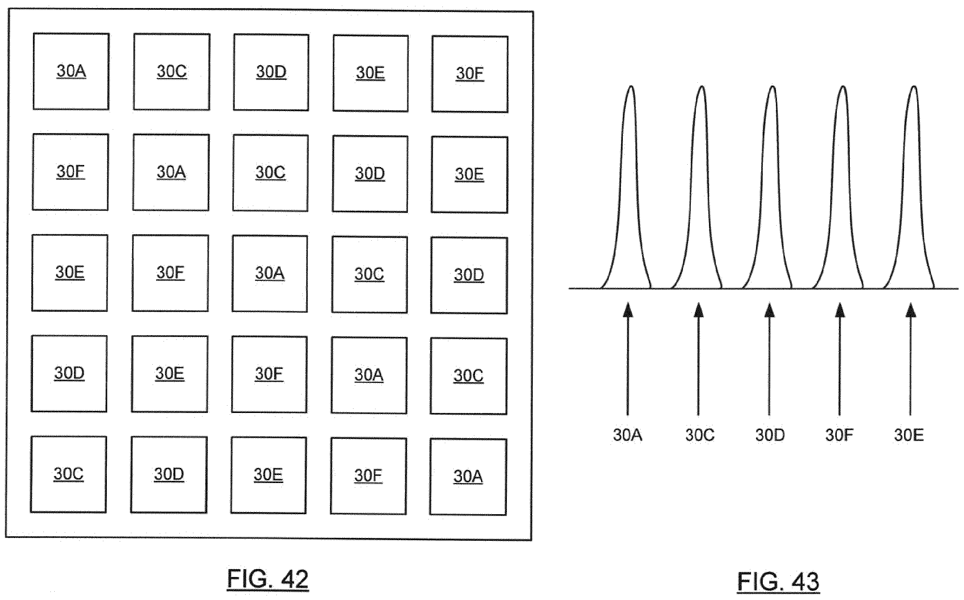

Referring now to FIGS. 42-43, an example of a five-channel transmission of data light 45 will now be discussed. The five-channel transmission of data light 45 may include five streams of data to be received by another node in the network 69. The five data channels may be transmitted at five different wavelengths of light. The wavelengths of each data channel may be generated by including various conversion materials 30A, 30C, 30D, 30E, and 30F adjacent to one or more light sources, such as light emitting semiconductor devices 40.

More specifically, and provided without limitation, the five channels of data light 45 may be transmitted at 445, 460, 485, 495, and 510 nanometers. These wavelengths may appear visually similar to human observers, yet would be very distinct to a sensor configured to detect the discrete wavelengths. Each channel of data light 45 may be emitted by a respective light source, or wavelength conversion material 30 that may receive and convert the illuminating light 44 from a light source, at the appropriate wavelength. The channels of data light 45 are illustrated in FIG. 43, with each channel correlating to a conversion material 30 applied to the array 39 of lighting emitting semiconductor device of FIG. 42.

Additionally, each sensor may discretely detect the data light 45 at each wavelength respective to the channel it has been emitted. Optionally, the lighting system 10 may use a wavelength conversion material 30 to convert environmental light 48 prior to being detected by the sensor. The detected channels of data light 45 may then be communicated to the controller 61, which may combine the data from each channel to receive the data included in the data light 45.

Skilled artisans will appreciate that embodiments of the present invention may include any number of channels at which data light 45 may be transmitted. Additionally, a person of skill in the art will appreciate that virtually any wavelength, or range of wavelengths, may be used to include light at a given channel. As such, a person of skill in the art will not view the use of three channels, or the specified illustrative wavelengths of each channel, as limiting the present invention in any way.

According to an embodiment of the present invention, the sampling rate at which the environmental light 48 may be detected can be variable. The sampling rate may be varied manually, dynamically, and/or according to a predetermined pattern. For example, if the lighting system 10 detects that minimal changes exist between sampling periods of the environment, the lighting system 10 may decrease the sampling rate at which environmental light 48 is detected. Alternatively, if the lighting system 10 detects a high degree of variance between sampling periods, the lighting system 10 may increase the sampling rate to detect changes in the environment with an increased level of detail.

According to an additional embodiment of the present invention, the data light 45 may be transmitted at one or more bit rate. The bit rate may be adjusted relative to a plurality of factors, including the quantity of data to be transmitted, the quantity of errors detected in the data transmission, distance at which the data may be transmitted, or any number of additional factors that may affect data transmission bit rates.

As an example, the bit rate at which data light 45 is transmitted may be dynamically variable according to the type and quantity of data being transmitted. As an example, the node may transmit a series of images detected from the environment to another node. The image may include varying levels of detail, which may correspond to a varying quantity of data to be transmitted. As the quantity of data needing to be transmitted may vary, so may the bit rate at which the data may be transmitted. Inclusion of a dynamically variable bit rate may allow for the allocation of additional data transmission resources for more complex, and therefore data intensive, portions of a data transmission. Similarly, a dynamically variable bit rate may conserve the amount of data transmitted for relatively simple portions of a data transmission.

According to an embodiment of the present invention, the data included in the data light 45 may be compressed prior to transmission to another node, or other device, in the network 69. Additionally, the data may be decompressed after it has been received by a node. Data compression may reduce the amount of data to be included in the data light 45, further increasing the effective amount of data that may be transmitted using a channel of data light 45. Skilled artisans will appreciate data compression, as many methods of which are known within the art.

According to an embodiment of the present invention, a node may determine its location the environment with respect to other nodes connected in the network 69. A node may also determine the location of other nodes in the environment. Multiple nodes within the network 69 may be aware of a plurality of details relating to additional nodes in the network 69, including the location, operation, and status of the respective nodes.

A node may use a location determining operation, such as, for example, triangulation, to determine its location in an environment. Using triangulation, a node may receive a signal from a plurality of other nodes. The signal may include information to be analyzed by the receiving node to determine its location. For example, a signal used to determine the location of a node may include an identification of the transmitting node, an indication that the signal is transmitted to determine a location, a time stamp from which a transmission delay may be calculated, and/or additional information that would be apparent to a person of skill in the art.

According to an embodiment of the present invention, the lighting system 10 may include one or more wavelength conversion materials 30 that are sensitive to wavelength ranges that may be emitted or absorbed by a substance, such as a biological agent or bomb dust. Such a wavelength conversion material 30 may be used in connection with the sensor, which may be a light emitting semiconductor device 40, to determine a difference between a detected level of an indicative wavelength range and the normal level of an indicative wavelength range. If the difference detected is indicative of the substance, for example, the difference being above a threshold level, the lighting system 10 may generate an alert which may be received by another device connected to the network 69, or a user. Applications for this embodiment may include airports, embassies, government buildings, base camps, or virtually any additional location wherein the detection of a substance in an environment may be desired.

The lighting system 10 may operate to detect the substance in an environment. The lighting system 10 may include a conversion material 30 between the environment and the sensor to convert a difference in luminosity of one or more wavelength of light reflected, emitted, or absorbed from a substance in the environment to be detectable by the sensor. The light source and the sensor may be included as a light emitting semiconductor device 40, such as an LED. In the interest of clarity, the following examples may refer to a light emitting semiconductor device 40, or more specifically an LED, as the light source and sensor. Reference to a light emitting semiconductor device 40 and/or an LED is not intended to be limiting the light source and/or sensor to be included in the present invention. Also, the accompanying waveforms have been provided as relative waveforms, and should not be considered limiting.

The detectable substance may reflect, emit, or absorb light within a wavelength range respective to the substance. A conversion material 30 may be included between the LED and the environment that is sensitive to a wavelength range corresponding with the wavelength range of the detectable substance. Substances may include toxins, biological agents, contaminants, molecules, or virtually any other substance that may absorb or emit a detectable wavelength range of light.

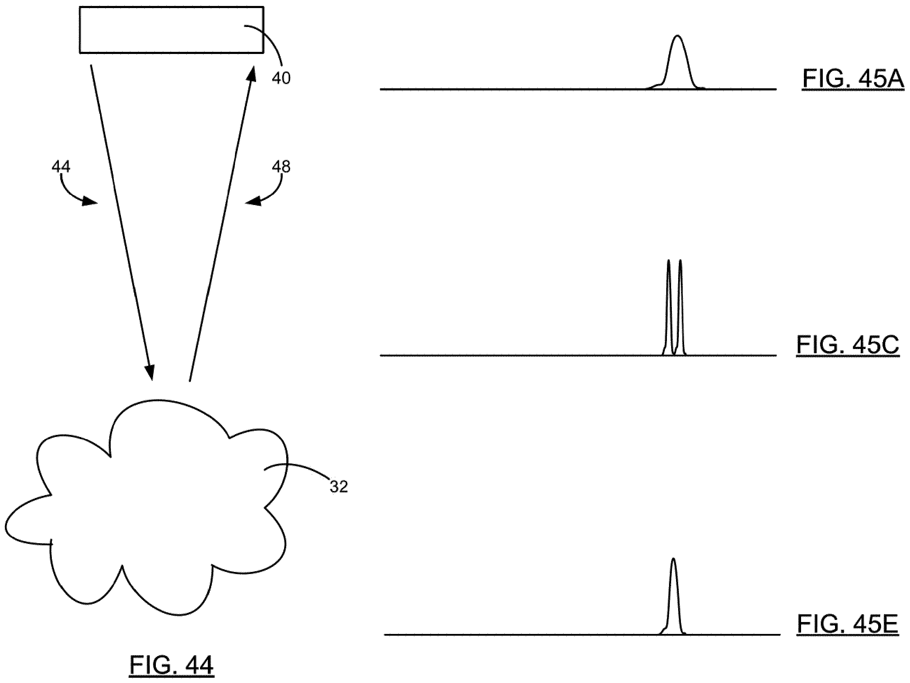

Referring now to FIG. 44-45, an example of a substance detection operation will now be discussed. Illuminating light 44 may be emitted from a light emitting semiconductor device 40 into the environment. The relative wavelength range of the emitted illuminating light 44 is illustrated in FIG. 45A. At least part of the illuminating light 44 may be reflected from the substance 32 as environmental light 48. However, the substance 32 may absorb at least part of the illuminating light 44, resulting in a wavelength range of illuminating light 44 that was originally emitted by the light emitting semiconductor device 40 not being included in the reflected environmental light 48. The reflected environmental light 48 indicative of a substance 32 is illustrated in FIG. 45C.

The light emitting semiconductor device 40 may detect the environmental light 48, which may be analyzed by the controller 61 to determine a difference between the emitted illuminating light 44 and the detected environmental light 48. The difference is represented in FIG. 45E. The controller 61 may then compare the wavelength range at which the difference of light occurs with information included in the memory to determine which material is present in the environment. Alternatively, the controller 61 may compare the difference of light with information included in the memory of another device connected to the network 69.

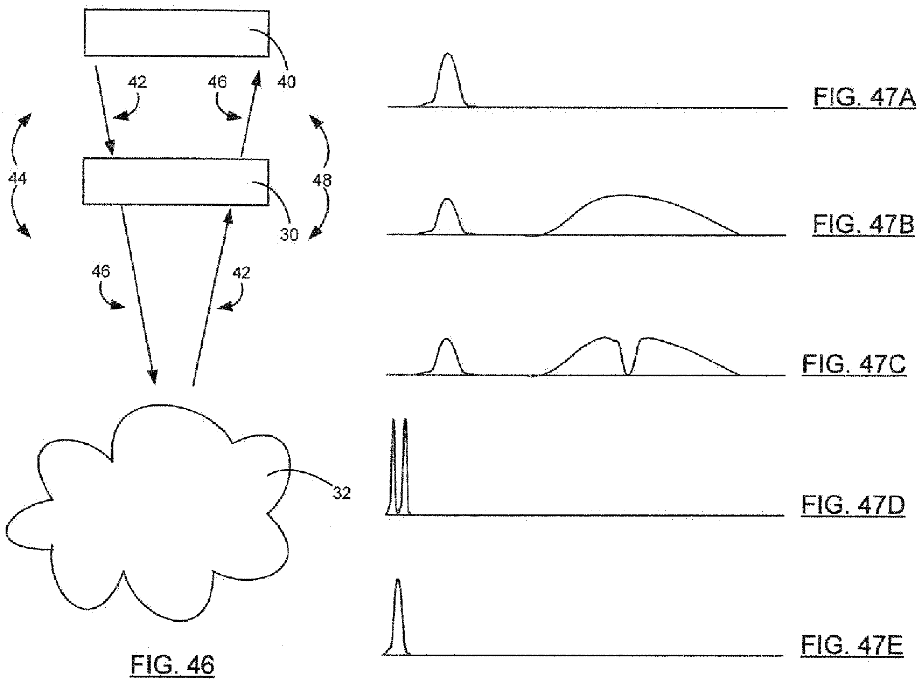

Referring now to FIGS. 46-47, an example of a substance detection operation including a wavelength conversion will now be discussed. Illuminating light 44 may be emitted from a light emitting semiconductor device 40 to be received by a conversion 30 material as source light 42. The emitted illuminating light 44 is illustrated in FIG. 47A. The conversion material 30 may convert the source light 42 into a converted light 46, which may be emitted into the environment as illuminating light 44. The converted illuminating light 44, 46 is illustrated in FIG. 47B.

At least part of the illuminating light 44 may be reflected from the substance 32 as environmental light 48. However, the substance 32 may absorb at least part of the illuminating light 44, resulting in a wavelength range of illuminating light 44 that had originally been emitted by the light emitting semiconductor device 40 not being included in the reflected environmental light 48. The partially reflected environmental light 48 indicative of a substance 32 is illustrated in FIG. 47C.

The environmental light 48 indicative of the substance 32 may be received by the conversion material 30 as source light 42 to be converted into converted environmental light 46, 48, which may be received by the light emitting semiconductor device 40. The converted environmental light 46, 48 is illustrated in FIG. 47D. The light emitting semiconductor device 40 may detect the environmental light 48, which may be analyzed by the controller 61 to determine a difference between the emitted illuminating light 44 and the detected environmental light 48. The difference is represented in FIG. 47E. The controller 61 may then compare the wavelength range at which the difference of light occurs with information included in the memory 64 to determine which material may be present in the environment. The controller 61 may consider the preceding wavelength conversion as it performs analysis on difference detected in the environmental light, for which it may compensate. Alternatively, the controller 61 may compare the difference of light with information included in the memory 64 of another device connected to the network 69.

According to an embodiment of the present invention, the lighting system 10 may generate an alert upon the occurrence of an event. The alert may be transmitted to an additional node included in the network 69, an otherwise network connected device, or displayed to an observer. An event that may initiate an alert may involve the detection of a condition in the environment, such as the presence of an object or substance. The event may alternative initiate an alert if a condition rises above a threshold level, which may be predefined or dynamically determined. The communication across the network 69 may be performed digitally. Alternatively, the communication of an alert may be performed by emitting an alerting wavelength, or a wavelength that has been designate to indicate that an alert has been generated. Furthermore, an alert may be communicated as the emission of visual light, for example, flashing red light upon the detection of a hazardous condition in the environment.

According to an embodiment of the present invention, a synchronization signal may be emitted among a plurality of nodes to synchronize the operation of the nodes. For example, the nodes may be synchronized to target, analyze, or confirm analysis of a condition of the environment. Alternatively, the synchronization signal may be used to synchronize the images or other visual representations of the environment. Furthermore, the synchronization signal may synchronize the shared processing efforts across at least part of the nodes included in the network 69. A person of skill in the art will appreciate a plethora of additional synchronization operations that may be performed with a synchronization signal after having the benefit of this disclosure.

According to an embodiment of the present invention, the analysis of the environmental light 48 detected in the environment, or other conditions detected in the by a sensor, may be shared across multiple nodes included in a network 69. The shared analysis of data may be performed, for example, using distributed computing, which would be appreciated by a person of skill in the art. Generally, distributed computing may organize a complex computation into multiple discrete computations, each of which may be distributed to one or more nodes across a network 69 to be performed in parallel. After the discrete computations have been completed, they results may be combined to a result from the complex computation.

According to an embodiment of the present invention, a wavelength conversion material 30 may be included between the light source and the environment to create a biologically affective light. The source light 42 may be a light emitting semiconductor device 40, such as, for example, an LED. The biologically affective light may include one or more wavelength ranges that may induce a biological effect in an organism. As an example, a conversion material 30 may be included to convert a source light 42 into a converted light 46 including wavelengths that increase the production of biological chemicals that affect alertness, such as melatonin.

A non-limiting example of selectively introducing a biologically affective wavelength range into an environment will now be discussed. In this example, the lighting system 10 may detect that a person is present in the environment. The lighting system 10 may make this determination by analyzing information received from detecting the environmental light 48. Such information may include heat signatures, proximate variance, movement, images, videos, patterns, or other detected information. The lighting system 10 may then enable one or more light source with an adjacently located biologically affective conversion material 30 to emit biologically affective converted light 46. The biologically affective light may induce the onset of sleepiness for the people in the environment. Due to the effects of sleepiness, the people in the room may become less alert, slowing response times, and providing for a tactical advantage for any subsequent operations performed in that environment.

The following embodiments are intended to illustrate the components of the present invention in operation, wherein the lighting system 10 may sense one or more condition present in the environment by sensing environmental light 48. A person of skill in the art will appreciate that the following embodiments are included in the interest of clarity, and are not intended to impose any limitations on any of the embodiments the present invention.

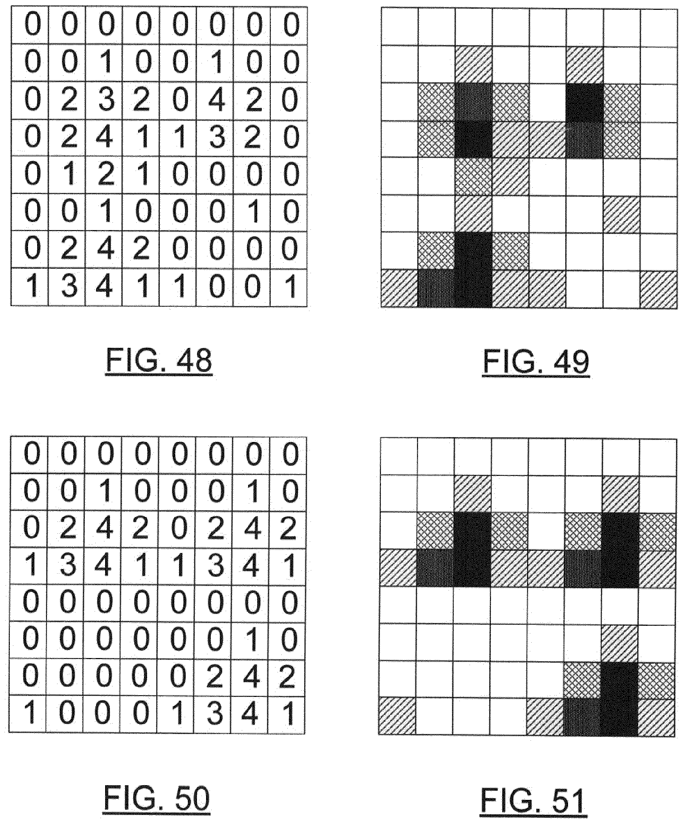

Referring now to FIGS. 48-51, an embodiment of the lighting system 10 including an array 39 to detect and compare a series of images with moderately low resolution will now be discussed. In this embodiment, the light sources and sensors may be light emitting semiconductor device 40. The light emitting semiconductor devices 40 may be configured in an eight-by-eight square array 39. However, skilled artisans will appreciate that any number of light emitting semiconductor devices 40 may be configured in an array 39 of virtually any shape, as it may be included in single- or multi-dimensional configurations.

Operation of the light emitting semiconductor devices 40 included in the array 39 may be selectable between emitting illuminating light 44 and detecting environmental light 48. The light emitting semiconductor devices 40 may be selectable between emitting and detecting at intervals independent of one another, overlapping intervals, or substantially simultaneously. Additionally, the light emitting semiconductor devices 40 may be selectable between emitting and detecting repeatedly, effectively cycling through periods of light emission and detection.

As one or more light emitting semiconductor device 40 may detect the environmental light 48 in the environment, the light emitting semiconductor device 40 may transmit data regarding the detected environmental light 48 to the controller 61 for analysis. The controller 61 may concatenate each point of data, as may be sensed by the light emitting semiconductor devices 40, to create an image. The image may have a resolution relative to the number of light emitting semiconductor devices 40 included in the array 39 and the number of points in the environment from which environmental light 48 may be sensed by each light emitting semiconductor device 40.

Referring now to FIG. 48, an illustrative image sensed by the lighting system 10 will now be discussed. This illustrative image may have been detected by a fixture located above a target environment, facing downward. The relative luminosity of light detected in the environment, which may be indicative of an object being located in the environment, may be represented by a scale of values. In the present illustrative image, the scale of values ranges from zero to four. However, a person of skill in the art will appreciate that the scale of values may include any number of intervals between a minimum and maximum value.

A plurality of objects may be located in the environment. A first and second object may be located approximately in the top half of the area to be sensed by the lighting system 10. Since the tallest point of the object may be located near the object's center, the amount of light reflected from the environment proximate to the object may be greater than other points wherein the object is not present. Additionally, a third object may be located approximately in the bottom left portion of the area to be sensed by the lighting system 10.

In the example illustrated by FIG. 48, the light emitting semiconductor device 40 may sense a saturating amount of environmental light 48 from the first object at location (3,5), with varying levels of luminosity surrounding the saturated areas. The light emitting semiconductor device 40 may sense a saturating amount of environmental light 48 from the second object at location (6,6), with varying levels of luminosity surrounding the saturated areas. Furthermore, the light emitting semiconductor device 40 may sense a saturating amount of environmental light 48 from the third object at locations (3,1) and (3,2), with varying levels of luminosity surrounding the saturated areas.

The controller 61 may process the levels sensed by the light emitting semiconductor devices included in the array 39 to determine that an object is present in the environment that the lighting system 10 may detect. The controller 61 may then, for example, control the light emitting semiconductor device 40 to increase the emission of illuminating light 44 as a result of an object being present in the environment. The controller 61 may additionally analyze the proximate variance, which may be used to determine the location and movement of the objects, to make a determination of condition in the environment. For example, the controller 61 may determine that the first and second objects are likely humans engaged in a conversation. The lighting system 10 may then enable a microphone, which may be included in, or connected to, the lighting system 10 to sense an additional condition of the environment, such as conversation dialog in the present example. A person of skill in the art will appreciate additional sensors that may sense information from an environment that would be included in the scope of the present invention.

Additionally, in an embodiment of the present invention, the lighting system 10 may communicate the sensed conditions by using the data communications discussed above, such as transmitting data through a series of pulsed light emissions. The lighting system 10 may transmit or relay the information sensed by the additional environmental sensors to one or more additional node, which may be included in the network 69.

The lighting system 10 may continue to sample the environment by sensing the luminosity of environmental light 48 present in the environment. By continually sampling the environment, the controller 61 may analyze the sensed environmental light 48 to make further determinations regarding the conditions of the environment. Additionally, as additional nodes may be added to the network 69, the computational power of the network 69 of nodes may be increased, respectively. This increase of computational power may be accomplished by, for example, distributed computing.

Light emitting semiconductor devices 40 may comprise different semiconductor materials and/or be located adjacent to different conversion materials 30 to detect the luminosity of light relative to different wavelengths. These wavelength based luminosities may be analyzed by the controller 61 to generate an image respective to the different wavelengths. An example of an image representative of multiple wavelength ranges may include a color image. Referring additionally to FIG. 49, the relative luminosity of each sampled point in the environment may be converted into a visual representation, which may use color or shading to represent the luminosity and wavelength levels detected in the environment.

Referring now additionally to FIG. 50, a subsequent image may additionally be sensed by the lighting system 10. The subsequent image may be sensed similar to the sensing operation described in relation to FIG. 48. Referring to FIG. 50, a subsequent sensing operation may sense the objects located in the environment. In this example, the first and second objects may be located approximately in the same positions as wherein the environment was sensed or sampled in the example of FIG. 48. In this subsequent sensing operation, the light emitting semiconductor device 40 may sense a saturating amount of environmental light 48 from the first object at locations (3,5) and (3,6), with varying levels of luminosity surrounding the saturated areas. The light emitting semiconductor device 40 may additionally sense a saturating amount of environmental light 48 from the first object at locations (7,5) and (7,6), with varying levels of luminosity surrounding the saturated areas.

The controller 61 may process the levels sensed by the light emitting semiconductors included in the array 39 to determine that the first and second objects is present in the field in which the lighting system 10 may sense. The controller 61 may additionally determine that the object have not substantially relocated since the last sampling period. The controller 61 may, however, determine that the light reflective patterns of the objects are shifting slightly between each sampling period. The controller 61 may additionally determine, for example, that this shifting pattern is indicative of conversation.

The light emitting semiconductor device 40 may additionally sense a saturating amount of environmental light 48 from the third object at locations (7,1) and (7,2), with varying levels of luminosity surrounding the saturated areas. The relocation of the object between sampling periods may indicate that motion has occurred. The controller 61 may then, for example, determine that a third person or object is patrolling the environment. The lighting system 10 may continue to detect images from the environment, which it may compare to other images to detect further patterns. For example, if the person at the bottom of the screen continually moves in a substantially repeatable pattern, the lighting system 10 may determine with increased confidence that the person is patrolling than simply crossing the environment.

A person of skill in the art will appreciate that the environmental light 48 sensed by the light emitting semiconductor need not saturate the light emitting semiconductor to result in a sensed condition in the environment. The controller 61 may analyze sensed environmental light 48 that does not include a saturating amount of environmental light 48 to determine a condition may exist in the environment. Additionally, a person of skill in the art will appreciate that as the levels of light detected by the light emitting semiconductor may increase, the accuracy of the analysis performed by the controller 61 may correspondingly be increased.

A sensed environment of FIG. 50 may be visually represented as an image, such as illustrated in FIG. 51. The images of FIGS. 49 and 51 may be concatenated into a series of images, for example, to form a video with each image being a frame of the video. The sensed image of FIG. 51 may be compared to one or more other images sensed by the lighting system 10 to determine patterns and differences between the images. The patterns may be analyzed to detect conditions in the environment, such as the presence of an object or person, movement, or other conditions.

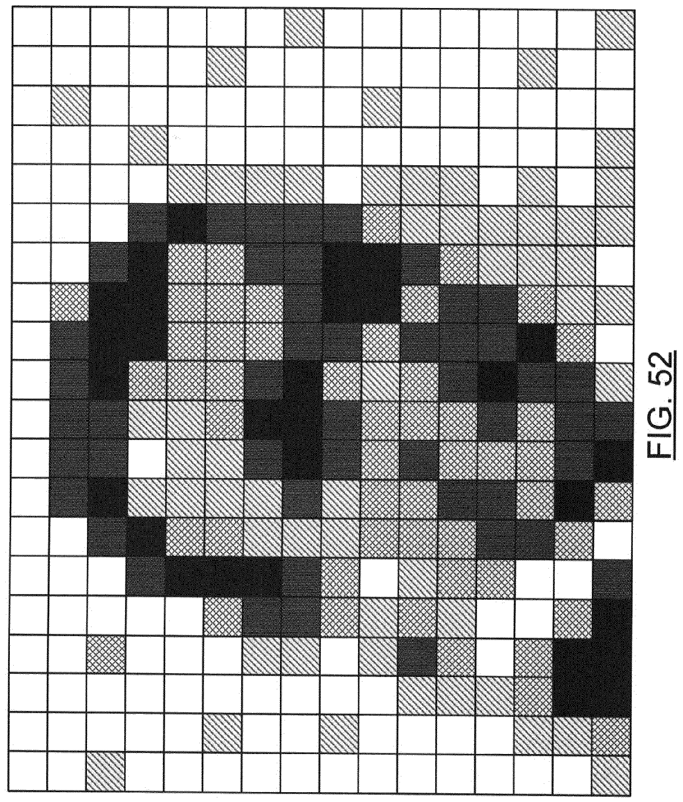

According to an embodiment of the present invention, an array 39 of sensors capable of detecting a high resolution image, will now be discussed along with FIGS. 52 - 54. In this example, an array 39 of light sources and sensors, which may be included as a light emitting semiconductor device 40, may be located on a plane facing a detectable object. In the present example, and without limitation, the array 39 may be included on one or more walls, positioned in alignment to the face of a target person to be detected. A person of skill in the art will appreciate that one or more nodes including additional arrays 39 may be communicatively connected at varying points in the environment to increase the resolution of the images and other conditions detected from the environment.

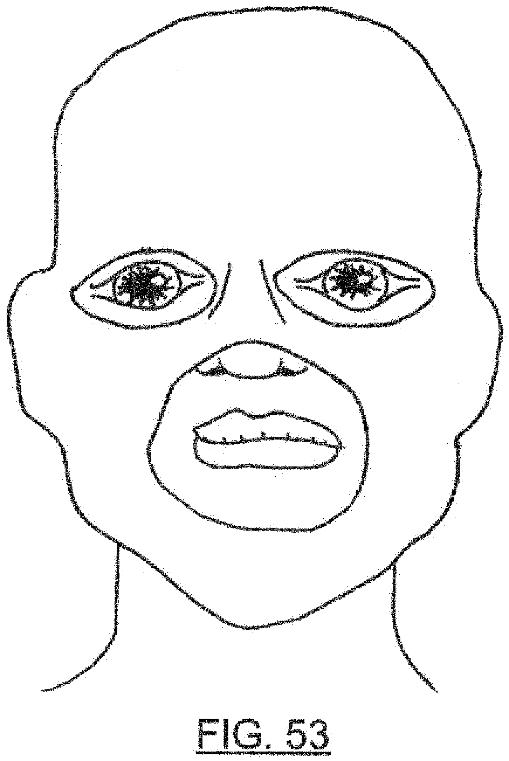

Referring first to FIG. 52, an array 39 of sensors may detect an object in the environment with an increased level of detail than FIGS. 49 and 51 and other previous examples. As the lighting system 10 may sample an increased number of points in the environment, the resolution of the resulting image may be correspondingly increased. Referring additionally to FIG. 53, a further increased number of points being sampled by the lighting system 10 in the environment may result in a detected image of increasing resolution, which may clearly illustrate defining facial features. The facial features, or other defining features of a target person or object of interest, may be used identify the person or object of interest.

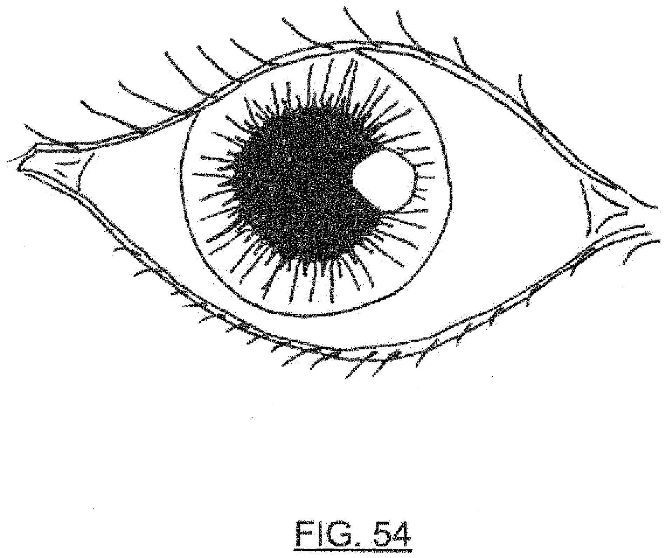

Referring additionally to FIG. 54, an image of further enhanced resolution may be detected with sufficiently enough sensors directed to an object in the environment. As mentioned previously, the sensors may be may be light emitting semiconductor devices 40. The sensors may be configurable to focus on a small area within the environment to better identify the object. As presented in the illustrated example of FIG. 54, the object may be the eye of a person in the environment to be identified. The lighting system 10 may recognize the presence of an eye in the environment, to which defining features of the eye may be detected to identify the person with a high degree of accuracy.

Additionally, the sensors included in an array 39 may be focused on a narrow area in the environment by including a deformable or piezoelectric substrate. For example, the lighting system 10 may detect conditions of an environment generally, indicating that a person exists in the environment. The lighting system 10 may then adjust the sensors to detect environmental light 48 from an angle to focus on a more narrow area within the environment, providing higher resolution. Essentially, according to the present embodiment, the number points from which conditions of the environment may be detected would remain approximately the same, but the area in which the points are concentrated may be reduced to increase the resolution of an image.

The light emitting semiconductor devices 40 of the array 39 may intelligently alternate between emitting illuminating light 44, and sensing environmental light 48. The direction in which each light emitting semiconductor devices 40 faces may be movable, for example, by altering the deformable or piezoelectric substrate. The lighting system 10 may adjust the light emitting semiconductor devices 40 to emit illuminating light 44 in a generally forward direction during a portion of its duty cycle. This forward emission may advantageously make the lighting system 10 appear significantly indistinguishable from a normal lighting device to human observers.

However, during an additional portion of the duty cycle, the lighting system 10 may sense environmental light 48 from a targeted space within the environment. The lighting system may sense environmental light 48 from the targeted space with high resolution, such as to focus on an object in the environment with enhanced wavelength detection. During this focused detection, a substantial number of the light emitting semiconductor devices 40 in the array may be positionable to face the target object in the environment. This targeting operation may allow the lighting system 10 to detect environmental light from an increased number of points within a concentrated space relative to the detectable object. After the wavelength has been detected, the light emitting semiconductor devices 40 may be positioned to again emit an illuminating light 44 in approximately the forward direction.

According to an embodiment of the present invention, wherein the light sources and sensors are located around an environment in three dimensions, the lighting system 10 may detect a three-dimensional representation of the environment. The light sources and sensors may be included as a light emitting semiconductor device 40. A plurality of light emitting semiconductor devices 40 may be distributed throughout the environment to detect the distance of an object in the environment from the light emitting semiconductor device 40. A plurality of light emitting semiconductor devices 40 may determine the distance to an object from a plurality of angles, which may be located on a plurality of planes. The controller 61, or multiple controllers 61 intercommunicating across a network 69, may analyze the distances and angles detected by the light emitting semiconductor devices 40 in the lighting system 10 to determine the position of the object relative to the three-dimensional space of the environment.

More specifically, and without limitation, a plurality of lighting emitting semiconductor devices 40, or a plurality of arrays 39 or nodes including light emitting semiconductor device 40, may be located within the environment to be sensed at differing locations. In this configuration, the light emitting semiconductor devices 40 may be on different planes within the environment to sense environmental light 48 from differing angles and directions. One or more controller 61 may analyze the sensed environmental light 48 from the plurality of angles and directions to construct a multidimensional representation of the environment.

The controller 61 may construct a one-dimensional representation of the environment, collecting information regarding wavelength, chromaticity, and luminosity. The controller 61 may also construct a two-dimensional representation, when may be an image or video, as described above. Additionally, the controller 61 may construct a three-dimensional representation of the environment, showing the relative location of humans, objects, and substances in the environment. The calculations of three-dimensional representations of an environment may be computationally demanding. The computations may be distributed among the controllers 61 included in the network 69. In instances wherein additional processing may be required to render the three-dimensional environments, one or more additional controllers 61 or other processing devices may be communicatively connected to the network 69.

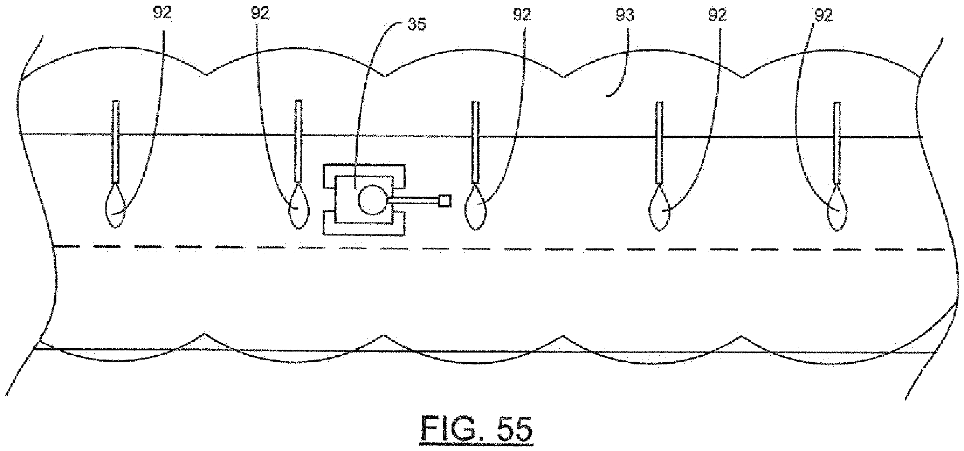

Referring now to FIGS. 55-56, according to an embodiment of the present invention, the environment may be defined as a road or otherwise navigable pathway. Skilled artisans will not view variations of the present embodiment to be restricted to road or other pathways on which a motor vehicle may be operated. The light emitting semiconductor device 40 may be included in one or more streetlight 92 located near the road. The streetlight 92 may be located, for example, at least partially overhead of the road.

Each streetlight 92 may be a node within a network 69 of streetlights 92, which may collectively comprise the lighting system 10. The nodes may intercommunicate with one another by transmitting and receiving data light 45 or using another network communication protocol that would be appreciated by skilled artisans. The streetlights 92 may be able to detect the conditions of the environment, such as the road and objects 35 located on the road. Information relating to conditions of the may be transmitted to a device connected to the network 69. Each node included in the network 69 may detect conditions in an area of the environment located within view of the node. A plurality of nodes in the network 69 may communicate with one another such that they are aware of the conditions sensed by the other nodes, defining a field of view 93.

As a specific and non-limiting example, presented in the interest of clarity and without the intent to limit the present invention in any way, FIGS. 55-56 illustrate the use of streetlights 92 as nodes in a network 69. The streetlights 92 may detect an object 35, such as a tank in the present example, in the field of view 93. The streetlights 92 may be programmed to generate an alert upon sensing a tank on the road, which may be communicated to a node or device connected to the network 69 intended to receive the alert. The intended recipient node may be located, for example, in a town away from the sensing street light 92, in a base camp, or included in another vehicle on the road.

Assuming the intended recipient node is a personnel carrier on the road headed in the direction of the tank, the lighting system 10 may alert the personnel carrier that the present route may be dangerous. The personnel carrier may include one or more node, for example, in the headlights of the personnel carrier. The headlight nodes may receive data light 45 broadcast from one or more streetlight 92 lining the road. An interface device onboard the personnel carrier may receive the alert, warning its occupants of the potential danger ahead and optionally suggesting an alternative route.

Skilled artisans will appreciate additional examples wherein the environment may include virtually any area or space, such as, for example, a room, base camp, ship, or city. Additionally, tracking of one or more objects 35 in the environment may be desired. The tracking may include geographic location information, operational status information, or any other information that may be associated with the object 35. For example, an operation command center may desire to track the location and status of a personnel carrier across a city. The personnel carrier may transmit data light 45 through its headlights, which may be received and distributed by the network 69 of streetlights 92 located throughout the city. The data light may be repeated and/or relayed until it may be received by the operation command center. The data light 45 may include information relating to the proximate location, fuel level, number of passengers, speed, or virtually any other communicable information relating to the personnel carrier.

According to an embodiment of the present invention, the lighting system 10 may include night vision operation. The light emitting semiconductor devices 40 included in the lighting system 10 may broadcast a light that is outside of the spectrum of light that is visible to humans, such as infrared or ultraviolet light. Additional conditions of the environment may also be detected, such as heat signatures, by emitting and detecting non-visible light.

According to an embodiment of the present invention, one or more array 39 included in the lighting system 10 may include a sensor, and not a light source. A light emitting semiconductor device 40 may be used as the sensor, however it may be configured or controlled to not emit illuminating light 44. The array 39 of sensors may detect environmental light 48 of various wavelengths, such as, but not limited to, infrared light. Skilled artisans will appreciate that infrared light may be indicative of heat signatures, which may relate to one or more object 35 detected in the environment.

According to an embodiment of the present invention, a low latency power supply may be included in the lighting system 10 to supply power to the controller 61, one or more light source, and any additional component that may be included in the lighting system 10. The power supply may have a switching latency equal to or less than that of the slight sources included in the lighting system 10, such that the power supply does not restrict the switching speed, and thus potentially the sampling rate of the environment and/or the transmission speed of data included in the data light 45. Additional efficient electronic components, which be defined by high switching rates and/or low decay periods, may be included in lighting system 10. Additionally, fast decay phosphors, fluorescent, or other wavelength conversion materials 30 may be used in the lighting system 10 to provide fast switching between emission and detection of light for each light source.

According to an embodiment of the present invention, additional devices may be connected to the network 69. The additional devices may communicate with one or more node included in the network 69. An additional device may communicate with the node using data light 45 or another network communication protocol that would be appreciated by a skilled artisan. Examples of additional device connected to the network 69 may include, but are not limited to, a flashlight, keychain, watch, headlight, router, television, computer, pen, or virtually any other device that may include a sensor, controller, memory, and optionally a light source.

## Claims

1. A lighting system comprising:
a light-emitting semiconductor device included in an array to emit illuminating light, the array including a plurality of light-emitting semiconductor devices;
a wavelength conversion material positioned between the light-emitting semiconductor device and the environment to absorb at least part of a source light and emit a converted light having a converted wavelength range, the source light being received by the wavelength conversion material; and
a sensor included in the array configured to sense environmental light from an environment; and
a controller operatively connected to each of the sensor and the light-emitting semiconductor device and configured to analyze the environmental light sensed by the sensor to at least one of detect and generate data relating to a condition of the environment, the data being transmittable in a transmitted data light;
wherein the controller is configured to receive data included in a received data light using the sensor; and
wherein the controller is configured to analyze the data included in the received data light and to control the transmission of the data light from the light-emitting semiconductor device.

2. The lighting system according to claim 1 wherein the light-emitting semiconductor device is selectively operable between a sensing operation and an emitting operation, the sensing operation being defined by the light-emitting semiconductor device sensing the environmental light, and the emitting operation being defined by the light-emitting semiconductor device emitting the illuminating light.

3. The lighting system according to claim 2 wherein the array includes a plurality of light emitting semiconductor devices; and wherein each of the plurality of light emitting semiconductor devices in the array is selectively operable between the sensing operation and the emitting operation.

4. The lighting system according to claim 1 wherein the sensor is configured to sense the environmental light substantially simultaneously with the light-emitting semiconductor device emitting the illuminating light.

5. The lighting system according to claim 1 wherein the light-emitting semiconductor device includes a light emitting diode (LED); and wherein the sensor includes a photodiode to sense the environmental light.

6. The lighting system according to claim 1 further comprising a network comprised of nodes; wherein each node includes the light-emitting semiconductor device, the sensor, and the controller; and wherein the nodes are configured to intercommunicate by transmitting and receiving the data light.

7. The lighting system according to claim 6 wherein the data light includes at least one addressing bit to address the node intended to receive the data.

8. The lighting system according to claim 6 wherein each of the nodes in the network are proximately aware of additional nodes in the network.

9. The lighting system according to claim 8 wherein the controller of each node included in the network of the nodes is configured to receive feedback regarding an analysis performed by the controller to be stored in memory.

10. The lighting system according to claim 9 wherein the controller is configured to use at least one of machine learning and a neural network to analyze the feedback from the analysis.

11. The lighting system according to claim 1 wherein the data included in the data light includes at least one error detection bit.

12. The lighting system according to claim 1 wherein the converted wavelength range of the converted light varies depending on a condition in the environment.

13. The lighting system according to claim 1 wherein the data light is defined by a data wavelength defined relative to the illuminating light.

14. The lighting system according to claim 1 wherein the controller is configured to analyze the environmental light by measuring a drive voltage of the light-emitting semiconductor device, determining a difference between a measured voltage across the light-emitting semiconductor device and the drive voltage, and performing time-domain matching of the measured voltage and the environmental light using cross-correlation.
